# EUROPEAN PATENT APPLICATION

(11) **EP 4 734 574 A1**
(43) Date of publication of application: **29.04.2026**
(21) Application number: 23947024.8
(22) Date of filing: 31.07.2023
(51) Int. Cl.: H04W 12/00

(54) **INFORMATION TRANSMISSION METHOD, COMMUNICATION SYSTEM, AND COMMUNICATION APPARATUS**

(71) Applicant: Huawei Technologies Co., Ltd., Shenzhen, Guangdong 518129 (CN)
(72) Inventor: SONG, Yurong, Shenzhen, Guangdong 518129 (CN); LIU, Fei, Shenzhen, Guangdong 518129 (CN); WANG, Donghui, Shenzhen, Guangdong 518129 (CN); WANG, Wenhui, Shenzhen, Guangdong 518129 (CN)
(74) Representative: Goddar, Heinz J.
(86) International application number: PCT/CN2023/110288
(87) International publication number: WO 2025/025075

(57) **Abstract**

This application provides an information transmission method, a communication system, and a communication apparatus. This application provides independent deployment of a security node that offers a security function for a communication network. The security node and a network node establish a communication connection, and then transmit trustworthiness signaling and/or trustworthiness data to each other. This decouples security functions from communication functions, allowing the security functions to be independently evolved and upgraded, and facilitating technology development towards enhanced security functions in future networks.

## Description

### TECHNICAL FIELD

Embodiments of this application relate to the field of wireless communication technologies, and more specifically, to an information transmission method, a communication system, and a communication apparatus.

### BACKGROUND

Currently, network communication protocols can be generally classified into two types: protocols responsible for connections and protocols related to communication services. Security is integrated into functions of a plurality of protocols. Security functions are closely coupled to communication functions. Consequently, updating or upgrading of the security functions involves modification to protocols of a plurality of communication nodes, for example, terminals, access network devices, and core network devices, resulting in heavy workloads and complex operations. How to resolve the problems arising from current deployment of the security functions in existing communication protocols is an issue to be considered.

### SUMMARY

In a solution provided in embodiments of this application, an independent node is used to support a security function, so that security can be decoupled from communication. This facilitates independent evolution and flexible deployment of the security function.

According to a first aspect, an information transmission method is provided. The method may be performed by a security node. The security node may be a communication device (for example, a terminal device, an access network device, a core network device, or a cloud server), or may be a chip or a circuit used in the communication device. This is not limited in this application. The following uses a first security node as an example for description.

The method is applied to a communication network. The communication network includes the first security node and at least one network node. The first security node is configured to provide a security function for the communication network. The method includes: The first security node establishes a communication connection to the at least one network node; and the first security node communicates trustworthiness signaling and/or trustworthiness data with the at least one network node over the communication connection.

According to the foregoing technical solution, the security function in the communication network may be provided by an independent security node. Specifically, the security node is independently deployed, and the independently deployed security node establishes the communication connection to the network node. In this way, the trustworthiness signaling and/or the trustworthiness data can be transmitted between the security node and the network node over the communication connection, so that the security node provides the security function for a communication system. In addition, because the security node is independently deployed, security can be decoupled from communication. This facilitates independent evolution and flexible deployment of the security function.

In some implementations of the first aspect, the first security node includes a first node and/or a second node, the first node is configured to manage the security function, and the second node is configured to perform the security function.

According to the foregoing technical solution, an independently deployed first node may be designed, and the first node is configured to manage the security function. In this way, the independently deployed security node can control security functions together, and an operation is simple. Alternatively, an independently deployed second node may be designed, and the second node is configured to perform the security function. In this way, other network nodes can focus on communication functions, thereby improving running efficiency.

In some implementations of the first aspect, the first security node includes a trustworthiness protocol layer, and the trustworthiness protocol layer processes the trustworthiness signaling and/or the trustworthiness data.

According to the foregoing technical solution, the trustworthiness protocol layer is configured for the independently deployed security node, so that standardized and more diversified security technologies can be provided, more flexible and advanced security support can be provided for the communication network, and other communication protocols can focus on the communication functions.

In some implementations of the first aspect, the first security node further includes one or more of the following protocol layers below the trustworthiness protocol layer: a protocol layer for data packet processing, a protocol layer for transmission, a protocol layer for connection establishment, and a protocol layer for channel establishment.

With reference to the first aspect, in some implementations of the first aspect, the trustworthiness signaling is used for one or more of the following functions: management of a trustworthiness function, management of a trustworthiness requirement, negotiation of a trustworthiness policy, notification of a trustworthiness service, or a request for a trustworthiness service.

In some implementations of the first aspect, the management of the trustworthiness function includes one or more of the following: establishment of the trustworthiness function, activation of the trustworthiness function, initial configuration of the trustworthiness function, update of the trustworthiness function, addition of the trustworthiness function, deletion of the trustworthiness function, or state transition of the trustworthiness function.

According to the foregoing technical solution, the security node provided in this application can support management of a trustworthiness capability, so that the trustworthiness capability is more flexible and diversified.

In some implementations of the first aspect, the trustworthiness service includes one or more of the following: an authentication service, an authorization service, a trustworthiness attestation service, a blockchain service, a situational awareness service, or a network-wide trustworthiness policy service.

According to the foregoing technical solution, the security node provided in this application can support diversified trustworthiness services, to improve diverse security support.

In some implementations of the first aspect, the trustworthiness data includes one or more of the following: situational awareness related data, homomorphic encryption related data, homomorphic computation related data, blockchain related data, or keys.

In some implementations of the first aspect, the at least one network node includes a first network node, and that the first security node establishes the communication connection to the at least one network node includes: The first security node obtains identity information and/or address information of the first network node; and the first security node communicates the trustworthiness signaling and/or the trustworthiness data with the first network node based on the identity information and/or the address information of the first network node.

According to the foregoing technical solution, the security node may obtain the identity information and/or the address information of the network node, and may communicate with the network node based on the identity information and/or the address information, for example, transmit the trustworthiness signaling and/or the trustworthiness data.

In some implementations of the first aspect, that the first security node obtains the identity information and/or the address information of the first network node includes any one of the following: The first security node receives the identity information and/or the address information of the first network node from the first network node; the first security node receives the identity information and/or the address information of the first network node from another network node; the first security node determines the identity information and/or the address information of the first network node; the first security node receives the identity information and/or the address information of the first network node from a management node; or the first security node receives the identity information and/or the address information of the first network node from another security node.

Optionally, the management node is a node that manages identity information and/or address information of each node. In an example, the management node is an operation, administration, and maintenance (operation, administration, and maintenance, OAM) system.

According to the foregoing technical solution, the security node may obtain the identity information and/or the address information of the network node in various manners, for example, from a network node or another security node.

In some implementations of the first aspect, the method further includes: The first security node sends one or more of the following to the first network node: a trustworthiness service available from the first security node, identity information of the first security node, or address information of the first security node.

According to the foregoing technical solution, the security node may further provide the identity information and/or the address information of the security node for the network node, so that the network node transmits the trustworthiness signaling and/or the trustworthiness data to the security node. Alternatively, the security node may further provide, for the network node, information about the trustworthiness service available from the security node, so that the network node can perform some operations based on the trustworthiness service available from the security node. For example, the network node may verify, based on the trustworthiness service available from the security node, whether the security node can meet a trustworthiness requirement of the network node. For another example, the network node may request a corresponding security function from the security node in subsequent communication based on the trustworthiness service available from the security node.

In some implementations of the first aspect, the communication network further includes a second security node, and the method further includes: The first security node communicates trustworthiness signaling and/or trustworthiness data with the second security node.

According to the foregoing technical solution, the security nodes may have a communication connection with each other, and transmit the trustworthiness signaling and/or the trustworthiness data to each other.

In some implementations of the first aspect, before the first security node communicates the trustworthiness signaling and/or the trustworthiness data with the second security node, the method further includes: The first security node obtains identity information and/or address information of the second security node.

In some implementations of the first aspect, that the first security node obtains the identity information and/or the address information of the second security node includes any one of the following: The first security node receives the identity information and/or the address information of the second security node from the second security node; the first security node receives the identity information and/or the address information of the second security node from at least one network node; the first security node determines the identity information and/or the address information of the second security node; the first security node receives the identity information and/or the address information of the second security node from the management node; or the first security node receives the identity information and/or the address information of the second security node from another security node.

Optionally, the management node is the node that manages the identity information and/or the address information of each node. In an example, the management node is the OAM system.

According to the foregoing technical solution, a security node (namely, the first security node) may obtain the identity information and/or the address information of a peer security node (namely, the second security node) in various manners, for example, from a network node or another security node.

In some implementations of the first aspect, the method further includes: The first security node sends one or more of the following to the second security node: the trustworthiness service available from the first security node, the identity information of the first security node, or the address information of the first security node.

According to the foregoing technical solution, the security node (namely, the first security node) may further provide the identity information and/or the address information of the security node for the peer security node (namely, the second security node), so that the peer security node transmits the trustworthiness signaling and/or the trustworthiness data to the security node. Alternatively, the security node may further provide, for the peer security node, the trustworthiness service available from the security node. In this way, the peer security node may perform a security-related operation based on the trustworthiness service available from the security node.

In some implementations of the first aspect, the method further includes: The first security node receives, from the second security node, a trustworthiness service available from the second security node.

According to the foregoing technical solution, the peer security node (namely, the second security node) may further provide the identity information and/or the address information of the peer security node for the security node (namely, the first security node), so that the security node transmits the trustworthiness signaling and/or the trustworthiness data to the peer security node. Alternatively, the peer security node may further provide, for the security node, the trustworthiness service available from the peer security node, so that the security node determines, based on this, the trustworthiness service available from the peer security node.

With reference to the first aspect, in some implementations of the first aspect, the at least one network node includes one or more of the following: at least one access network apparatus, at least one core network apparatus, and at least one terminal apparatus.

According to a second aspect, an information transmission method is provided. The method may be performed by a network node (for example, a terminal, an access network node, or a core network node). The network node may be a communication device, or may be a chip or a circuit used in the communication device. This is not limited in this application. The following uses a first network node as an example for description.

The method is applied to a communication network. The communication network includes the first network node and a first security node. The first security node is configured to provide a security function for the communication network. The method includes: The first network node establishes a communication connection to the first security node; and the first network node communicates trustworthiness signaling and/or trustworthiness data with the first security node over the communication connection.

In some implementations of the second aspect, the first network node includes a trustworthiness protocol layer, and the trustworthiness protocol layer processes the trustworthiness signaling and/or the trustworthiness data.

In some implementations of the second aspect, the first network node further includes one or more of the following protocol layers below the trustworthiness protocol layer: a protocol layer for data packet processing, a protocol layer for transmission, a protocol layer for connection establishment, and a protocol layer for channel establishment.

In some implementations of the second aspect, the trustworthiness signaling is used for one or more of the following functions: management of a trustworthiness function, management of a trustworthiness requirement, negotiation of a trustworthiness policy, notification of a trustworthiness service, or a request for a trustworthiness service.

In some implementations of the second aspect, the management of the trustworthiness function includes one or more of the following: establishment of the trustworthiness function, activation of the trustworthiness function, initial configuration of the trustworthiness function, update of the trustworthiness function, addition of the trustworthiness function, deletion of the trustworthiness function, or state transition of the trustworthiness function.

In some implementations of the second aspect, the trustworthiness service includes one or more of the following: an authentication service, an authorization service, a trustworthiness attestation service, a blockchain service, a situational awareness service, or a network-wide trustworthiness policy service.

In some implementations of the second aspect, the trustworthiness data includes one or more of the following: situational awareness related data, homomorphic encryption related data, homomorphic computation related data, blockchain related data, or keys.

In some implementations of the second aspect, that the first network node establishes the communication connection to the first security node includes: The first network node obtains identity information and/or address information of the first security node; and the first network node communicates the trustworthiness signaling and/or the trustworthiness data with the first security node based on the identity information and/or the address information of the first security node.

In some implementations of the second aspect, that the first network node obtains the identity information and/or the address information of the first security node includes any one of the following: The first network node receives the identity information and/or the address information of the first security node from the first security node; the first network node receives the identity information and/or the address information of the first security node from another network node; the first network node determines the identity information and/or the address information of the first security node; the first network node receives the identity information and/or the address information of the first security node from a management node; or the first network node receives the identity information and/or the address information of the first security node from another security node.

In some implementations of the second aspect, the method further includes: The first network node sends one or more of the following to the first security node: identity information of the first network node or address information of the first network node.

In some implementations of the second aspect, that the first network node communicates the trustworthiness signaling and/or the trustworthiness data with the first security node over the communication connection includes: The first network node receives, from the first security node, a trustworthiness service available from the first security node.

In some implementations of the second aspect, the first network node is any one of the following: an access network apparatus, a core network apparatus, and a terminal apparatus.

For beneficial effects of the second aspect, refer to related descriptions in the first aspect. Details are not described herein again.

According to a third aspect, a communication system is provided. The system includes at least one security node and at least one network node, where the at least one security node is configured to provide a security function for the communication system; the at least one security node establishes a communication connection to the at least one network node; and the at least one security node communicates trustworthiness signaling and/or trustworthiness data with the at least one network node over the communication connection.

In some implementations of the third aspect, the at least one security node includes a first security node, and the first security node is configured to perform the method in the first aspect.

In some implementations of the third aspect, the at least one network node includes a first network node, and the first network node is configured to perform the method in the second aspect.

According to a fourth aspect, an information transmission method is provided. The method may be performed by a security node. The security node may be a communication device (for example, a terminal device, an access network device, a core network device, or a cloud server), or may be a chip or a circuit used in the communication device. This is not limited in this application. The following uses a first security node as an example for description.

The method includes: The first security node receives a request message from a network node, where the request message includes an identifier of an attester, and the request message is used to request to provide a trustworthiness attestation service; the first security node obtains an attestation result of trustworthiness attestation based on the identifier of the attester; and the first security node sends the attestation result of the trustworthiness attestation to the network node.

The first security node is the security node in the first aspect.

According to the foregoing technical solution, a security procedure for trustworthiness attestation that may be supported by a future mobile network is provided. Specifically, the trustworthiness attestation service may be provided by an independently deployed security node. In comparison with a process in which a conventional node invokes a security function, the security node provides the trustworthiness attestation service. This provides better security and more flexibility.

In some implementations of the fourth aspect, that the first security node obtains the attestation result of the trustworthiness attestation based on the identifier of the attester includes: The first security node obtains the attestation result of the trustworthiness attestation through local query based on the identifier of the attester.

In some implementations of the fourth aspect, that the first security node obtains the attestation result of the trustworthiness attestation based on the identifier of the attester includes: The first security node obtains a trustworthiness attestation parameter based on the identifier of the attester; the first security node sends the trustworthiness attestation parameter to a second security node; and the first security node receives the attestation result of the trustworthiness attestation from the second security node, where the attestation result of the trustworthiness attestation is determined based on the trustworthiness attestation parameter.

According to the foregoing technical solution, in comparison with a process in which a conventional node invokes a security function, a security node (for example, the second security node) provides a related parameter of the trustworthiness attestation, to reduce workloads of the conventional node, and enable the conventional node to focus on communication. In addition, the security node provides the related parameter of the trustworthiness attestation, so that a security problem caused by interaction of the related parameter between communication nodes can be avoided, and security of the related parameter of the trustworthiness attestation can be improved.

In some implementations of the fourth aspect, that the first security node obtains the attestation result of the trustworthiness attestation based on the identifier of the attester includes: The first security node obtains a trustworthiness attestation parameter based on the identifier of the attester; the first security node sends the trustworthiness attestation parameter to a second security node; the first security node receives a to-be-verified attestation result of the trustworthiness attestation from the second security node, where the to-be-verified attestation result of the trustworthiness attestation is determined based on the trustworthiness attestation parameter; and the first security node determines the attestation result of the trustworthiness attestation based on the to-be-verified attestation result of the trustworthiness attestation.

According to the foregoing technical solution, in comparison with a process in which a conventional node invokes a security function, a security node (for example, the second security node) provides a related parameter of the trustworthiness attestation, to reduce workloads of the conventional node, and enable the conventional node to focus on communication. In addition, the first security node performs verification, to improve security of the attestation result.

According to a fifth aspect, an information transmission method is provided. The method may be performed by a security node. The security node may be a communication device, or may be a chip or a circuit used in the communication device. This is not limited in this application. The following uses a second security node as an example for description.

The method includes: The second security node receives a request message from a first security node, where the request message indicates to add a post quantum cryptography PQC algorithm; and the second security node updates a trustworthiness service list based on the request message, where an updated trustworthiness service list of the second security node includes the PQC algorithm.

According to the foregoing technical solution, the PQC algorithm may be used in a communication network, so that a threat caused by quantum computing in the communication network can be reduced by using the PQC algorithm.

In some implementations of the fifth aspect, the method further includes: The second security node sends the updated trustworthiness service list of the second security node to an access network apparatus.

In some implementations of the fifth aspect, the method further includes: The second security node receives a plaintext message; the second security node performs an encryption operation on the plaintext message based on the PQC algorithm, to obtain a ciphertext message; and the second security node sends the ciphertext message to a third security node.

According to the foregoing technical solution, the security node may perform a PQC algorithm-related operation. This can improve security, and also reduces computing energy consumption and overheads of communication nodes.

In some implementations of the fifth aspect, the method further includes: The second security node receives a ciphertext message; and the second security node performs a decryption operation on the ciphertext message based on the PQC algorithm, to obtain a plaintext message.

In some implementations of the fifth aspect, the method further includes: The second security node sends the plaintext message to the access network apparatus.

In some implementations of the fifth aspect, the access network apparatus is an access network apparatus served by the second security node.

It should be understood that implementations of the first aspect to the fifth aspect may be mutually referenced.

According to a sixth aspect, a communication apparatus is provided, including a one-to-one corresponding module or unit configured to perform the method in any one of the first aspect to the fifth aspect or any one of the possible implementations of any aspect.

According to a seventh aspect, a communication apparatus is provided, including at least one processor. The at least one processor is configured to execute a computer program or instructions, and/or use a logic circuit, so that the communication apparatus performs the method in any one of the first aspect to the fifth aspect or any one of the possible implementations of these aspects.

In some implementations of the seventh aspect, the at least one processor is coupled to at least one memory, and the at least one memory stores the computer program or instructions. Optionally, the communication apparatus further includes the at least one memory. Optionally, the at least one processor and the at least one memory are integrated together.

According to an eighth aspect, a chip is provided, including a processor and a communication interface. The communication interface is configured to receive to-be-processed information and/or data and send the to-be-processed information and/or data to the processor. The processor is configured to process the to-be-processed information and/or data, so that a communication apparatus in which a chip is installed performs the method in any one of the first aspect to the fifth aspect or any one of the possible implementations of these aspects.

According to a ninth aspect, a computer-readable storage medium is provided. The computer-readable storage medium stores computer instructions. When the computer instructions are run on a computer, the method in any one of the first aspect to the fifth aspect or any one of the possible implementations of these aspects is implemented.

According to a tenth aspect, a computer program product is provided. The computer program product includes computer program code. When the computer program code is run on a computer, the method in any one of the first aspect to the fifth aspect or any one of the possible implementations of these aspects is implemented.

According to an eleventh aspect, a wireless communication system is provided, including the communication apparatus in the sixth aspect or the seventh aspect.

For technical effects of the technical solutions in the sixth aspect to the eleventh aspect, refer to the descriptions of the corresponding technical effects in the first aspect to the fifth aspect. Details are not described again.

### BRIEF DESCRIPTION OF DRAWINGS

FIG. 1 is a diagram of a 5G network protocol stack;
FIG. 2 is a diagram of a network architecture in which security nodes serve as independent nodes according to an embodiment of this application;
FIG. 3 is diagrams of interfaces of security nodes according to an embodiment of this application;
FIG. 4 is a diagram of an information transmission method 400 according to an embodiment of this application;
FIG. 5(1) to FIG. 5(4) are diagrams of end-to-end protocol stacks according to an embodiment of this application;
FIG. 6 is a diagram of trustworthiness protocol stacks between a security node #1 and a network node according to an embodiment of this application;
FIG. 7 is another diagram of trustworthiness protocol stacks between a security node #1 and a network node according to an embodiment of this application;
FIG. 8 is a schematic flowchart of configuring a trustworthiness function by a security node #1 as required;
FIG. 9 is a schematic flowchart of providing a trustworthiness service by a security node #1;
FIG. 10 is a diagram of a trustworthiness protocol stack between security nodes #1 according to an embodiment of this application;
FIG. 11 is another diagram of a trustworthiness protocol stack between security nodes #1 according to an embodiment of this application;
FIG. 12 is a schematic flowchart of hierarchical management of security nodes #1;
FIG. 13 is a schematic flowchart of hierarchical control of security nodes #1;
FIG. 14 is a schematic flowchart of providing a trustworthiness service by a security node #1;
FIG. 15 is a diagram of trustworthiness protocol stacks between a security node #2 and a network node according to an embodiment of this application;
FIG. 16 is another diagram of trustworthiness protocol stacks between a security node #2 and a network node according to an embodiment of this application;
FIG. 17 is a schematic flowchart of configuring a trustworthiness function by a security node #2 as required;
FIG. 18 is a schematic flowchart of providing a trustworthiness service by a security node #2;
FIG. 19 is a diagram of trustworthiness protocol stacks between security nodes #2 according to an embodiment of this application;
FIG. 20 is another diagram of trustworthiness protocol stacks between security nodes #2 according to an embodiment of this application;
FIG. 21 is a schematic flowchart of negotiation of a trustworthiness policy between security nodes #2;
FIG. 22 is a schematic flowchart of providing a trustworthiness service by a security node #2;
FIG. 23 is a schematic flowchart of providing information subscription by a security node #2;
FIG. 24 is a diagram of trustworthiness protocol stacks between a security node #1 and a security node #2 according to an embodiment of this application;
FIG. 25 is another diagram of trustworthiness protocol stacks between a security node #1 and a security node #2 according to an embodiment of this application;
FIG. 26 is a schematic flowchart in which a security node #1 manages a security node #2;
FIG. 27 is a schematic flowchart of providing a trustworthiness service by a security node #1;
FIG. 28 is a schematic flowchart of establishing a communication connection between a security node #1 and a network node;
FIG. 29 is another schematic flowchart of establishing a communication connection between a security node #1 and a network node;
FIG. 30 is another schematic flowchart of establishing a communication connection between a security node #1 and a network node;
FIG. 31 is a schematic flowchart of establishing a communication connection between a security node #2 and a network node;
FIG. 32 is another schematic flowchart of establishing a communication connection between a security node #2 and a network node;
FIG. 33 is another schematic flowchart of establishing a communication connection between a security node #2 and a network node;
FIG. 34 is another schematic flowchart of establishing a communication connection between a security node #2 and a network node;
FIG. 35 is another schematic flowchart of establishing a communication connection between a security node #2 and a network node;
FIG. 36 is a schematic flowchart of establishing a communication connection between security nodes #1;
FIG. 37 is another schematic flowchart of establishing a communication connection between security nodes #1;
FIG. 38 is another schematic flowchart of establishing a communication connection between security nodes #1;
FIG. 39 is a schematic flowchart of establishing a communication connection between security nodes #2;
FIG. 40 is another schematic flowchart of establishing a communication connection between security nodes #2;
FIG. 41 is another schematic flowchart of establishing a communication connection between security nodes #2;
FIG. 42 is a schematic flowchart of establishing a communication connection between a security node #1 and a security node #2;
FIG. 43 is another schematic flowchart of establishing a communication connection between a security node #1 and a security node #2;
FIG. 44 is another schematic flowchart of establishing a communication connection between a security node #1 and a security node #2;
FIG. 45 is another schematic flowchart of establishing a communication connection between a security node #1 and a security node #2;
FIG. 46 is a schematic flowchart of trustworthiness attestation according to an embodiment of this application;
FIG. 47 is a schematic flowchart of configuring an encryption algorithm according to an embodiment of this application;
FIG. 48 is a schematic flowchart of application of a PQC algorithm;
FIG. 49 is a diagram of a hybrid mode network architecture;
FIG. 50 is diagrams of interfaces of nodes in a hybrid mode network architecture;
FIG. 51 is a diagram of trustworthiness protocol stacks of a base station including a security function module engine;
FIG. 52 is a diagram of trustworthiness protocol stacks of a base station including a security function module gear;
FIG. 53 is a diagram of trustworthiness protocol stacks of a base station including a security function module gear and a security function module engine;
FIG. 54 is a diagram of a communication apparatus according to an embodiment of this application; and
FIG. 55 is a diagram of another communication apparatus according to an embodiment of this application.

### DESCRIPTION OF EMBODIMENTS

The following describes technical solutions in embodiments of this application with reference to accompanying drawings.

The technical solutions provided in this application can be applied to various communication systems, for example, a 5th generation (5th generation, 5G) communication system like a new radio (new radio, NR) system, a satellite communication system, a communication system evolved from 5G like a 6th generation (6th generation, 6G) mobile communication system, or a system integrating a plurality of systems. The technical solutions provided in this application can also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A node in a communication system may send a signal to another node or receive a signal from another node. The signal may include information, signaling, data, or the like. The node may also be replaced with an entity, a network entity, a device, a communication device, a communication module, a network element, a communication node, or the like. In the present disclosure, the node is used as an example for description.

For ease of understanding the technical solutions of this application, related technical concepts in embodiments of this application are described.

Existing network communication protocols can be generally classified into two types: protocols responsible for connections and protocols related to communication. The protocols responsible for connections include, for example, but not limited to: a physical layer (physical, PHY), medium access control (medium access control, MAC), radio link control (radio link control, RLC), a packet data convergence protocol (packet data convergence protocol, PDCP), an internet protocol (internet protocol, IP) layer, a stream control transmission protocol (stream control transmission protocol, SCTP), and a transmission control protocol (transmission control protocol, TCP). The protocols related to communication include, for example, but not limited to: radio resource control (radio resource control, RRC), a non-access stratum (non-access stratum, NAS), an Xn application protocol (Xn application protocol, XnAP), an NG application protocol (NG application protocol, NGAP), and a service data adaptation protocol (service data adaptation protocol, SDAP). Xn represents an Xn interface, and supports message exchange between a next generation NodeB (next generation NodeB, gNB) and an NG-evolved NodeB (NG-evolved NodeB, NG-eNB). An NG interface is an interface between a gNB or an NG-eNB and a core network.

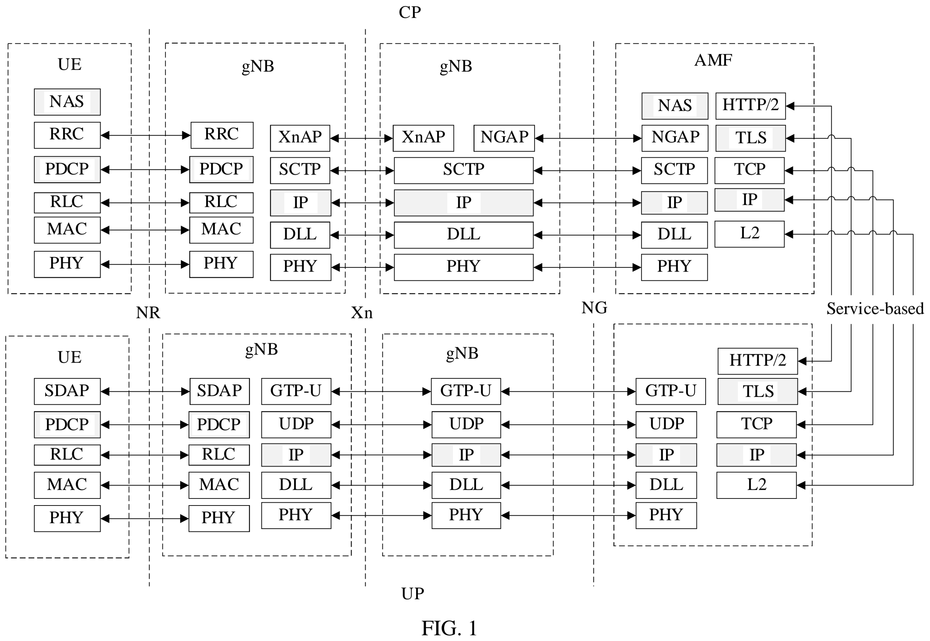

FIG. 1 is a diagram of a 5G network protocol stack. As shown in FIG. 1, marked protocol layers (that is, protocol layers filled in gray) in a protocol stack has security functions. For example, the NAS protocol supports security algorithm selection, authentication and authorization performed by a core network on user equipment (user equipment, UE), and encryption/decryption and integrity protection of messages between the core network and the UE. For another example, the PDCP protocol supports encryption/decryption and integrity protection functions of air interface messages. For still another example, an internet protocol security (internet protocol security, IPsec) protocol supports encryption/decryption and integrity protection functions between a base station and a network function (network function, NF) of the core network. For yet another example, a transport layer security (transport layer security, TLS) protocol supports authentication, encryption/decryption, and integrity protection functions between NFs of the core network. For the NFs of the core network, refer to related definitions in existing protocols or future protocols. This is not limited. In an example, the NFs of the core network include but are not limited to: unified data management (unified data management, UDM), a network exposure function (network exposure function, NEF), a network repository function (NF repository function, NRF), a policy control function (policy control function, PCF), an application function (application function, AF), an access and mobility management function (access and mobility management function, AMF), a session management function (session management function, SMF), and a user plane function (user plane function, UPF).

It can be learned from FIG. 1 that security functions are distributed in a plurality of protocols, and the security functions are closely coupled to communication protocols. To update or upgrade the security functions, a plurality of protocols of a plurality of communication nodes need to be modified. In addition, there are a small quantity of types of security functions, and the security functions supported by the foregoing protocol layers mainly include encryption/decryption and integrity protection.

In view of this, this application proposes that protocols specially supporting security functions may be designed, to resolve an existing problem that the security functions are closely coupled to communication protocols and do not have independent upgrade and update capabilities. In addition, the protocols related to the security functions proposed in this application (referred to as trustworthiness protocols or security protocols in this application) can support a plurality of security technologies and management of the security technologies.

It can be understood that names of network elements, names of protocol layers, names of data units corresponding to some protocol layers, names of interfaces between the network elements, and the like in this application are merely used as examples. In a future communication network, the names of the network elements, the names of the protocol layers, the names of the data units corresponding to the protocol layers, the names of the interfaces between the network elements, and the like may be other names. All these names shall fall within the technical scope of this application provided that they have same or similar functions and achieve same or similar technical objectives. For example, in a 5G network, a network function may be represented as an NF, a terminal device may also be referred to as UE, a medium access control layer may be represented as a MAC layer, a protocol data unit may be represented as a PDU, and a service data unit may be represented as an SDU. In a 6G network, the foregoing names may be new names.

For brevity of description, the following embodiments describe network elements, protocol layers, data units corresponding to some protocol layers, and the like by using some abbreviations as examples. However, the abbreviations are merely used as examples, and may be replaced with other abbreviations or names. This is not limited.

The following details the technical solutions provided in this application.

A communication system proposed in this application is first described.

An embodiment of this application provides a communication system. The communication system includes at least one security node and at least one network node, where the at least one security node is configured to provide a security function for the communication system; the at least one security node establishes a communication connection to the at least one network node; and the at least one security node may communicate trustworthiness signaling and/or trustworthiness data with the at least one network node over the communication connection.

According to this embodiment of this application, the security node can support the security function. Specifically, the independently deployed security node is designed, and the independently deployed security node establishes the communication connection to the network node. In this way, the security node can provide the security function for the communication system, and security can be decoupled from communication. This facilitates independent evolution and flexible deployment of the security function.

Optionally, the at least one network node includes one or more of the following: at least one access network apparatus, at least one core network apparatus, and at least one terminal apparatus. Based on this, the network node may be an access network device or a component (for example, a chip, a chip system, a logical module, or a circuit) of the access network device, may be a core network device or a component (for example, a chip, a chip system, a logical module, or a circuit) of the core network device, or may be a terminal device or a component (for example, a chip, a chip system, a logical module, or a circuit) of the terminal device.

In this embodiment of this application, the security node may serve as an independent node, and may transmit the trustworthiness signaling and/or the trustworthiness data by establishing the communication connection, for example, a direct connection or an indirect connection, to the network node in the communication system.

The at least one security node includes at least one security node #1 and/or at least one security node #2. The following provides descriptions with reference to three cases. The security node #1 is a security node in a communication network, that is, a node that provides the security function for the communication network. The security node #1 may be a device (for example, a terminal device, an access network device, a core network device, or a cloud server), or may be a component (for example, a chip, a chip system, a logical module, or a circuit) of the device.

The security node #2 is a security node in the communication network, that is, a node that provides the security function for the communication network. A difference between the security node #2 and the security node #1 lies in that the security node #1 may be configured to manage (or control) the security function, and the security node #2 may be configured to perform a security-related function. The security node #2 may be a device (for example, a terminal device, an access network device, a core network device, or a cloud server), or may be a component (for example, a chip, a chip system, a logical module, or a circuit) of the device.

Case 1: The at least one security node includes the at least one security node #1.

The security node #1 may serve as an independent node to manage (or control) the security function. For example, the security node #1 may be used as a central decision-making and management scheduling unit of a network trustworthiness capability, and is responsible for formulating a security-related policy and sending the security-related policy to a communication party, and performing establishment, maintenance, update, and the like of security management functions.

The security node #1 may also be referred to as an engine (engine), and a name of the security node #1 does not constitute any limitation on the protection scope of embodiments of this application. The following embodiment provides descriptions mainly by using the security node #1 as an example.

Optionally, the security node #1 is deployed in a core network and/or an access network. In an example, a representation form of the security node #1 in the core network is an independent NF attached to a bus. In this case, the security node #1 may also be referred to as a trustworthiness engine function (trustworthiness engine function, TEF). In an example, a representation form of the security node #1 in the access network is a virtual function module or an independent node (similar to an access network node).

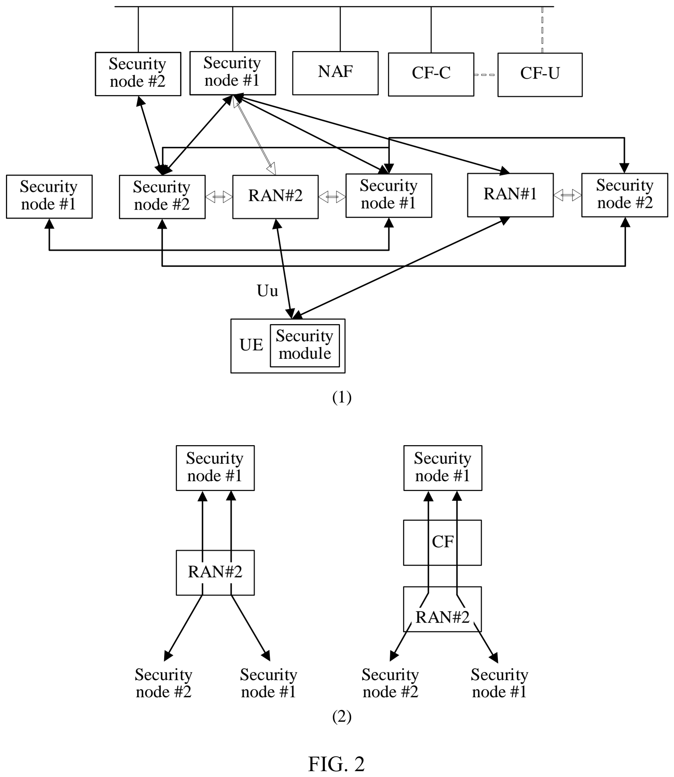

FIG. 2 is a diagram of a network architecture in which security nodes serve as independent nodes according to an embodiment of this application. As shown in FIG. 2, security nodes #1 may be deployed in both a core network and an access network. It can be learned from (1) in FIG. 2 that communication connections may be established between a security node #1 and access network (for example, radio access network (radio access network, RAN) nodes, which are denoted as a RAN#1 and a RAN#2 for differentiation) and between other security nodes #1. It can be understood that FIG. 2 is merely an example, and this embodiment of this application is not limited thereto. For example, a communication connection may also be established between the security node #1 and a core network node.

Optionally, a security module (or a security function module) may be deployed on a network node, and the security module performs a security-related function for the network node. As shown in (1) in FIG. 2, a security module may be deployed on UE. In this embodiment of this application, the security module deployed on the network node is the same as a security node #2. A difference lies in that the security module is an internal function module of the network node, while the security node #2 is an independent node, and performs a security-related function by establishing a communication connection to another node.

According to the foregoing solution, the independent node, namely, the security node #1, is used in the communication system, and the security node #1 provides a security function, for example, manages the security function, for the communication system. In this way, the independent security node can manage and allocate security functions in the communication system together.

Case 2: The at least one security node includes the at least one security node #2.

The security node #2 may serve as an independent node to perform the security-related function. For example, the security node #2 may be used as a unit for negotiation, execution, and self-evolution of a network trustworthiness capability for P2P capability execution.

The security node #2 may also be referred to as a gear (gear), and a name of the security node #2 does not constitute any limitation on the protection scope of embodiments of this application. The following embodiment provides descriptions mainly by using the security node #2 as an example.

Optionally, the communication system includes a plurality of security nodes #2. In a possible implementation, each network node has a corresponding security node #2, that is, a security node #2 that provides a service for the network node. In another possible implementation, a plurality of network nodes may share one security node #2, that is, one security node #2 may provide a service for the plurality of network nodes.

Optionally, the security node #2 is deployed on at least one of the following: a core network, an access network, and a terminal. In an example, a representation form of the security node #2 in the terminal may be a virtual function module, an independent hardware card, or a combination with a smart card of the terminal. In an example, a representation form of the security node #2 in the access network may be a virtual function module or an independent node (similar to an access network node). In an example, a representation form of the security node #2 in the core network is an independent network function attached to a bus. In this case, the security node #2 may also be referred to as a trustworthiness gear function (trustworthiness gear function, TGF).

As shown in FIG. 2, security nodes #2 may be deployed in both the core network and the access network. It can be learned from FIG. 2 that communication connections may be established between a security node #2 and access network nodes (for example, the RAN#1 and the RAN#2), between security nodes #2, between a security node #2 and a security node #1, and between a security node #2 and a core network node (for example, a security node #1 deployed in the core network).

According to the foregoing solution, the independent node, namely, the security node #2, is used in the communication system, and the security node #2 provides a security function, for example, performs the security function, for the communication system. In this way, the independent security node can update or evolve the security function, and an operation is simple.

Case 3: The at least one security node includes the at least one security node #1 and the at least one security node #2.

The security node #1 and the security node #2 may be independent devices, may be integrated into a same device to implement different functions, may be network elements in a hardware device, may be software functions running on dedicated hardware, or may be virtualized functions instantiated on a platform (for example, a cloud platform). Specific forms of the security nodes are not limited in this application.

With reference to the three examples, the foregoing describes the cases in which the at least one security node includes the security node #1 and/or the security node #2. The following embodiment provides descriptions mainly by using an example in which the at least one security node includes the security node #1 and the security node #2.

After the security node #1 and the security node #2 are used in the communication system, the security node #1 and the security node #2 may be connected in the following two implementations:

In a possible implementation, security nodes are directly connected to each other. In this manner, the security nodes may directly establish a connection, and then may directly perform communication with each other.

As shown in (1) in FIG. 2, a communication connection may be directly established between a security node (for example, the security node #1 or the security node #2) deployed in the core network and a security node (for example, the security node #1 or the security node #2) deployed in the access network, so that trustworthiness signaling and/or trustworthiness data can be directly transmitted.

In another possible implementation, security nodes establish a connection through another node, that is, transmit trustworthiness signaling and/or trustworthiness data through the another node. In this manner, the security nodes can establish the connection through the another node, and then can perform communication with each other through the another node. In this way, if a direct connection between a network node and a security node cannot be implemented or is inappropriate, a connection between the network node and the security node can be established through another node, so that the security node can provide a service for the network node through the another node.

It is assumed that a security node #1 is deployed in the core network, and a security node #1 and a security node #2 are deployed in the access network. As shown in (2) in FIG. 2, a communication connection may be established between the security node #1 and the security node #2 deployed in the access network and the security node #1 deployed in the core network through an access network node (RAN#2), or a communication connection may be established between the security node #1 and the security node #2 deployed in the access network and the security node #1 deployed in the core network through the access network node (RAN#2) and a core network node (NF).

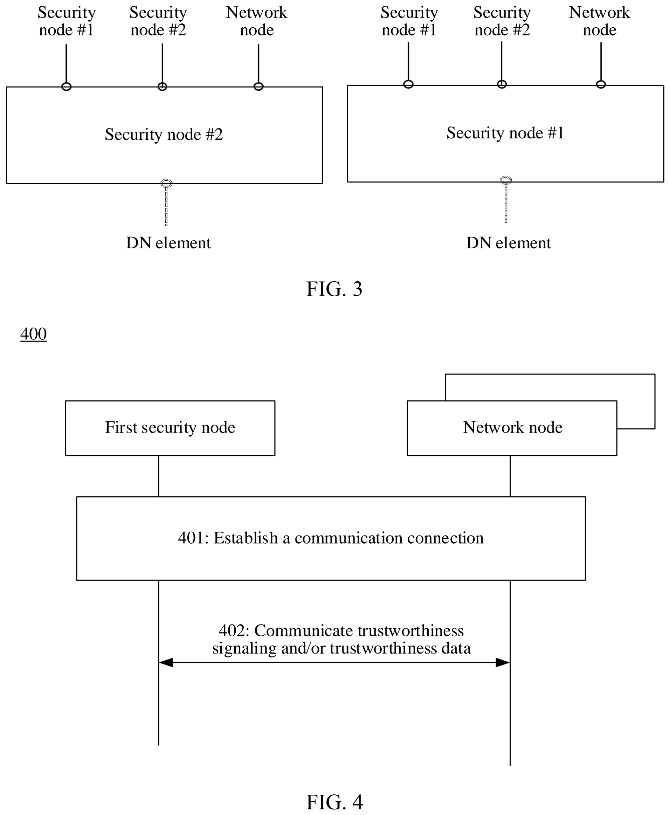

After the security node #1 and the security node #2 are used in the communication system, some interfaces are added, as shown in FIG. 3.

FIG. 3 is diagrams of interfaces of security nodes according to an embodiment of this application. As shown in FIG. 3, after security nodes #1 are used in the communication system, the following interfaces may be newly added to a network: an interface between a security node #1 and a network node, an interface between security nodes #1, and an interface between a security node #1 and a security node #2. After security nodes #2 are used in the communication system, the following interfaces may be newly added to the network: an interface between a security node #2 and a network node, an interface between security nodes #2, and an interface between a security node #2 and a security node #1.

It can be learned from FIG. 3 that, after the security nodes #1 and the security nodes #2 used in the communication system, the following five types of interfaces may be newly added: the interface between the security node #1 and the network node, the interface between the security nodes #1, the interface between the security node #2 and the network node, the interface between the security nodes #2, and the interface between the security node #1 and the security node #2. Based on this, five trustworthiness protocols are designed in this application: a trustworthiness protocol between the security node #1 and the network node, a trustworthiness protocol between the security nodes #1, a trustworthiness protocol between the security node #2 and the network node, a trustworthiness protocol between the security nodes #2, and a trustworthiness protocol between the security node #1 and the security node #2. The following details this part with reference to methods.

The foregoing describes related content of the security node #1 and the security node #2, and the following describes trustworthiness signaling and trustworthiness data.

Trustworthiness signaling represents security-related signaling. Optionally, the trustworthiness signaling is used for one or more of the following functions: management of a trustworthiness function, management of a trustworthiness requirement, negotiation of a trustworthiness policy, notification of a trustworthiness service, or a request for a trustworthiness service.

In an example, the management of the trustworthiness function includes one or more of the following: establishment of the trustworthiness function, activation of the trustworthiness function, initial configuration of the trustworthiness function, update of the trustworthiness function, addition of the trustworthiness function, deletion of the trustworthiness function, or state transition of the trustworthiness function.

In an example, the trustworthiness service includes one or more of the following: an authentication service, an authorization service, a trustworthiness attestation service, a blockchain service, a situational awareness service, or a network-wide trustworthiness policy service.

Authentication service: A provider provides an authentication response/authentication result for a requester. In an example, the authentication result may be a final authentication result, or may be an intermediate parameter in an authentication process. For example, the authentication service may be authentication and authorization between a RAN and a core network NF, or authentication and authorization between core network NFs. The authentication and authorization includes, for example, identity authentication for secure access, like an authentication vector and an authentication parameter.

Authorization service: A provider provides an authorization token (access token)/authorization result for a requester. In an example, the authorization result may be a final authorization result, or may be an intermediate parameter in an authorization process. For example, the authorization service may be authorization between a RAN and a core network NF, or authorization between core network NFs. The authorization includes, for example, static authorization, and authorization based on token (token) information.

Trustworthiness attestation service: A provider provides attestation evidence (where the provider serves as an attester (attester))/an attestation result (where the provider serves as a verifier (verifier)) for a requester. In an example, the attestation result may be a final result, or may be an intermediate parameter in an attestation process. For example, the trustworthiness attestation service may be trustworthiness attestation between a RAN and a core network NF, or trustworthiness attestation between core network NFs. The trustworthiness attestation includes, for example, device trustworthiness attestation, like obtaining of a trustworthiness attestation vector and a trustworthiness attestation parameter.

Blockchain service: A provider provides a blockchain control capability for a requester, including blockchain creation, update, and deletion, blockchain/chain node management, and the like.

The situational awareness service: A provider provides a situational awareness control capability or a situational awareness result for a requester, including parameter types, configuration of the parameter types, and extraction of parameter information.

Network-wide trustworthiness policy service: A provider provides a network-wide trustworthiness policy for a requester, and the network-wide trustworthiness policy is mainly used as one of input parameters for trustworthiness policy negotiation.

It can be understood that in this application, descriptions related to "trustworthiness" may be replaced with descriptions related to "security". For example, a trustworthiness function may also be described as a security function, trustworthiness information may also be described as security information, and the like. Name descriptions of the functions, the messages, or the information are not limited.

Trustworthiness data represents security-related data. Optionally, the trustworthiness data includes one or more of the following: situational awareness related data, homomorphic encryption related data, homomorphic computation related data, blockchain related data, or keys.

The following details specific application of the trustworthiness signaling and the trustworthiness data with reference to different scenarios.

The foregoing describes the system provided in this application, and the following describes the methods provided in this application. For terms mentioned below, refer to the foregoing descriptions. Details are not described below again.

FIG. 4 is a diagram of an information transmission method 400 according to an embodiment of this application. For ease of description, the following uses an example in which the method 400 is performed by a security node for description. It can be understood that the security node may be a device (for example, a terminal device, an access network device, a core network device, or a cloud server), or may be a component (for example, a chip, a chip system, a logical module, or a circuit) of the device. This is not limited. The method 400 is applied to a communication network, and the communication network includes a first security node and at least one network node. The method 400 may include the following steps.

401: The first security node establishes a communication connection to the at least one network node.

The first security node is configured to provide a security function for the communication network.

The communication connection represents a connection relationship between the security node and the network node, and may be a logical concept rather than a physical entity. In brief, both the first security node and the network node are independent nodes, and may communicate with each other by establishing the communication connection between the first security node and the network node.

Optionally, the first security node includes a first node and/or a second node, the first node is configured to manage the security function, and the second node is configured to perform the security function. The first node is a security node #1, and the second node is a security node #2. For uniformity and without loss of generality, the following uses the security node #1 and the security node #2 for description.

402: The first security node communicates trustworthiness signaling and/or trustworthiness data with the at least one network node over the communication connection.

According to the foregoing technical solution, the security function in the communication network may be provided by an independent security node. Specifically, the security node is independently deployed, and the independently deployed security node establishes the communication connection to the network node. In this way, the trustworthiness signaling and/or the trustworthiness data can be transmitted between the security node and the network node over the communication connection, so that the security node provides the security function for a communication system. In addition, because the security node is independently deployed, security can be decoupled from communication. This facilitates independent evolution and flexible deployment of the security function.

Optionally, the first security node includes a trustworthiness protocol layer, or a protocol stack of the first security node includes a trustworthiness protocol layer, and the trustworthiness protocol layer processes the trustworthiness signaling and/or the trustworthiness data. Based on this, a trustworthiness protocol and a trustworthiness protocol stack are designed, so that the independently deployed security node can process trustworthiness signaling and/or trustworthiness data between the security node and other nodes (referred to as nodes #A for differentiation), thereby improving security of the trustworthiness signaling and/or the trustworthiness data. The other nodes include a security node (for example, the security node #1 or the security node #2) and a network node.

For example, the first security node is the security node #1, a trustworthiness protocol layer is deployed on the security node #1, and the trustworthiness protocol layer may process trustworthiness signaling and/or trustworthiness data between the security node #1 and another node. For another example, the first security node is the security node #2, a trustworthiness protocol layer is deployed on the security node #2, and the trustworthiness protocol layer may process trustworthiness signaling and/or trustworthiness data between the security node #2 and another node.

Further, optionally, the protocol stack of the first security node further includes one or more of the following protocol layers below the trustworthiness protocol layer: a protocol layer for data packet processing, a protocol layer for transmission, a protocol layer for connection establishment, and a protocol layer for channel establishment.

For example, if the first security node is deployed on a terminal, that is, if the first security node is a terminal device, the first security node may further include one or more of the following protocol layers below the trustworthiness protocol layer: PDCP, RLC, MAC, PHY, and SDAP, and future possible evolved versions of these protocol layers. The protocol layer for data packet processing may include PDCP and SDAP, and the protocol layer for connection establishment may include PHY, MAC, and RLC.

For another example, if the first security node is deployed in an access network, that is, if the first security node is an access network device, the first security node may further include one or more of the following protocol layers below the trustworthiness protocol layer: PDCP, RLC, MAC, PHY, IP, a data link layer (data link layer, DLL), SCTP, and a user datagram protocol (user datagram protocol, UDP), and future possible evolved versions of these protocol layers. The protocol layer for data packet processing may include PDCP, the protocol layer for transmission may include SCTP and UDP, and the protocol layer for connection establishment may include PHY, MAC, and RLC.

For still another example, if the first security node is deployed in an access network, that is, if the first security node is an NF of a core network, the first security node may further include one or more of the following protocol layers below the trustworthiness protocol layer: IP, SCTP, UDP, TCP, TLS, and a hypertext transfer protocol (hypertext transfer protocol, HTTP), and future possible evolved versions of these protocol layers. The protocol layer for data packet processing may include HTTP, and the protocol layer for transmission may include SCTP, TCP, and UDP.

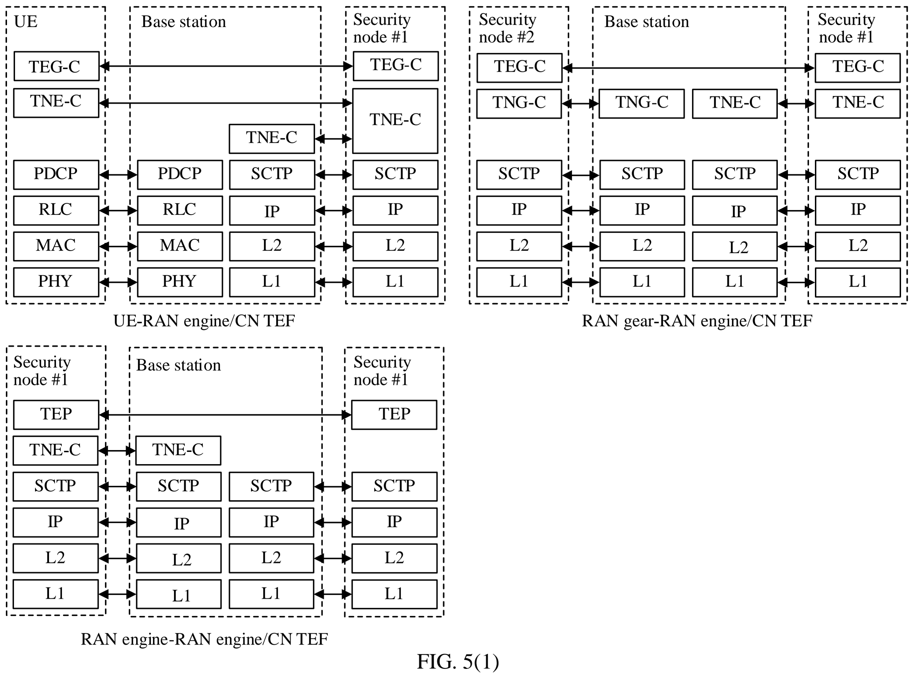

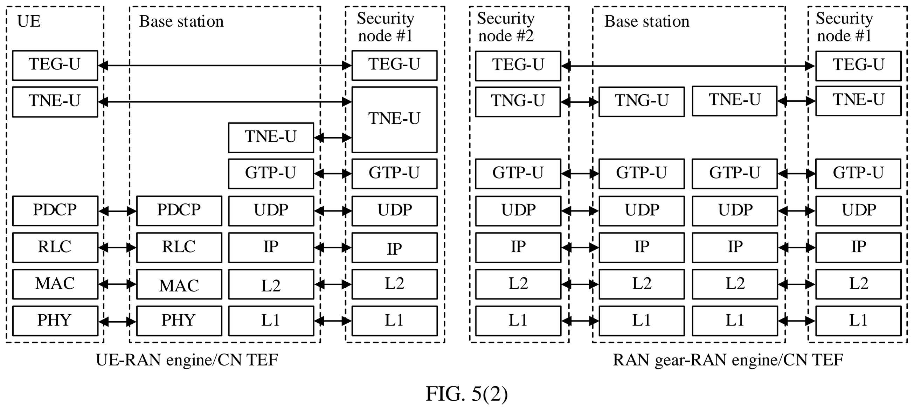

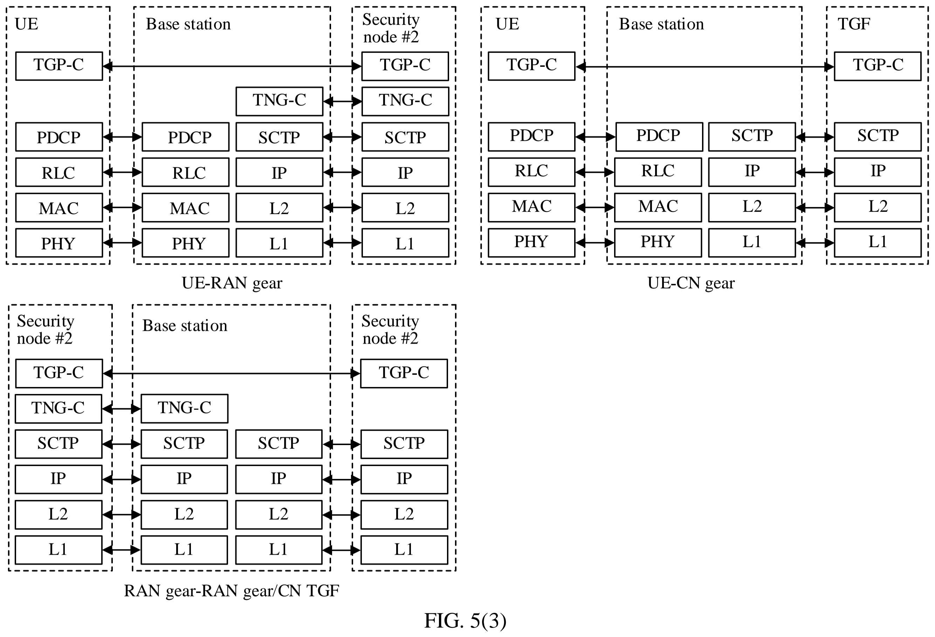

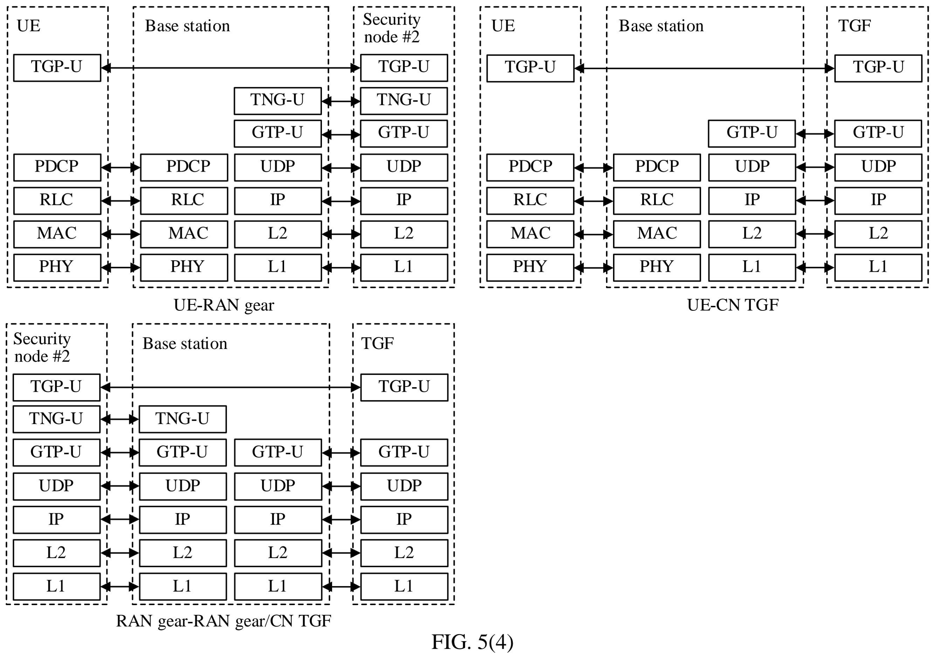

FIG. 5(1) to FIG. 5(4) are diagrams of end-to-end protocol stacks according to an embodiment of this application. In FIG. 5, an engine and a TEF represent security nodes #1, and a gear and a TGF represent security nodes #2.

For ease of description and differentiation, the following definitions are provided in this embodiment of this application:

A trustworthiness protocol between a security node #1 and a network node is referred to as TNE, a trustworthiness control plane protocol is referred to as TNE-C, and a trustworthiness service plane protocol is referred to as TNE-U. A trustworthiness protocol between security nodes #1 is referred to as TEP, and the trustworthiness protocol TEP is a trustworthiness control plane protocol. A trustworthiness protocol between a security node #2 and a network node is referred to as TNG, a trustworthiness control plane protocol is referred to as TNG-C, and a trustworthiness service plane protocol is referred to as TNG-U. A trustworthiness protocol between security nodes #2 is referred to as TGP, a trustworthiness control plane protocol is referred to as TGP-C, and a trustworthiness service plane protocol is referred to as TGP-U. A trustworthiness protocol between a security node #1 and a security node #2 is referred to as TEG, a trustworthiness control plane protocol is referred to as TEG-C, and a trustworthiness service plane protocol is referred to as TEG-U.

T represents trustworthiness (trustworthiness), and may include trust (trust) and security (security). N represents a network node. E represents a security node #1. As described above, a security node #1 may also be referred to as an engine, and therefore E is used to represent the security node #1. G represents a security node #2. As described above, a security node #2 may also be referred to as a gear, and therefore G is used to represent the security node #2. P represents a protocol (protocol). -C represents a control plane, and -U represents a user plane.

It can be understood that the foregoing definitions and names are merely examples for differentiation, and do not constitute any limitation on the protection scope of embodiments of this application.

Based on whether an execution node of a trustworthiness protocol is a security node #1 (namely, an engine) or a security node #2 (namely, a gear), the end-to-end protocol stacks proposed in this embodiment of this application may be classified into the following two types:

1. End-to-end protocol stacks related to the security node #1 are shown in FIG. 5(1) and FIG. 5(2). FIG. 5(1) is an end-to-end trustworthiness control plane protocol stack related to the security node #1, and FIG. 5(2) is an end-to-end trustworthiness service plane protocol stack related to the security node #1.

In an example, when a rightmost node is a core network TEF (that is, a security node #1 deployed in a core network), another base station and an NF may exist between a base station and the TEF and are responsible for forwarding a message of a trustworthiness protocol.

2. End-to-end protocol stacks unrelated to the security node #1 are shown in FIG. 5(3) and FIG. 5(4). FIG. 5(3) is an end-to-end trustworthiness control plane protocol stack unrelated to the security node #1, and FIG. 5(4) is an end-to-end trustworthiness service plane protocol stack unrelated to the security node #1.

In an example, when a rightmost node is a core network TGF (that is, a security node #2 deployed in the core network), another base station and an NF may exist between a base station and the TGF and are responsible for forwarding a message of a trustworthiness protocol.

It can be understood that FIG. 5(1) to FIG. 5(4) are examples for description, and this is not limited. For example, different trustworthiness protocols may be alternatively located at a same layer. FIG. 5(1) is used as an example. The TEG and TNE protocols may be located at a same layer.

As described above, the five trustworthiness protocols are designed in this application, and are separately detailed below.

### I. The trustworthiness protocol between a security node #1 and a network node:

Trustworthiness signaling and trustworthiness data can be transmitted between the security node #1 and the network node. Therefore, the trustworthiness protocol may include a trustworthiness control plane protocol and a trustworthiness service plane protocol.

In a first possible case, the security node #1 is directly connected to the network node. Based on this, the trustworthiness signaling and the trustworthiness data are directly transmitted between the security node #1 and the network node, so that transmission efficiency is improved.

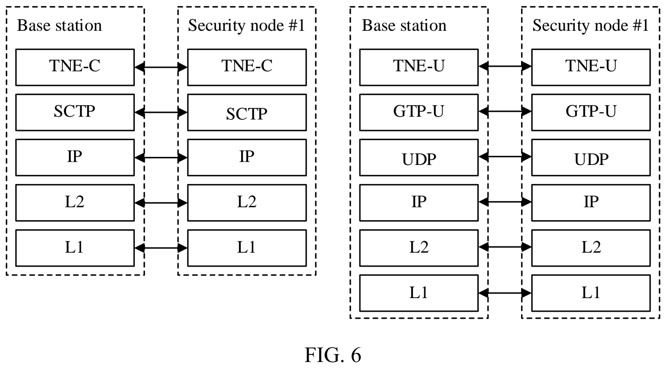

FIG. 6 is a diagram of trustworthiness protocol stacks between a security node #1 and a network node according to an embodiment of this application. In the example shown in FIG. 6, the security node #1 is directly connected to the network node (for example, a base station). As shown in FIG. 6, trustworthiness signaling is transmitted between the security node #1 and the network node by using a trustworthiness control plane protocol TNE-C, and trustworthiness data is transmitted between the security node #1 and the network node by using a trustworthiness service plane protocol TNE-U.

In a second possible case, the security node #1 is connected to the network node through another node. Based on this, the trustworthiness signaling and the trustworthiness data are transmitted between the security node #1 and the network node through the another node. In this way, in some cases, when the network node cannot be directly connected to the security node #1, the trustworthiness signaling and the trustworthiness data can be transmitted through the another node, so that the security node #1 provides a security function for each network node in the communication network.

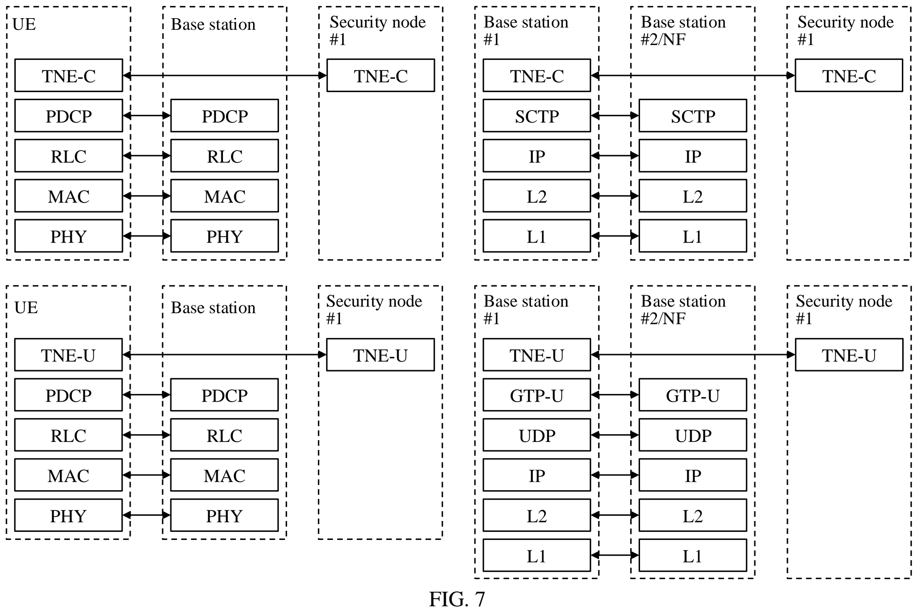

FIG. 7 is another diagram of trustworthiness protocol stacks between a security node #1 and a network node according to an embodiment of this application. In the example shown in FIG. 7, the security node #1 is connected to the network node through another node. As shown in FIG. 7, when the network node is UE, a base station transparently transmits trustworthiness signaling and trustworthiness data between the security node #1 and the network node #1. When the network node is a base station (for example, a base station #1), another base station (for example, a base station #2) or an NF transparently transmits trustworthiness signaling and trustworthiness data between the security node #1 and the network node #1.

In an example, the trustworthiness data between the security node #1 and the network node includes to-be-processed data provided by the network node. For example, the network node sends one or more of the following to the security node #1: situational awareness related data, homomorphic encryption related data, homomorphic computation related data, blockchain related data, or keys, and the security node #1 processes the one or more of the foregoing data.

In an example, the trustworthiness signaling between the security node #1 and the network node may be used for one or more of the following functions:
establishment of a communication connection (that is, establishment of a trustworthiness function) between the security node #1 and the network node: for example, sensing, registration, and deregistration of the network node;
update of a trustworthiness function: for example, update of a security function module in the security node #1 by the security node #1 based on a requirement of the network node;
deletion and addition of a trustworthiness function: for example, deletion or addition of a security function module in the security node #1 by the security node #1 based on a requirement of the network node; and
notification of a trustworthiness service: for example, provision of an authentication service, a blockchain service, a trustworthiness attestation service, and the like by the security node #1.

The following provides some examples.

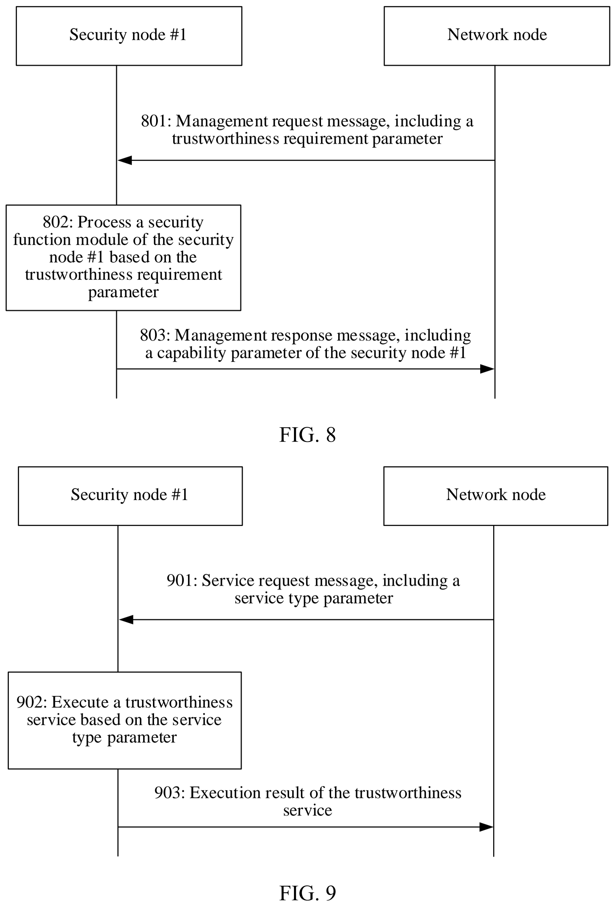

FIG. 8 is a schematic flowchart of configuring a trustworthiness function by a security node #1 as required. As shown in FIG. 8, in an example, a procedure in which the security node #1 configures the trustworthiness function as required includes the following steps.

801: A network node sends a management request (management request) message to the security node #1, where the management request message includes a trustworthiness requirement parameter; and the security node #1 receives the management request message.

The trustworthiness requirement parameter may be carried in a message of a trustworthiness protocol layer (for example, TNE-C).

802: The security node #1 processes a security function module of the security node #1 based on the trustworthiness requirement parameter.

For example, if the trustworthiness requirement parameter in step 801 is addition of a security function module, the security node #1 adds the security function module of the security node #1 in step 802. For another example, if the trustworthiness requirement parameter in step 801 is deletion of a security function module, the security node #1 deletes the security function module of the security node #1 in step 802. For still another example, if the trustworthiness requirement parameter in step 801 is update of a status of a security function module, the security node #1 updates the status of the security function module in step 802.

The security node #1 may process the security function module of the security node #1 at the trustworthiness protocol layer (for example, TNE-C) based on the trustworthiness requirement parameter.

803: The security node #1 sends a management response (management response) message to the network node, where the management response message includes a capability parameter of the security node #1; and the network node receives the management response message.

The capability parameter of the security node #1 may be carried in a message of the trustworthiness protocol layer (for example, TNE-C).

According to the foregoing technical solution, the security node #1 may configure a corresponding security function module based on a trustworthiness requirement of the network node, to provide a corresponding security function for the network node.

FIG. 9 is a schematic flowchart of providing a trustworthiness service by a security node #1. As shown in FIG. 9, in an example, a procedure in which the security node #1 provides the trustworthiness service includes the following steps.

901: A network node sends a service request message to the security node #1, where the service request message includes a service type parameter; and the security node #1 receives the service request message.

The service type parameter may be carried in a message of a trustworthiness protocol layer (for example, TNE-C).

In an example, the service type parameter includes at least one of the following: authentication, blockchain establishment, and trustworthiness attestation.

902: The security node #1 executes the trustworthiness service based on the service type parameter.

The security node #1 may execute the trustworthiness service at the trustworthiness protocol layer (for example, TNE-C).

903: The security node #1 sends an execution result of the trustworthiness service to the network node, and the network node receives the execution result of the trustworthiness service.

For example, if the service type parameter in step 901 includes authentication, the execution result in step 903 may include an authentication success or an authentication failure. Further, optionally, the execution result includes a cause of the authentication failure.

For another example, if the service type parameter in step 901 includes trustworthiness attestation, the execution result in step 903 may include a trustworthiness attestation success or a trustworthiness attestation failure. Further, optionally, the execution result includes a cause of the trustworthiness attestation failure.

The execution result of the trustworthiness service may be carried in a message of the trustworthiness protocol layer (for example, TNE-C).

According to the foregoing technical solution, the security node #1 may perform a corresponding trustworthiness service for the network node based on a request of the network node.

The foregoing is an example for description, and is not limited. For related content of trustworthiness signaling, a trustworthiness function, the trustworthiness service, and the like, refer to the foregoing related descriptions.

### II. The trustworthiness protocol between security nodes #1:

Trustworthiness signaling can be transmitted between the security nodes #1. Therefore, the trustworthiness protocol may include a trustworthiness control plane protocol.

In a first possible case, the security nodes #1 are directly connected to each other. Based on this, the trustworthiness signaling is directly transmitted between the security nodes #1.

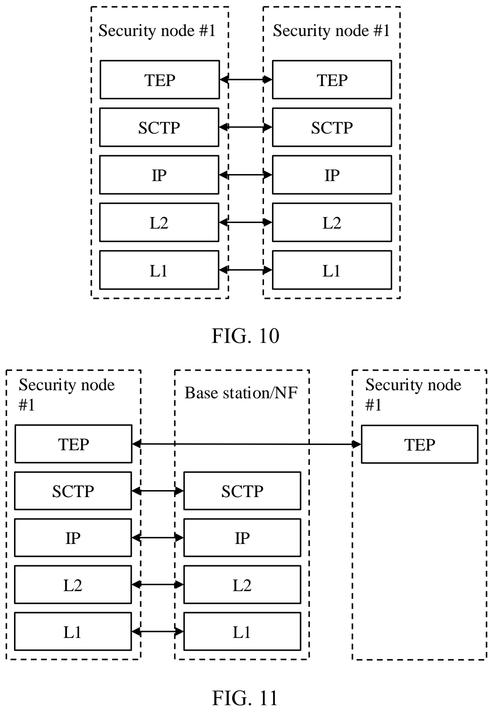

FIG. 10 is a diagram of a trustworthiness protocol stack between security nodes #1 according to an embodiment of this application. In the example shown in FIG. 10, the security nodes #1 are directly connected to each other. As shown in FIG. 10, trustworthiness signaling is transmitted between the security nodes #1 by using a trustworthiness protocol TEP.

In a second possible case, the security nodes #1 are connected to each other through another node. Based on this, the trustworthiness signaling is transmitted between the security nodes #1 through the another node.

FIG. 11 is another diagram of a trustworthiness protocol stack between security nodes #1 according to an embodiment of this application. In the example shown in FIG. 11, the security nodes #1 are connected to each other through another node. As shown in FIG. 11, a base station or an NF transparently transmits trustworthiness signaling between the security nodes #1.

Optionally, when the communication network includes at least two security nodes #1, one or more of the at least two security nodes #1 may have a management, configuration, or control function for another security node #1.

In a possible implementation, there is a hierarchical structure between the security nodes #1, that is, some security nodes #1 are upper-layer security nodes, some security nodes #1 are lower-layer security nodes, and the upper-layer security nodes have a management, configuration, or control function for the lower-layer security nodes. For example, security nodes #1 deployed in a core network are upper-layer security nodes, and security nodes #1 deployed in an access network are lower-layer security nodes.

In an example, the trustworthiness signaling between the security nodes #1 may be used for one or more of the following functions:
establishment of a communication connection between the security nodes #1: for example, registration and deregistration of a lower-layer security node #1;
management of a lower-layer security node #1 by an upper-layer security node #1: for example, establishment, update, deletion, or addition of an internal security function module;
blockchain capability control of a lower-layer security node #1 by an upper-layer security node #1: for example, blockchain running parameter transmission;
situational awareness control of a lower-layer security node #1 by an upper-layer security node #1, and provision of situational awareness configuration information: for example, information about a sensed object (such as a type and a node ID/IP), information about to-be-sensed data (such as a data type, a data volume, and a data storage location), and a sensing method;
homomorphic control of a lower-layer security node #1 by an upper-layer security node #1: for example, key distribution and homomorphic task configuration;
mutual sensing between two security nodes #1; and
provision of a trustworthiness service, for example, an authentication result or an attestation result by a security node #1 for another security node #1.

It can be understood that the foregoing provides descriptions mainly by using the upper-layer security node #1 and the lower-layer security node #1 as an example. This application is not limited thereto. For example, the upper-layer security node #1 and the lower-layer security node #1 may be alternatively any two security nodes #1.

The following provides some examples.

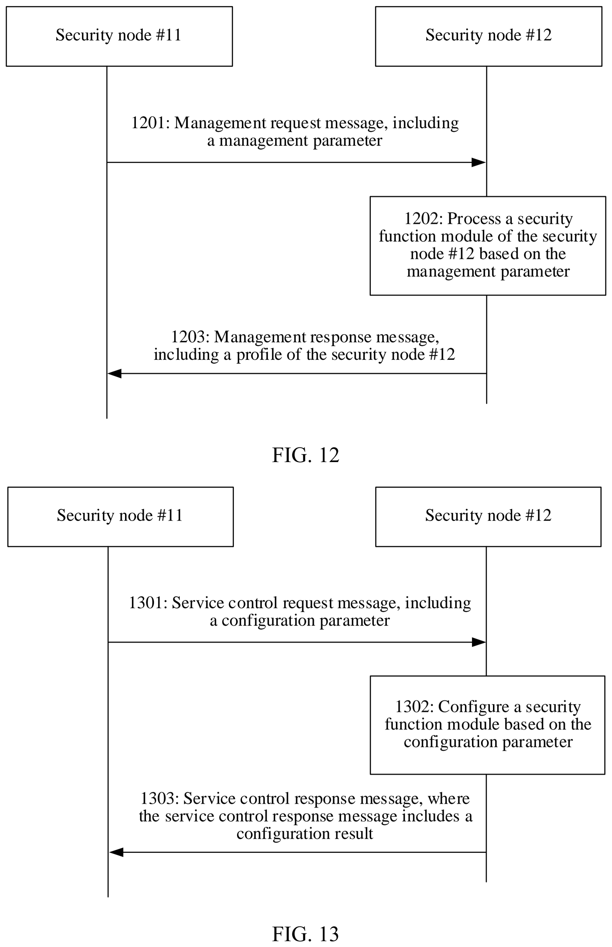

FIG. 12 is a schematic flowchart of hierarchical management of security nodes #1. As shown in FIG. 12, in an example, assuming that a security node #11 (for example, the security node #11 is an upper-layer security node) manages a security node #12 (for example, the security node #12 is a lower-layer security node), a hierarchical management procedure includes the following steps.

1201: The security node #11 sends a management request message to the security node #12, where the management request message includes a management parameter; and the security node #12 receives the management request message.

The management parameter may be carried in a message of a trustworthiness protocol layer (for example, TEP).

The management parameter includes, for example, one or more of a trustworthiness policy and a profile (profile) of the security node #12. The profile of the security node #2 is a series of parameters used to configure the security node #2 and describe information about the security node #2, including identity information of the security node #2 (that is, a parameter that can describe an identity of the security node #2), parameters that describe a network node served by the security node #2 such as a network node identifier (identifier, ID)/type corresponding to the security node #2, capability information of the security node #2, and the like.

1202: The security node #12 processes a security function module of the security node #12 based on the management parameter.

The security node #12 may process the security function module of the security node #12 at the trustworthiness protocol layer (for example, TEP).

Step 1202 is similar to step 802. Details are not described herein again.

1203: The security node #12 sends a management response message to the security node #11, where the management response message includes the profile of the security node #12; and the security node #11 receives the management response message.

The profile of the security node #12 may be carried in a message of the trustworthiness protocol layer (for example, TEP).

According to the foregoing technical solution, the security node #1 can manage a trustworthiness function of the security node #2.

FIG. 13 is a schematic flowchart of hierarchical control of security nodes #1. As shown in FIG. 13, in an example, assuming that a security node #11 (for example, the security node #11 is an upper-layer security node) controls a security node #12 (for example, the security node #12 is a lower-layer security node), a hierarchical control procedure includes the following steps.

1301: The security node #11 sends a service control (service control) request message to the security node #12, where the service control request message includes a configuration parameter; and the security node #12 receives the service control request message.

The configuration parameter may be carried in a message of a trustworthiness protocol layer (for example, TEP).

The configuration parameter represents a configuration parameter of a trustworthiness service. In an example, the configuration parameter includes, for example, a blockchain configuration parameter, a situational awareness configuration parameter, and a homomorphic configuration parameter.

1302: The security node #12 configures a security function module based on the configuration parameter.

In addition, the security node #12 may further execute a specific security service.

The security node #12 may configure the security function module at the trustworthiness protocol layer (for example, TEP).

1303: The security node #12 sends a service control response message to the security node #11, where the service control response message includes a configuration result; and the security node #11 receives the service control response message.

The configuration result may be carried in a message of the trustworthiness protocol layer (for example, TEP).

In addition, if the security node #12 executes the security service in step 1302, the service control response message may further include an execution result.

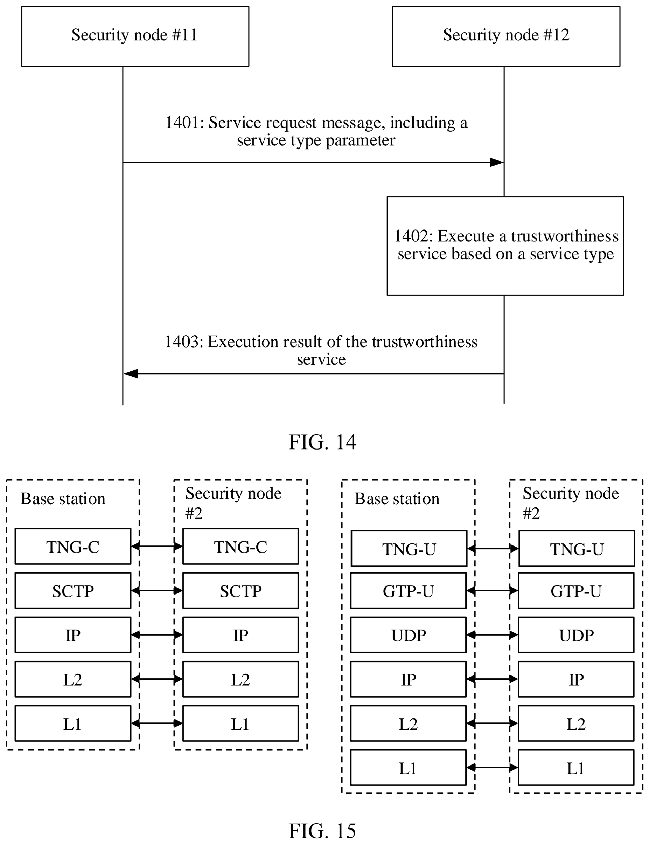

FIG. 14 is a schematic flowchart of providing a trustworthiness service by a security node #1. As shown in FIG. 14, a procedure in which the security node #1 provides the trustworthiness service includes the following steps.

1401: A security node #11 sends a service request message to a security node #12, where the service request message includes a service type parameter; and the security node #12 receives the service request message.

The service type parameter may be carried in a message of a trustworthiness protocol layer (for example, TEP).

1402: The security node #12 executes the trustworthiness service based on the service type parameter.

The security node #12 may execute the trustworthiness service at the trustworthiness protocol layer (for example, TEP).

1403: The security node #12 sends an execution result of the trustworthiness service to the security node #11, and the security node #11 receives the execution result of the trustworthiness service.

The execution result of the trustworthiness service may be carried in a message of the trustworthiness protocol layer (for example, TEP).

For details of steps 1401 to 1403, refer to steps 901 to 903. Details are not described herein again.

The foregoing is an example for description, and is not limited. For related content of trustworthiness signaling, a trustworthiness function, the trustworthiness service, and the like, refer to the foregoing related descriptions.

### III. The trustworthiness protocol between a security node #2 and a network node:

Trustworthiness signaling and trustworthiness data can be transmitted between the security node #2 and the network node. Therefore, the trustworthiness protocol may include a trustworthiness control plane protocol and a trustworthiness service plane protocol.

In a first possible case, the security node #2 is directly connected to the network node, so that transmission efficiency is improved. Based on this, the trustworthiness signaling and the trustworthiness data are directly transmitted between the security node #2 and the network node.

FIG. 15 is a diagram of trustworthiness protocol stacks between a security node #2 and a network node according to an embodiment of this application. In the example shown in FIG. 15, the security node #2 is directly connected to the network node. As shown in FIG. 15, the network node is a base station, trustworthiness signaling is transmitted between the security node #2 and the base station by using a trustworthiness control plane protocol TNG-C, and trustworthiness data is transmitted between the security node #2 and the base station by using a trustworthiness service plane protocol TNG-U.

In a second possible case, the security node #2 is connected to the network node through another node. Based on this, the trustworthiness signaling and the trustworthiness data are transmitted between the security node #2 and the network node through the another node. In this way, in some cases, when the network node cannot be directly connected to the security node #2, the trustworthiness signaling and the trustworthiness data can be transmitted through the another node, so that the security node #2 provides a security function for each network node in the communication network.

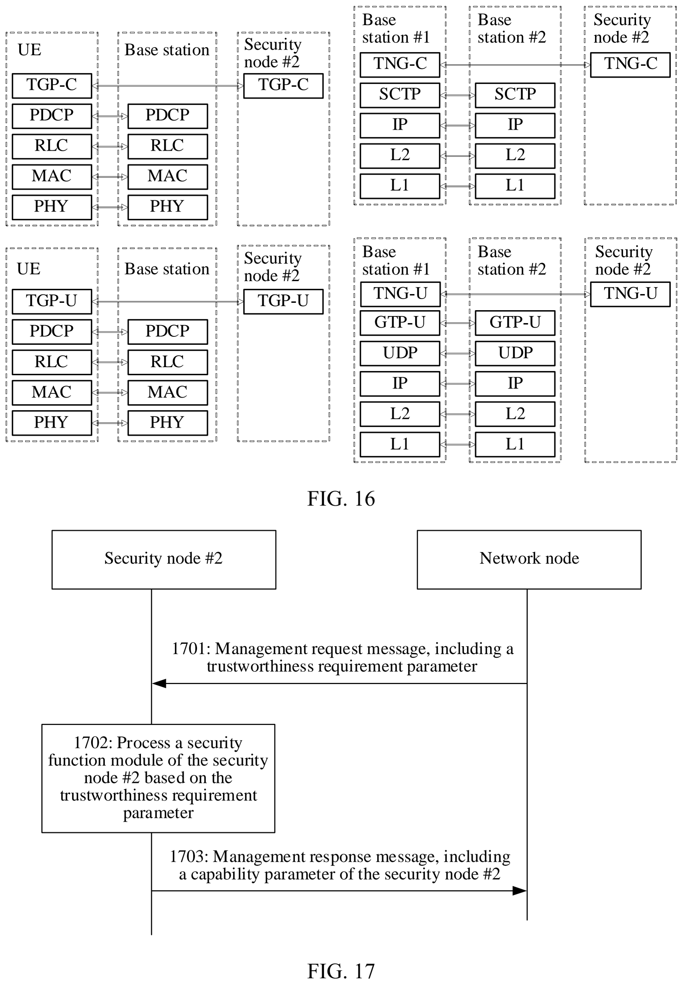

FIG. 16 is another diagram of trustworthiness protocol stacks between a security node #2 and a network node according to an embodiment of this application. In the example shown in FIG. 16, the security node #2 is connected to the network node through another node. As shown in FIG. 16, when the network node is UE, a base station transparently transmits trustworthiness signaling and trustworthiness data between the security node #2 and the UE. When the network node is a base station #1, another base station (for example, a base station #2) transparently transmits trustworthiness signaling and trustworthiness data between the security node #2 and the base station #1.

In an example, the trustworthiness data between the security node #2 and the network node includes one or more of the following: plaintext that needs to be encrypted by the network node, decrypted plaintext received by the network node, blockchain data that needs to be uploaded/downloaded by the network node, and situational awareness data collected by the security node #2 from the network node.

In an example, the trustworthiness signaling between the security node #2 and the network node may be used for one or more of the following functions:
establishment of a communication connection between the security node #2 and the network node: for example, matching and activation of the security node #2 and the network node;
notification of a trustworthiness requirement of the network node: for example, sending a trustworthiness requirement notification message by the network node to the security node #2, to notify the security node #2 of the trustworthiness requirement of the network node;
configuration, update, and deletion performed by the network node for the security node #2;
notification of a trustworthiness capability of the security node #2: for example, sending a trustworthiness capability notification message by the security node #2 to the network node, to notify the network node of the trustworthiness capability of the security node #2;
provision of a security negotiation result by the security node #2;
provision of an authentication capability, for example, an authentication result by the security node #2;
provision of an encryption/decryption capability, for example, an encryption/decryption result by the security node #2;
provision of an authorization capability, for example, an authorization result by the security node #2;
provision of a blockchain capability, for example, a result of data upload to a blockchain or data download from a blockchain by the security node #2;
provision of a situational awareness capability, for example, an awareness result by the security node #2; and
provision of a trustworthiness attestation capability, for example, an attestation result by the security node #2.

The following provides some examples.

FIG. 17 is a schematic flowchart of configuring a trustworthiness function by a security node #2 as required. As shown in FIG. 17, in an example, a procedure in which the security node #2 configures the trustworthiness function as required includes the following steps.

1701: A network node sends a management request message to the security node #2, where the management request message includes a trustworthiness requirement parameter; and the security node #2 receives the management request message.

The trustworthiness requirement parameter may be carried in a message of a trustworthiness protocol layer (for example, TNG-C).

1702: The security node #2 processes a security function module of the security node #2 based on the trustworthiness requirement parameter.

The security node #2 may process the security function module of the security node #2 at the trustworthiness protocol layer (for example, TNG-C) based on the trustworthiness requirement parameter.

1703: The security node #2 sends a management response message to the network node, where the management response message includes a capability parameter of the security node #2; and the network node receives the management response message.

The capability parameter of the security node #2 may be carried in a message of the trustworthiness protocol layer (for example, TNG-C).

Steps 1701 to 1703 are similar to steps 801 to 803. Details are not described herein again.

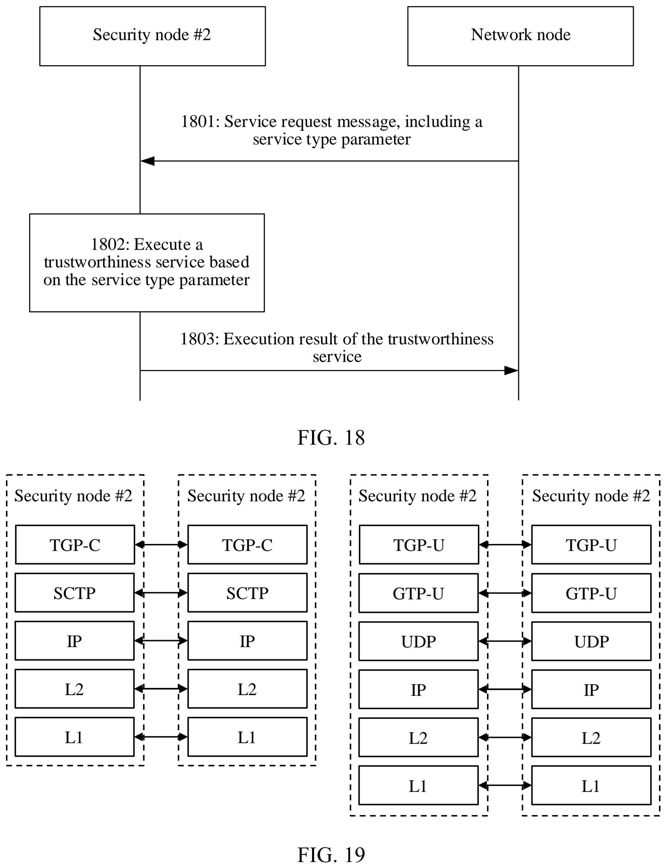

FIG. 18 is a schematic flowchart of providing a trustworthiness service by a security node #2. As shown in FIG. 18, in an example, a procedure in which the security node #2 provides the trustworthiness service includes the following steps.

1801: A network node sends a service request message to the security node #2, where the service request message includes a service type parameter; and the security node #2 receives the service request message.

The service type parameter may be carried in a message of a trustworthiness protocol layer (for example, TNG-C).

In an example, the service type parameter includes at least one of the following: authentication, blockchain establishment, trustworthiness attestation, encryption/decryption, and situational awareness.

1802: The security node #2 executes the trustworthiness service based on the service type parameter.

The security node #1 may execute the trustworthiness service at the trustworthiness protocol layer (for example, TNG-C).

1803: The security node #2 sends an execution result of the trustworthiness service to the network node, and the network node receives the execution result of the trustworthiness service.

The execution result of the trustworthiness service may be carried in a message of the trustworthiness protocol layer (for example, TNG-C).

Steps 1801 to 1803 are similar to steps 901 to 903. Details are not described herein again.

The foregoing is an example for description, and is not limited. For related content of trustworthiness signaling, a trustworthiness function, the trustworthiness service, and the like, refer to the foregoing related descriptions.

### IV. The trustworthiness protocol between security nodes #2:

Trustworthiness signaling and trustworthiness data can be transmitted between the security nodes #2. Therefore, the trustworthiness protocol may include a trustworthiness control plane protocol and a trustworthiness service plane protocol.

In a first possible case, the security nodes #2 are directly connected to each other. Based on this, the trustworthiness signaling and the trustworthiness data are directly transmitted between the security nodes #2.

FIG. 19 is a diagram of trustworthiness protocol stacks between security nodes #2 according to an embodiment of this application. In the example shown in FIG. 19, the security nodes #2 are directly connected to each other. As shown in FIG. 19, trustworthiness signaling is transmitted between the security nodes #2 by using a trustworthiness control plane protocol TGP-C, and trustworthiness data is transmitted between the security nodes #2 by using a trustworthiness service plane protocol TGP-U.

In a second possible case, the security nodes #2 are connected to each other through another node. Based on this, the trustworthiness signaling and the trustworthiness data are transmitted between the security nodes #2 through the another node.

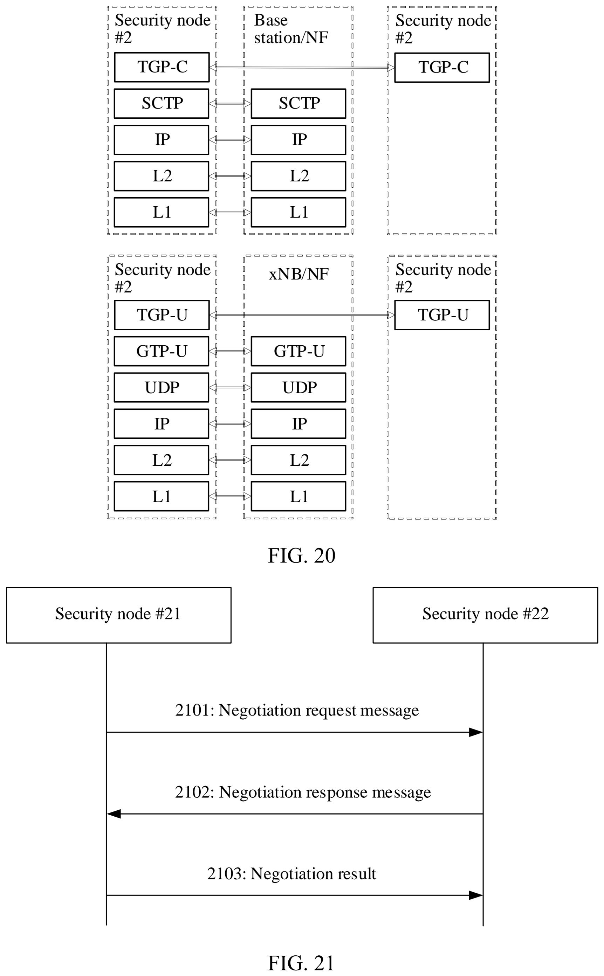

FIG. 20 is another diagram of trustworthiness protocol stacks between security nodes #2 according to an embodiment of this application. In the example shown in FIG. 20, the security nodes #2 are connected to each other through another node. As shown in FIG. 20, a base station or an NF transparently transmits trustworthiness signaling and trustworthiness data between the security nodes #2.

In an example, the trustworthiness data between the security nodes #2 includes one or more of the following: encrypted ciphertext, blockchain data (for example, synchronization data such as transactions/blocks of a blockchain), homomorphically encrypted ciphertext, and a homomorphic computation result.

In an example, the trustworthiness signaling between the security nodes #2 may be used for one or more of the following functions:
establishment of a communication connection between the security nodes #2: for example, sensing between the security nodes #2;
security policy negotiation and a key agreement between the security nodes #2;
provision of an authentication capability, for example, an authentication result, and an authentication parameter like a random number (rand) or an authentication response (res) by the security node #2;
provision of an authorization capability, for example, an authorization parameter like an authorization token (token) by the security node #2;
provision of a trustworthiness attestation capability, for example, an attestation result, an attestation parameter like a reference value (rv), a challenge (challenge), and evidence (evidence) by the security node #2; and
provision of subscription to the foregoing capability information and information about the security node #2 by the security node #2.

The following provides some examples.

FIG. 21 is a schematic flowchart of negotiation of a trustworthiness policy between security nodes #2. As shown in FIG. 21, a security node #21 and a security node #22 are used as an example. In an example, a procedure for negotiation of the trustworthiness policy between the security nodes #2 includes the following steps.

2101: The security node #21 sends a negotiation request (negotiation request) message to the security node #22, and the security node #22 receives the negotiation request message.

For example, the security node #21 sends a negotiation request message of a TGP-C protocol to the security node #22.

2102: The security node #22 sends a negotiation response (negotiation response) message to the security node #21, and the security node #21 receives the negotiation response message.

For example, the security node #22 sends a negotiation response message of the TGP-C protocol to the security node #21.

2103: The security node #21 sends a negotiation result to the security node #22, and the security node #22 receives the negotiation result.

The negotiation result may be carried in a message of the trustworthiness protocol layer (for example, TGP-C).

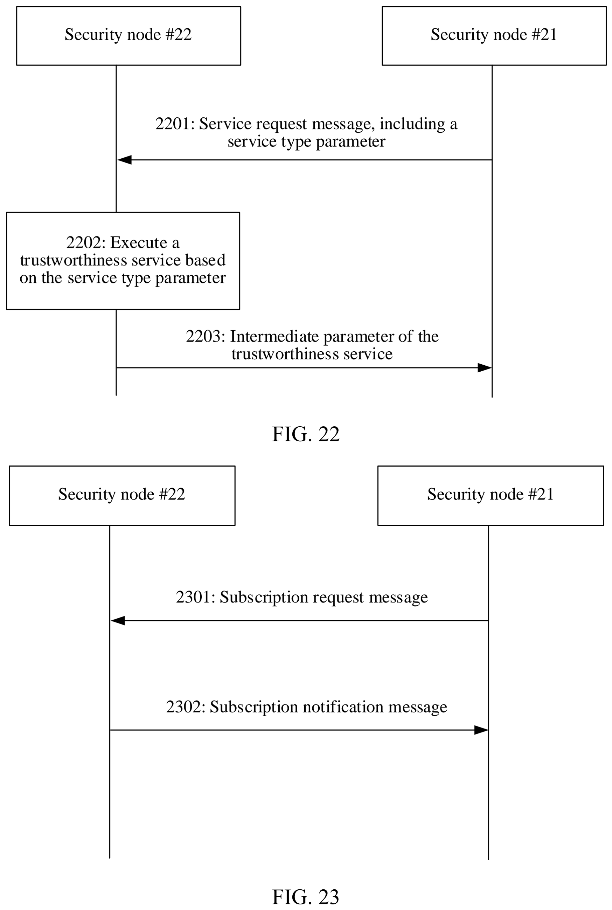

FIG. 22 is a schematic flowchart of providing a trustworthiness service by a security node #2. As shown in FIG. 22, a security node #21 and a security node #22 are used as an example. In an example, a procedure in which the security node #2 provides the trustworthiness service includes the following steps.

2201: The security node #21 sends a service request message to the security node #22, where the service request message includes a service type parameter; and the security node #22 receives the service request message.

The service type parameter may be carried in a message of a trustworthiness protocol layer (for example, TGP-C).

In an example, the service type parameter includes at least one of the following: authentication, blockchain establishment, trustworthiness attestation, encryption/decryption, and situational awareness.

2202: The security node #22 executes the trustworthiness service based on the service type parameter.

The security node #22 may execute the trustworthiness service at the trustworthiness protocol layer (for example, TGP-C).

2203: The security node #22 sends an intermediate parameter of the trustworthiness service to the security node #21, and the security node #21 receives the intermediate parameter of the trustworthiness service.

For example, the trustworthiness service is an authentication service, and the intermediate parameter of the trustworthiness service may be rand or res in an authentication process. For another example, the trustworthiness service is trustworthiness attestation, and the intermediate parameter of the trustworthiness service may be evidence in a trustworthiness attestation process.

The intermediate parameter of the trustworthiness service may be carried in a message of the trustworthiness protocol layer (for example, TGP-C).

FIG. 23 is a schematic flowchart of providing information subscription by a security node #2. As shown in FIG. 23, a security node #21 and a security node #22 are used as an example. In an example, a procedure in which the security node #2 provides the information subscription includes the following steps.

2301: The security node #21 sends a subscription request message to the security node #22, and the security node #22 receives the subscription request message.

For example, the security node #21 sends a subscription request message of a TGP-C protocol to the security node #22.

The subscription request message includes, for example, a type of trustworthiness information (for example, capability information of the security node #22) requested for subscription, and a subscription reason.

2302: The security node #22 sends a subscription notification message to the security node #21, and the security node #21 receives the subscription notification message.

For example, the security node #22 sends a subscription notification message of the TGP-C protocol to the security node #21.

The subscription notification message may indicate that the subscription is rejected or accepted.

For example, if the subscription is accepted, the subscription notification message includes trustworthiness information subscribed to by the security node #21. In other words, if the subscription notification message includes the trustworthiness information subscribed to by the security node #21, the trustworthiness information subscribed to may alternatively indirectly indicate that the security node #22 accepts the subscription. In addition, if the subscription is accepted, a provider may send a notification of the trustworthiness information to a subscriber when the trustworthiness information subscribed to changes, where the notification notifies the change of the trustworthiness information, and may carry output information, for example, changed trustworthiness information.

For another example, if the subscription is rejected, the subscription notification message includes a failure indication. Optionally, the subscription notification message includes a rejection reason parameter and the like.

The foregoing is an example for description, and is not limited. For related content of trustworthiness signaling, a trustworthiness function, a trustworthiness service, and the like, refer to the foregoing related descriptions.

### V. The trustworthiness protocol between a security node #1 and a security node #2:

Trustworthiness signaling and trustworthiness data can be transmitted between the security node #1 and the security node #2. Therefore, the trustworthiness protocol may include a trustworthiness control plane protocol and a trustworthiness service plane protocol.

In a first possible case, the security node #1 is directly connected to the security node #2. Based on this, the trustworthiness signaling and the trustworthiness data are directly transmitted between the security node #1 and the security node #2.

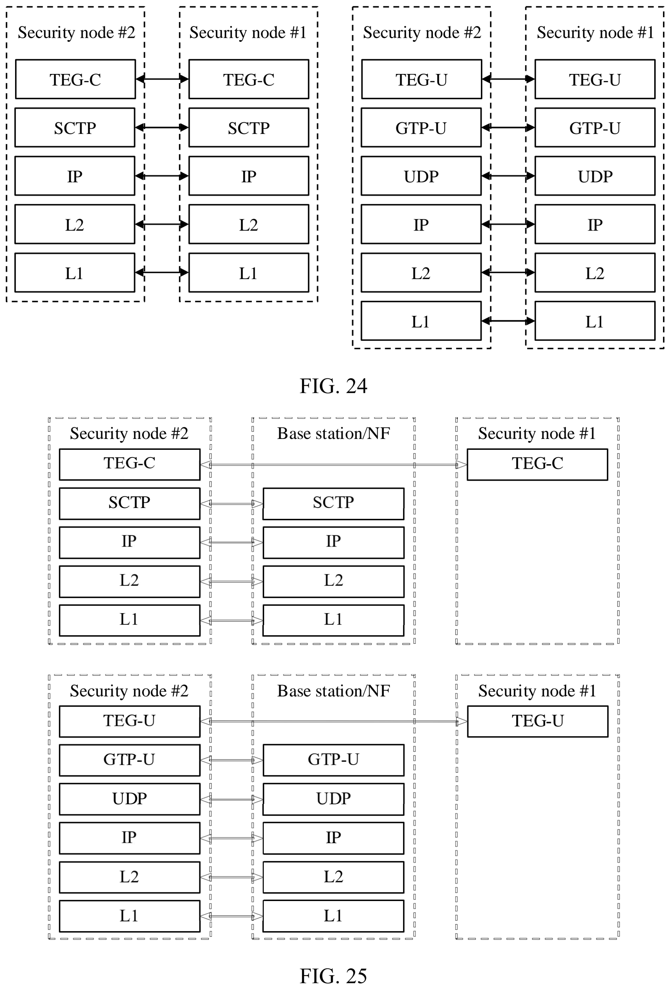

FIG. 24 is a diagram of trustworthiness protocol stacks between a security node #1 and a security node #2 according to an embodiment of this application. In the example shown in FIG. 24, the security node #1 is directly connected to the security node #2. As shown in FIG. 24, trustworthiness signaling is transmitted between the security node #1 and the security node #2 by using a trustworthiness control plane protocol TEG-C, and trustworthiness data is transmitted between the security node #1 and the security node #2 by using a trustworthiness service plane protocol TEG-U.

In a second possible case, the security node #1 is connected to the security node #2 through another node. Based on this, the trustworthiness signaling and the trustworthiness data are transmitted between the security node #1 and the security node #2 through the another node.

FIG. 25 is another diagram of trustworthiness protocol stacks between a security node #1 and a security node #2 according to an embodiment of this application. In the example shown in FIG. 25, the security node #1 is connected to the security node #2 through another node. As shown in FIG. 25, a base station or an NF transparently transmits trustworthiness signaling and trustworthiness data between the security node #1 and the security node #2.

In an example, the trustworthiness data between the security node #1 and the security node #2 includes data provided by the security node #2. For example, the security node #2 sends one or more of the following to the security node #1: situational awareness related data, homomorphic encryption related data, homomorphic computation related data, blockchain related data, or keys, and the security node #1 processes the one or more of the foregoing data.

In an example, the trustworthiness signaling between the security node #1 and the security node #2 may be used for one or more of the following functions:
establishment of a connection between the security node #1 and the security node #2: for example, sensing, registration, and deregistration of the security node #2;
notification of a network policy and capability information of the security node #1: for example, sending a notification message by the security node #1 to the security node #2, to notify the security node #2 of the capability information and/or the network policy of the security node #1;
management of the security node #2 by the security node #1: for example, establishment, update, or deletion;
blockchain capability control of the security node #2 by the security node #1: for example, blockchain creation, update, and deletion, blockchain/chain node management, and chain node identity management;
situational awareness control of the security node #2 by the security node #1, and provision of situational awareness configuration information: for example, information about to-be-sensed data (such as a data type, a data volume, and a data storage location), and a sensing method;
homomorphic control of the security node #2 by the security node #1: for example, key distribution and task configuration;
provision of a trustworthiness service, for example, an authentication result or an attestation result by the security node #1;
provision of an authentication capability, for example, an authentication result by the security node #2;
provision of a trustworthiness attestation capability, for example, an attestation result by the security node #2; and
provision of subscription to the foregoing capability information and information about the security node #2 by the security node #2: for example, provision of information subscribed to, including the capability information, an authentication result, a trustworthiness attestation result, and the like of the security node #2 by the security node #2 for the security node #1.

The following provides some examples.

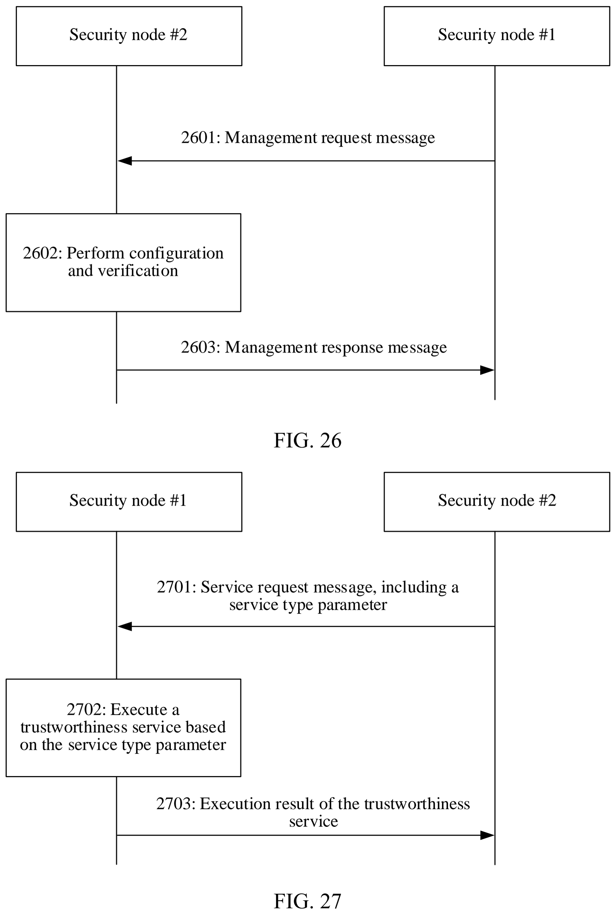

FIG. 26 is a schematic flowchart in which a security node #1 manages a security node #2. As shown in FIG. 26, in an example, a procedure in which the security node #1 manages the security node #2 includes the following steps.

2601: The security node #1 sends a management request message to the security node #2, and the security node #2 receives the management request message.

For example, the security node #1 sends a management request message of a TEG-C protocol to the security node #2.

In a possible case, the management request message includes management-related information. The management-related information includes, for example, one or more of the following: a network policy, capability information of the security node #1, and a profile of the security node #2 generated by the security node #1.

In another possible case, the management request message includes a service type that needs to be controlled and a configuration parameter. The service type that needs to be controlled includes, for example, blockchain, situational awareness, and homomorphism.

2602: The security node #2 performs configuration and verification.

The security node #2 may perform configuration and verification at the trustworthiness protocol layer (for example, TEG-C).

The security node #2 performs configuration and verification based on the management-related information provided by the security node #1. For example, the security node #2 performs configuration based on configuration information provided by the security node #1, for example, the profile of the security node #2. For another example, the security node #2 may verify an identity of the security node #1.

Optionally, the security node #2 may not perform verification. For example, the security node #2 has low security, or trusts the security node #1.

2603: The security node #2 sends a management response message to the security node #1, and the security node #1 receives the management response message.

For example, the security node #2 sends a management response message of the TEG-C protocol to the security node #1.

In a possible case, the management request message in step 2601 includes the management-related information, and the management response message in step 2603 includes the profile of the security node #2.

In another possible case, the management request message in step 2601 includes the service type that needs to be controlled and the configuration parameter, and the management response message in step 2603 includes a configuration result.

FIG. 27 is a schematic flowchart of providing a trustworthiness service by a security node #1. As shown in FIG. 27, in an example, a procedure in which the security node #1 provides the trustworthiness service includes the following steps.

2701: A security node #2 sends a service request message to the security node #1, where the service request message includes a service type parameter; and the security node #1 receives the service request message.

The service type parameter may be carried in a message of a trustworthiness protocol layer (for example, TEG-C).

2702: The security node #1 executes the trustworthiness service based on the service type parameter.

The security node #1 may execute the trustworthiness service at the trustworthiness protocol layer (for example, TEG-C).

2703: The security node #1 sends an execution result of the trustworthiness service to the security node #2, and the security node #2 receives the execution result of the trustworthiness service.

The execution result of the trustworthiness service may be carried in a message of the trustworthiness protocol layer (for example, TEG-C).

Steps 2701 to 2703 are similar to steps 901 to 903. Details are not described herein again.

FIG. 27 describes a solution in which the security node #1 provides the trustworthiness service. As described above, the security node #2 may also provide the trustworthiness service, for example, the security node #2 receives the service request message and executes the trustworthiness service based on the service type parameter. A solution in which the security node #2 provides the trustworthiness service is similar to the solution in which the security node #1 provides the trustworthiness service. Details are not described herein again.

The foregoing is an example for description, and is not limited. For related content of trustworthiness signaling, a trustworthiness function, the trustworthiness service, and the like, refer to the foregoing related descriptions.

The foregoing describes content related to the trustworthiness protocols, and the following describes related solutions for establishing connections between a security node and a network node.

In a possible implementation, the at least one network node includes a first network node, and that the first security node establishes the communication connection to the at least one network node includes: The first security node obtains identity information and/or address information of the first network node; and the first security node communicates the trustworthiness signaling and/or the trustworthiness data with the first network node based on the identity information and/or the address information of the first network node. Further, optionally, the first network node obtains identity information and/or address information of the first security node. In this way, the first network node may send trustworthiness signaling and/or trustworthiness data to the first security node based on the identity information and/or the address information of the first security node.

Identity information of a node indicates information that can be used to identify an identity of the node. In an example, the identity information of the node includes one or more of the following: a node ID, a network ID, a token, a license, and the like.

The node ID is used to identify the identity of the node. Optionally, a special ID may be designed for the node (for example, a security node or a network node), that is, an address of the node may be deduced by using the node ID. For example, there is a mapping relationship between an identifier of a node and an address of the node.

The network ID is an ID of a network that the node is to access or an ID of a network to which the node belongs. Different operators may use different network IDs.

The token or the license may be embedded by a device vendor before delivery of the node (for example, a security node or a network node), may be issued by an operator to the node by using a management plane, or may be issued by a core network NF to the node by using a control plane. The node that has the token or the license can prove that the node has been authorized by the device vendor/operator and can access a network. In an example, the token may include a plurality of parameters such as the node ID, a requested resource, and the like. In an example, the license includes a parameter used to indicate whether the device vendor/operator that issues the license allows the node to join a network.

For brevity, identity information and/or address information is referred to as a parameter #A for short.

The following separately provides descriptions by using examples in which the first security node is a security node #1 and a security node #2.

### I. The first security node is a security node #1.

In this scenario, the security node #1 may obtain the identity information and/or the address information of the first network node, and the first network node may also obtain identity information and/or address information of the security node #1, so that trustworthiness signaling and/or trustworthiness data can be transmitted between the security node #1 and the first network node.

Optionally, the security node #1 sends capability information of the security node #1, for example, a trustworthiness service available from the security node #1, to the first network node.

With reference to two scenarios in which the security node #1 and the network node are connected directly and with the assistance of a third party, the following describes an implementation in which the security node #1 and the network node obtain parameters #A.

Scenario 1: The security node #1 is directly connected to the network node.

In a first possible implementation, the first network node determines a parameter #A of the security node #1, and the security node #1 obtains a parameter #A of the first network node from the first network node.

In this manner, the network node may determine a parameter #A of a security node (for example, the security node #1). In this way, the network node may send a message to the security node based on the parameter #A of the security node, for example, provide the parameter #A of the network node for the security node, so that the security node and the network node can establish a communication connection, and then can transmit trustworthiness signaling and/or trustworthiness data to each other.

In an example, this manner is applicable to a scenario in which the network node and the security node (for example, the security node #1) can directly communicate with each other.

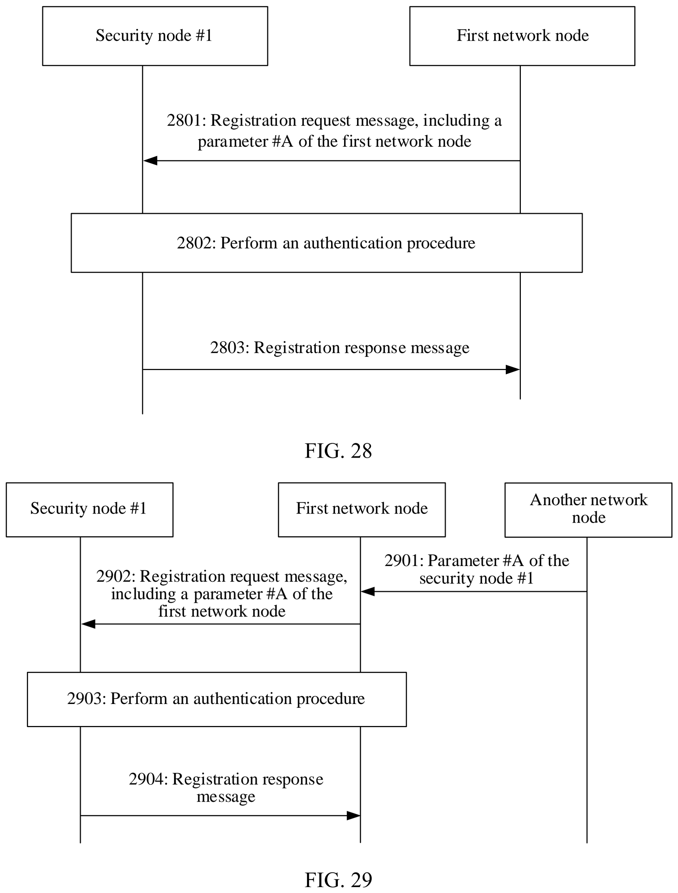

FIG. 28 is a schematic flowchart of establishing a communication connection between a security node #1 and a network node. In an example, a procedure for establishing the communication connection between the security node #1 and the network node includes the following steps.

2801: The first network node sends a registration request (registration request) message to the security node #1, where the registration request message includes a parameter #A of the first network node; and the security node #1 receives the registration request message.

The parameter #A of the first network node may be carried in a message of a trustworthiness protocol layer (for example, TNE-C).

For example, after the first network node joins a network, a management plane configures a parameter #A of the security node #1 for the first network node. Then, the first network node may send the registration request message to the security node #1 by using the parameter #A of the security node #1.

2802: The security node #1 and the first network node perform an authentication procedure.

In an example, an identity of a node is verified by using a node ID. For example, the security node #1 stores a list of valid network node IDs, and verifies validity of the identity of the node by comparing the received parameter #A with the list.

A specific authentication manner is not limited in embodiments of this application. For example, the authentication manner may be an authentication and key agreement (authentication and key agreement, AKA) or an extensible authentication protocol-AKA (extensible authentication protocol-AKA, EAP-AKA).

2803: The security node #1 sends a registration response (registration response) message to the first network node, and the first network node receives the registration response message.

For example, the security node #1 sends a registration response message of the TNE-C protocol to the first network node.

Optionally, the registration response message includes the capability information of the security node #1, for example, the trustworthiness service available from the security node #1.

In a second possible implementation, the first network node determines a parameter #A of the security node #1, and the security node #1 determines a parameter #A of the first network node.

In this manner, the network node may determine a parameter #A of a security node (for example, the security node #1), and the security node may determine the parameter #A of the first network node, so that the security node and the network node can establish a communication connection, and then can transmit trustworthiness signaling and/or trustworthiness data to each other.

In an example, this manner is applicable to a scenario in which the network node and the security node can directly communicate with each other.

For example, after the first network node joins a network, a management plane configures the parameter #A of the security node #1 for the first network node, and also configures the parameter #A of the first network node for the security node #1. Then, the security node #1 can directly communicate with the first network node. It can be understood that in this case, a registration procedure may not be performed between the security node #1 and the first network node.

In a third possible implementation, the first network node obtains a parameter #A of the security node #1 from the security node #1, and the security node #1 determines a parameter #A of the first network node.

In this manner, a security node (for example, the security node #1) may determine the parameter #A of the network node. In this way, the security node may send a message to the network node based on the parameter #A of the network node, for example, provide the parameter #A of the security node for the network node, so that the security node and the network node can establish a communication connection, and then can transmit trustworthiness signaling and/or trustworthiness data to each other.

In an example, this manner is applicable to a scenario in which the network node and the security node (for example, the security node #1) can directly communicate with each other. Further, this manner is applicable to a scenario in which the security node can obtain a parameter #A of each network node in a network.

For example, after the first network node joins a network, the security node #1 obtains the parameter #A of the first network node, and initiates an authentication procedure to the newly joined first network node. After the authentication, the first network node can obtain the parameter #A of the security node #1. Optionally, the security node #1 stores capability information of the first network node. It can be understood that in this case, a registration procedure may not be performed between the security node #1 and the first network node.

In an example, that the security node #1 obtains the parameter #A of the first network node includes: The security node #1 obtains network topology information from a known network node in real time through situational awareness, to obtain the parameter #A of the first network node. Alternatively, that the security node #1 obtains the parameter #A of the first network node includes: The network node periodically reports a connection status of the network node to the security node #1, so that the security node #1 can obtain the parameter #A of the first network node after the first network node joins the network.

Scenario 2: The security node #1 and the network node establish a connection with the assistance of a third party.

In a fourth possible implementation, the first network node obtains a parameter #A of the security node #1 from another node (for example, another network node or a management node), and the security node #1 obtains a parameter #A of the first network node from the first network node.

In this manner, the network node may learn a parameter of a security node (for example, the security node #1) from another node, and may send a message to the security node based on the parameter of the security node, for example, provide a parameter #A of the network node for the security node. Therefore, even if the security node and the network node may not be able to directly communicate with each other, the security node and the network node can establish a communication connection in this manner, and then can transmit trustworthiness signaling and/or trustworthiness data to each other.

In an example, this manner is applicable to a scenario in which it is difficult for the network node and the security node (for example, the security node #1) to directly communicate with each other.

FIG. 29 is another schematic flowchart of establishing a communication connection between a security node #1 and a network node. In an example, a procedure for establishing the communication connection between the security node #1 and the network node includes the following steps.

2901: The first network node obtains a parameter #A of the security node #1 from another network node, and the another network node receives the parameter #A of the security node #1.

For example, after joining a network, the first network node obtains the parameter #A of the security node #1 from the another network node (for example, an adjacent network node of the first network node). Then, the first network node may send a registration request message to the security node #1 by using the parameter #A of the security node #1.

2902: The first network node sends the registration request message to the security node #1, where the registration request message includes a parameter #A of the first network node; and the security node #1 receives the registration request message.

For example, the first network node sends a registration request message of a TNE-C protocol to the security node #1.

2903: The security node #1 and the first network node perform an authentication procedure.

2904: The security node #1 sends a registration response message to the first network node, and the first network node receives the registration response message.

For example, the security node #1 sends a registration response message of the TNE-C protocol to the first network node.

Steps 2902 to 2904 are similar to steps 2801 to 2803. Details are not described herein again.

In a fifth possible implementation, the first network node notifies the security node #1 of a parameter #A of the first network node via another node (for example, another network node or a management node), and the security node #1 notifies the first network node of a parameter #A of the security node #1 via the another node.

In this manner, the network node and a security node (for example, the security node #1) may exchange respective parameters #A through another node. In this way, if the network node and the security node cannot directly communicate with each other in the communication network, the network node and the security node can establish a communication connection in this manner, so that the security node provides a security function for the communication network.

In an example, this manner is applicable to a scenario in which it is difficult for the network node and the security node (for example, the security node #1) to directly communicate with each other. Further, this manner is applicable to a scenario in which both the network node and the security node have a communication connection with another node.

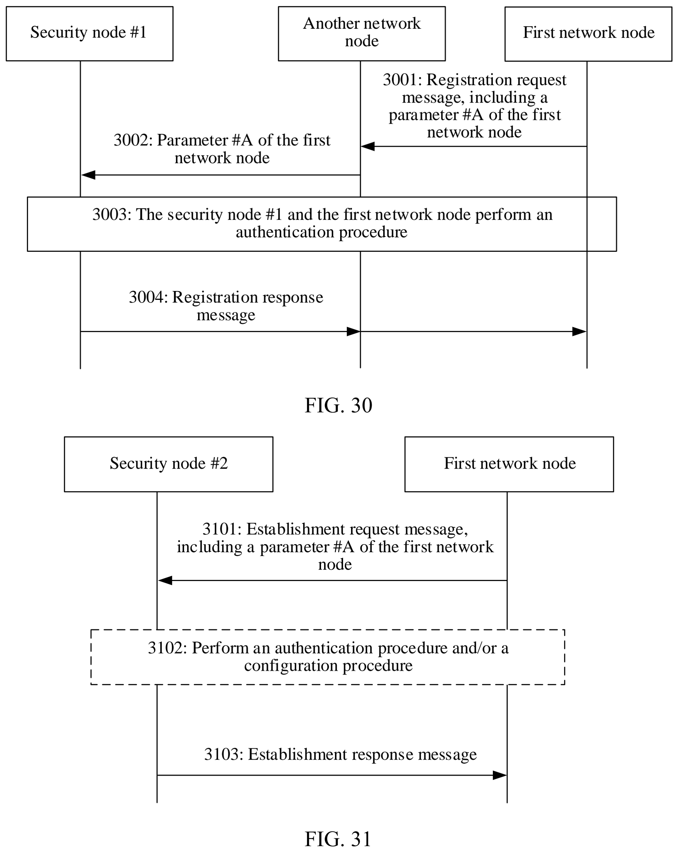

FIG. 30 is another schematic flowchart of establishing a communication connection between a security node #1 and a network node. In an example, a procedure for establishing the communication connection between the security node #1 and the network node includes the following steps.

3001: The first network node sends a registration request message to another network node, where the registration request message includes a parameter #A of the first network node; and the another network node receives the registration request message.

3002: The another network node sends the parameter #A of the first network node to the security node #1, and the security node #1 receives the parameter #A of the first network node.

The parameter #A of the first network node may be carried in a message of a trustworthiness protocol layer (for example, TNE-C).

3003: The security node #1 and the first network node perform an authentication procedure.

3004: The security node #1 sends a registration response message to the first network node through the another network node, and the first network node receives the registration response message.

Optionally, the registration response message includes the capability information of the security node #1, for example, the trustworthiness service available from the security node #1.

### II. The first security node is a security node #2.

In this scenario, the security node #2 may obtain the identity information and/or the address information of the first network node, and the first network node may also obtain identity information and/or address information of the security node #2, so that trustworthiness signaling and/or trustworthiness data can be transmitted between the security node #2 and the first network node.

Optionally, the security node #2 sends capability information of the security node #2, for example, a trustworthiness service available from the security node #2, to the first network node.

With reference to two scenarios in which the security node #2 and the network node are connected directly and with the assistance of a third party, the following describes an implementation in which the security node #2 and the network node obtain parameters #A. For beneficial effects and applicable scenarios of various manners in the following, refer to related descriptions of the connection between the security node #1 and the network node. For brevity, details are not described herein again.

Scenario 1: The security node #2 is directly connected to the network node.

In a first possible implementation, the first network node determines a parameter #A of the security node #2, and the security node #2 obtains a parameter #A of the first network node from the first network node.

FIG. 31 is a schematic flowchart of establishing a communication connection between a security node #2 and a network node. In an example, a procedure for establishing the communication connection between the security node #2 and the network node includes the following steps.

3101: The first network node sends an establishment request message to the security node #2, where the establishment request message includes a parameter #A of the first network node; and the security node #2 receives the establishment request message.

The parameter #A of the first network node may be carried in a message of a trustworthiness protocol layer (for example, TNG-C).

For example, after the first network node joins a network, a management plane configures a parameter #A of the security node #2 for the first network node. Then, the first network node may send the establishment request message to the security node #2 by using the parameter #A of the security node #2.

Optionally, the establishment request message further includes a trustworthiness requirement parameter of the first network node.

Optionally, in 3102, the security node #2 and the first network node perform an authentication procedure and/or a configuration procedure.

The security node #2 may verify an identity of the first network node. Alternatively, the security node #2 may not verify an identity of the first network node. For example, the security node #2 trusts an identity parameter sent by the first network node. For another example, the security node #2 has a low security level, and may not perform verification.

Optionally, if the establishment request message includes the trustworthiness requirement parameter of the first network node, the security node #2 may perform configuration based on the trustworthiness requirement parameter of the first network node, for example, activate or disable some security function modules of the security node #2.

3103: The security node #2 sends an establishment response message to the first network node, and the first network node receives the establishment response message.

For example, the security node #2 sends an establishment response message of the TNG-C protocol to the first network node.

Optionally, the establishment response message includes the capability information of the security node #2, for example, the trustworthiness service available from the security node #2.

In a second possible implementation, the first network node determines a parameter #A of the security node #2, and the security node #2 determines a parameter #A of the first network node.

For example, after the first network node joins a network, a management plane configures the parameter #A of the security node #2 for the first network node, and also configures the parameter #A of the first network node for the security node #2. Then, the security node #2 can directly communicate with the first network node. It can be understood that in this case, an establishment procedure may not be performed between the security node #2 and the first network node.

Scenario 2: The security node #2 and the network node establish a connection with the assistance of a third party.

In a first possible case, the third party is the security node #1, that is, the security node #2 and the first network node establish a connection with the assistance of the security node #1.

In a third possible implementation, the first network node obtains a parameter #A of the security node #2 from the security node #1, and the security node #2 obtains a parameter #A of the first network node from the first network node.

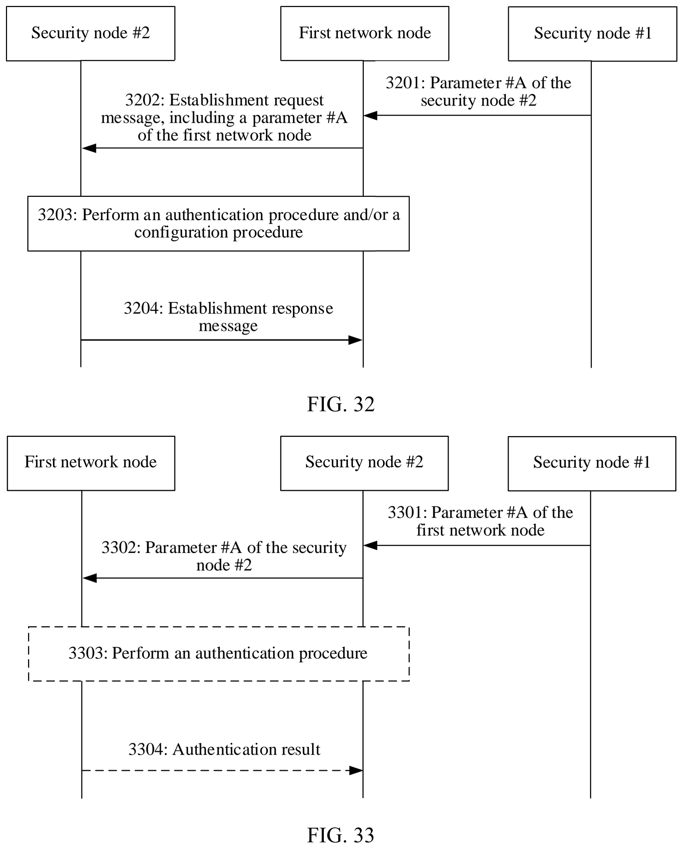

FIG. 32 is another schematic flowchart of establishing a communication connection between a security node #2 and a network node. In an example, a procedure for establishing the communication connection between the security node #2 and the network node includes the following steps.

3201: The first network node obtains a parameter #A of the security node #2 from a security node #1.

For example, after establishing a connection to the security node #1, the first network node requests the parameter #A of the security node #2 from the security node #1, and the security node #1 sends the parameter #A of the security node #2 to the first network node based on the request of the first network node. For another example, after the first network node establishes a connection to the security node #1, the security node #1 actively sends the parameter #A of the security node #2 to the first network node.

3202: The first network node sends an establishment request message to the security node #2, where the establishment request message includes a parameter #A of the first network node; and the security node #2 receives the establishment request message.

The parameter #A of the first network node may be carried in a message of a trustworthiness protocol layer (for example, TNG-C).

3203: The security node #2 and the first network node perform an authentication procedure and/or a configuration procedure.

3204: The security node #2 sends an establishment response message to the first network node, and the first network node receives the establishment response message.

For example, the security node #2 sends an establishment response message of the TNG-C protocol to the first network node.

Steps 3202 to 3204 are similar to steps 3101 to 3103. Details are not described herein again.

In a fourth possible implementation, the security node #2 obtains a parameter #A of the first network node from the security node #1, and the first network node obtains a parameter #A of the security node #2 from the security node #2.

FIG. 33 is another schematic flowchart of establishing a communication connection between a security node #2 and a network node. In an example, a procedure for establishing the communication connection between the security node #2 and the network node includes the following steps.

3301: The security node #2 obtains a parameter #A of the first network node from a security node #1.

For example, after the first network node establishes a connection to the security node #1, the security node #1 sends the parameter #A of the first network node to the security node #2. The parameter #A of the first network node may be carried in a message of a trustworthiness protocol layer (for example, TEG-C).

3302: The security node #2 sends a parameter #A of the security node #2 to the first network node, and the first network node receives the parameter #A of the security node #2.

The parameter #A of the security node #2 may be carried in a message of a trustworthiness protocol layer (for example, TNG-C).

Optionally, the security node #2 further sends the capability information of the security node #2, for example, the trustworthiness service available from the security node #2, to the first network node.

Optionally, in 3303, the first network node performs an authentication procedure.

For example, the first network node may verify whether a capability of the security node #2 meets a trustworthiness requirement of the first network node.

Optionally, in 3304, the first network node returns an authentication result to the security node #2, and the security node #2 receives the authentication result.

The authentication result may be carried in a message of the trustworthiness protocol layer (for example, TNG-C).

If the verification by the first network node fails, for example, the capability of the security node #2 cannot meet the trustworthiness requirement of the first network node, in step 3204, the authentication result returned by the first network node to the security node #2 may include the trustworthiness requirement of the first network node.

In a second possible case, the third party is another node (for example, another network node or a management node), that is, the security node #2 and the first network node establish a connection with the assistance of the another node. The following provides descriptions mainly by using an example in which the another node is a network node.

In a fifth possible implementation, the first network node obtains a parameter #A of the security node #2 from another network node, and the security node #2 obtains a parameter #A of the first network node from the first network node.

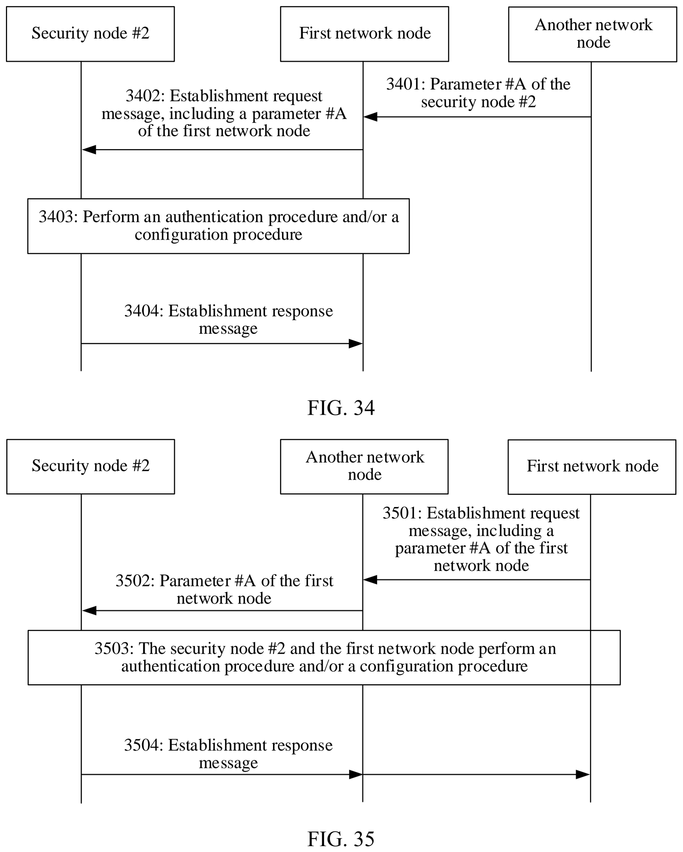

FIG. 34 is another schematic flowchart of establishing a communication connection between a security node #2 and a network node. In an example, a procedure for establishing the communication connection between the security node #2 and the network node includes the following steps.

3401: The first network node obtains a parameter #A of the security node #2 from another network node, and the another network node receives the parameter of the security node #2.

3402: The first network node sends an establishment request message to the security node #2, where the establishment request message includes a parameter #A of the first network node; and the security node #2 receives the establishment request message.

The parameter #A of the first network node may be carried in a message of a trustworthiness protocol layer (for example, TNG-C).

3403: The security node #2 and the first network node perform an authentication procedure and/or a configuration procedure.

3404: The security node #2 sends an establishment response message to the first network node, and the first network node receives the establishment response message.

For example, the security node #2 sends an establishment response message of the TNG-C protocol to the first network node.

Steps 3401 to 3404 are similar to steps 2901 to 2904. Details are not described herein again.

In a sixth possible implementation, the first network node notifies the security node #2 of a parameter #A of the first network node via another network node, and the security node #2 notifies the first network node of a parameter #A of the security node #2 via the another node.

FIG. 35 is another schematic flowchart of establishing a communication connection between a security node #2 and a network node. In an example, a procedure for establishing the communication connection between the security node #2 and the network node includes the following steps.

3501: The first network node sends an establishment request message to another network node, where the establishment request message includes a parameter #A of the first network node; and the another network node receives the establishment request message.

3502: The another network node sends the parameter #A of the first network node to the security node #2, and the security node #2 receives the parameter #A of the first network node.

The parameter #A of the first network node may be carried in a message of a trustworthiness protocol layer (for example, TNG-C).

3503: The security node #2 and the first network node perform an authentication procedure and/or a configuration procedure.

3504: The security node #2 sends an establishment response message to the first network node through the another node, and the first network node receives the establishment response message.

Optionally, the establishment response message includes the capability information of the security node #2, for example, the trustworthiness service available from the security node #2.

The foregoing describes the connections between a security node and a network node, and the following describes connections between security nodes.

Optionally, the communication network further includes a second security node, and the method further includes: The first security node communicates trustworthiness signaling and/or trustworthiness data with the second security node. The second security node may include a security node #1 and/or a security node #2.

Further, optionally, the first security node obtains identity information and/or address information of the second security node. Further, optionally, the second security node obtains the identity information and/or the address information of the first security node, so that trustworthiness signaling and/or trustworthiness data can be transmitted between the first security node and the second security node.

The following separately provides descriptions by using examples in which the first security node is a security node #1 and a security node #2, and the second security node is a security node #1 and a security node #2.
I. The first security node is a security node #1 (referred to as a security node #11 for differentiation), and the second security node is a security node #1 (referred to as a security node #12 for differentiation).

In this scenario, the security node #11 may obtain identity information and/or address information of the security node #12, and the security node #12 may also obtain identity information and/or address information of the security node #11, so that trustworthiness signaling and/or trustworthiness data can be transmitted between the security node #11 and the security node #12.

Optionally, the security node #11 sends capability information of the security node #11 to the security node #12, for example, a trustworthiness service available from the security node #11, and the security node #12 sends capability information of the security node #12 to the security node #11, for example, a trustworthiness service available from the security node #12.

The following provides descriptions with reference to two scenarios in which the security nodes #1 are connected directly and with the assistance of a third party.

Scenario 1: The security node #11 is directly connected to the security node #12.

In a first possible implementation, the security node #12 determines a parameter #A of the security node #11, and the security node #11 obtains a parameter #A of the security node #12 from the security node #12.

In this manner, security nodes (for example, security nodes #1) can establish a communication connection, and then transmit trustworthiness signaling and/or trustworthiness data to each other.

In an example, this manner is applicable to a scenario in which the security nodes (for example, the security nodes #1) can directly communicate with each other.

In an example, authentication and registration procedures are not performed between the security node #11 and the security node #12.

For example, after the security node #12 joins a network, a management plane configures a parameter #A of another security node #1 (including at least the security node #11) for the security node #12, and the security node #12 sends a notification message to the another security node #1, where the message includes the parameter #A of the security node #12. Optionally, the message further includes the capability information of the security node #12. Further, optionally, the another security node returns capability information of the another security node to the security node #12. Further, optionally, the another security node stores the capability information of the security node #12.

In another example, authentication and registration procedures are performed between the security node #11 and the security node #12. For example, the security node #12 is a lower-layer security node, and the security node #11 is an upper-layer security node.

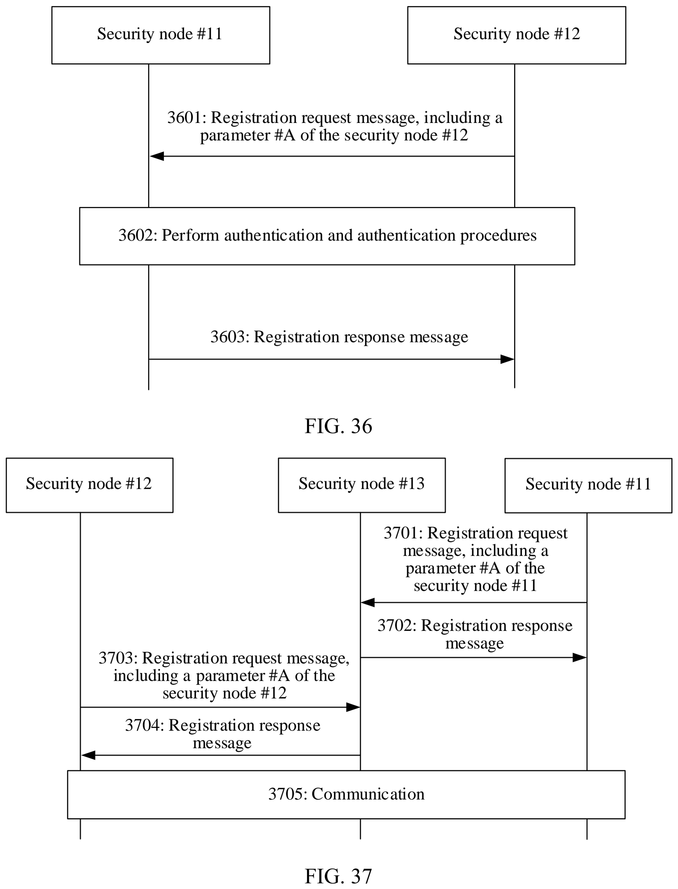

FIG. 36 is a schematic flowchart of establishing a communication connection between security nodes #1. A security node #11 and a security node #12 are used as an example. A procedure for establishing the communication connection between the security nodes #1 includes the following steps.

3601: The security node #12 sends a registration request message to the security node #11, where the registration request message includes a parameter #A of the security node #12; and the security node #11 receives the registration request message.

The parameter #A of the security node #12 may be carried in a message of a trustworthiness protocol layer (for example, TEP).

3602: The security node #11 and the security node #12 perform registration and authentication procedures.

3603: The security node #11 sends a registration response message to the security node #12, and the security node #12 receives the registration response message.

For example, the security node #11 sends a registration response message of the TEP protocol to the security node #12.

Optionally, the registration response message includes one or more of the following: the capability information of the security node #11, for example, the trustworthiness service available from the security node #11, a network policy, and a configuration parameter (that is, a profile of the security node #12). The configuration parameter is used by the security node #12 to perform configuration.

Steps 3601 to 3603 are similar to steps 2801 to 2803. Details are not described herein again.

In a second possible implementation, the security node #12 determines a parameter #A of the security node #11, and the security node #11 determines a parameter #A of the security node #12.

In this manner, a security node (for example, a security node #1) may learn a parameter #A of another security node (for example, another security node #1), so that the security nodes can establish a communication connection, and then transmit trustworthiness signaling and/or trustworthiness data to each other.

In an example, this manner is applicable to a scenario in which the security nodes (for example, the security nodes #1) can directly communicate with each other.

For example, after the security node #12 joins a network, a management plane configures the parameter #A of the security node #11 for the security node #12, and also configures the parameter #A of the security node #12 for the security node #11. Then, the security node #11 can directly communicate with the security node #12. It can be understood that in this case, a registration procedure may not be performed between the security node #11 and the security node #12.

In a third possible implementation, the security node #12 obtains a parameter #A of the security node #11 from the security node #11, and the security node #11 determines a parameter #A of the security node #12.

In this manner, security nodes (for example, security nodes #1) can establish a communication connection, and then transmit trustworthiness signaling and/or trustworthiness data to each other.

In an example, this manner is applicable to a scenario in which the security nodes (for example, the security nodes #1) can directly communicate with each other.

For example, after the security node #12 joins a network, the security node #11 obtains the parameter #A of the security node #12, and initiates an authentication procedure to the newly joined security node #12. After the authentication, the security node #12 can obtain the parameter #A of the security node #11. Optionally, the security node #11 stores detailed information of the security node #12. It can be understood that in this case, a registration procedure may not be performed between the security node #11 and the security node #12.

In an example, that the security node #11 obtains the parameter #A of the security node #12 includes: The security node #11 obtains network topology information from a known network node in real time through situational awareness, to obtain the parameter #A of the security node #12. Alternatively, that the security node #11 obtains the parameter #A of the security node #12 includes: The network node periodically reports a connection status of the network node to the security node #11, so that the security node #11 can obtain the parameter #A of the security node #12 after the security node #12 joins the network.

In a fourth possible implementation, the security node #11 obtains a parameter #A of the security node #12 from a management node, and the security node #12 obtains a parameter #A of the security node #11 from the management node.

In this manner, a security node (for example, a security node #1) may learn a parameter #A of another security node from the management node, so that the security nodes can establish a communication connection, and then transmit trustworthiness signaling and/or trustworthiness data to each other.

In an example, this manner is applicable to a scenario in which the management node is responsible for managing parameters #A of the security nodes (for example, the security nodes #1).

In an example, the management node is a security node #1. For example, the network allocates a security node #1 (for example, referred to as a security node #13) as a centralized management node, and other security nodes #1 are all registered with the security node #13 and are managed and controlled by the security node #13. Subsequently, the security node #13 optionally sends a list of security nodes #1 to the other security nodes #1, where the list includes parameters #A of the security nodes #1 registered with the security node #13.

FIG. 37 is another schematic flowchart of establishing a communication connection between security nodes #1. A security node #11 and a security node #12 are used as an example. A procedure for establishing the communication connection between the security nodes #1 includes the following steps.

3701: The security node #11 sends a registration request message to a security node #13, where the registration request message includes a parameter #A of the security node #11; and the security node #13 receives the registration request message.

The parameter #A of the security node #11 may be carried in a message of a trustworthiness protocol layer (for example, TEP).

3702: The security node #13 sends a registration response message to the security node #11, and the security node #11 receives the registration response message.

The registration response message includes a parameter #A of a security node #1 (that is, the security node #1 registered with the security node #13).

3703: The security node #12 sends a registration request message to the security node #13, where the registration request message includes a parameter #A of the security node #12; and the security node #13 receives the registration request message.

The parameter #A of the security node #12 may be carried in a message of the trustworthiness protocol layer (for example, TEP).

3704: The security node #13 sends a registration response message to the security node #12, and the security node #12 receives the registration response message.

The registration response message includes a parameter #A of a security node #1 (that is, the security node #1 registered with the security node #13).

3705: The security node #11 and the security node #12 communicate with each other.

Optionally, the security node #11 and the security node #12 may first perform verification, and then communicate with each other. This is not limited.

In a fifth possible implementation, a blockchain including all security nodes #1 is constructed. Each time a new security node #1 is added, mutual sensing between all the security nodes #1 is implemented by using a peer-to-peer (peer-to-peer, P2P) protocol.

For example, a security node (for example, denoted as a security node #11) sends a security node IP address list 1 stored in the security node to all security nodes (for example, denoted as a security node #12 and a security node #13) connected to the security node. The security node #12 and the security node #13 compare a security node IP address list 2 stored in the security node #12 and a security node IP address list 3 stored in the security node #13 with the received security node IP address list 1, to supplement the security node IP address list 2 and the security node IP address list 3, and send the security node IP address list 2 and the security node IP address list 3 to all security nodes (for example, except the security node #11) connected to the security node #12 and the security node #13. After several iterations, all security nodes in the entire network can obtain IP addresses of all the security nodes.

In this manner, security nodes (for example, security nodes #1) can establish a communication connection, and then transmit trustworthiness signaling and/or trustworthiness data to each other.

In an example, this manner is applicable to a scenario in which the security nodes (for example, the security nodes #1) support a blockchain service.

Scenario 2: The security nodes #1 establish a connection with the assistance of a third party.

In a sixth possible implementation, the security node #12 obtains a parameter #A of the security node #11 from another node (for example, another network node or a management node), and the security node #11 obtains a parameter #A of the security node #12 from the security node #12.

In this manner, a security node (for example, a security node #1) may learn a parameter of another security node (for example, a security node #1) from another node, and may send a message to the another security node based on the parameter of the another security node, for example, provide a parameter #A of the security node for the another security node. Therefore, even if the security nodes may not be able to directly communicate with each other, the security nodes can establish a communication connection in this manner, and then the security nodes can transmit trustworthiness signaling and/or trustworthiness data to each other.

In an example, this manner is applicable to a scenario in which it is difficult for the security nodes (for example, the security nodes #1) to directly communicate with each other.

For this manner, refer to related descriptions in FIG. 29, provided that the first network node in FIG. 29 is replaced with the security node #12 and the security node #1 is replaced with the security node #11.

In a seventh possible implementation, the security node #12 notifies the security node #11 of a parameter #A of the security node #12 via another node (for example, another network node or a management node), and the security node #11 notifies the security node #12 of a parameter #A of the security node #11 via the another node.

In this manner, security nodes (for example, security nodes #1) may exchange respective parameters #A through another node. In this way, if the security nodes cannot directly communicate with each other in the communication network, the security nodes can establish a communication connection in this manner, so that the security node provides a security function for the communication network.

In an example, this manner is applicable to a scenario in which it is difficult for the security nodes (for example, the security nodes #1) to directly communicate with each other.

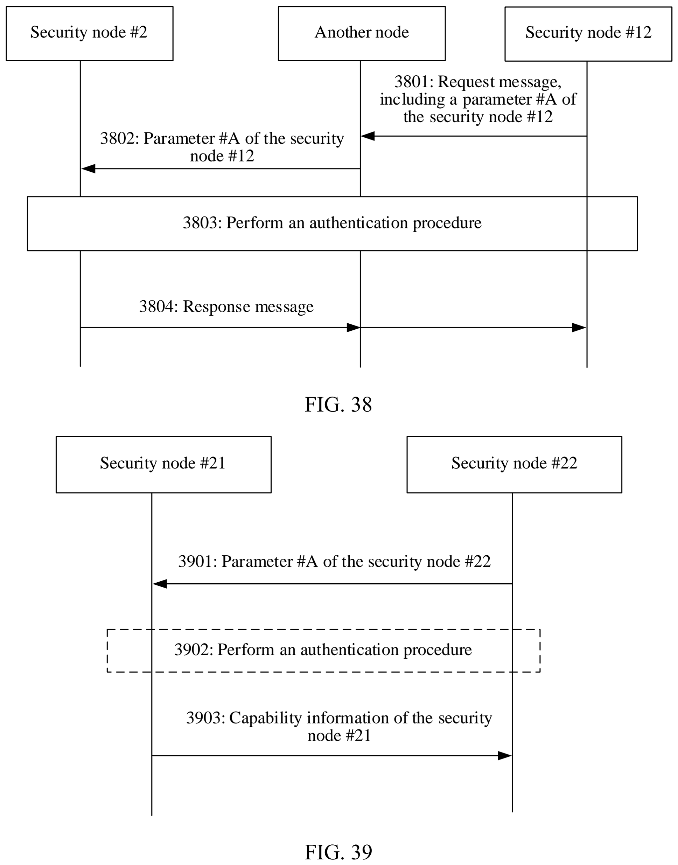

FIG. 38 is another schematic flowchart of establishing a communication connection between security nodes #1. In an example, a procedure for establishing the communication connection between the security nodes #1 includes the following steps.

3801: A security node #12 sends a request message to another node, where the request message includes a parameter #A of the security node #12; and the another node receives the request message.

For example, the another node is a network node. The parameter #A of the security node #12 may be carried in a message of a trustworthiness protocol layer (for example, TNE-C).

3802: The another node sends the parameter #A of the security node #12 to a security node #11, and the security node #11 receives the parameter #A of the security node #12.

For example, the another node is a network node. The parameter #A of the security node #12 may be carried in a message of the trustworthiness protocol layer (for example, TNE-C).

3803: The security node #11 and the security node #12 perform an authentication procedure.

3804: The security node #11 sends a response message to the security node #12 through the another node, and the security node #12 receives the response message.

Optionally, the response message includes the capability information of the security node #11, for example, the trustworthiness service available from the security node #11.

II. The first security node is a security node #2 (referred to as a security node #21 for differentiation), and the second security node is a security node #2 (referred to as a security node #22 for differentiation).

In this scenario, the security node #21 may obtain identity information and/or address information of the security node #22, and the security node #22 may also obtain identity information and/or address information of the security node #21, so that trustworthiness signaling and/or trustworthiness data can be transmitted between the security node #21 and the security node #22.

Optionally, the security node #21 sends capability information of the security node #21 to the security node #22, for example, a trustworthiness service available from the security node #21, and the security node #22 sends capability information of the security node #22 to the security node #21, for example, a trustworthiness service available from the security node #22.

The following provides descriptions with reference to two scenarios in which the security nodes #2 are connected directly and with the assistance of a third party.

Scenario 1: The security node #1 is directly connected to the network node.

In a first possible implementation, the security node #22 determines a parameter #A of the security node #21, and the security node #21 obtains a parameter #A of the security node #22 from the security node #22.

FIG. 39 is a schematic flowchart of establishing a communication connection between security nodes #2. In an example, a procedure for establishing the communication connection between the security nodes #2 includes the following steps.

3901: A security node #22 sends a parameter #A of the security node #22 to a security node #21, and the security node #21 receives the parameter #A of the security node #22.

The parameter #A of the security node #22 may be carried in a message of a trustworthiness protocol layer (for example, TGP-C).

For example, after the security node #22 joins a network, a management plane configures a parameter #A of the security node #21 for the security node #22. Then, the security node #22 may send a message to the security node #21 by using the parameter #A of the security node #21.

Optionally, the security node #22 further sends the capability information of the security node #22 to the security node #21.

Optionally, in 3902, the security node #21 and the security node #22 perform an authentication procedure.

In other words, the security node #21 verifies the security node #22.

3903: The security node #21 sends the capability information of the security node #21 to the security node #22, and the security node #22 receives the capability information of the security node #21.

The capability information of the security node #21 may be carried in a message of the trustworthiness protocol layer (for example, TGP-C).

In a second possible implementation, the security node #22 determines a parameter #A of the security node #21, and the security node #21 determines a parameter #A of the security node #22.

For example, after the security node #22 joins a network, a management plane configures the parameter #A of the security node #21 for the security node #22, and also configures the parameter #A of the security node #22 for the security node #21. Then, the security node #21 can directly communicate with the security node #22.

Scenario 2: The security nodes #2 establish a connection with the assistance of a third party.

In a first possible case, the third party is the security node #1, that is, the security nodes #2 establish a connection with the assistance of the security node #1.

In a third possible implementation, the security node #22 obtains a parameter #A of the security node #21 from the security node #1, and the security node #21 obtains a parameter #A of the security node #22 from the security node #22.

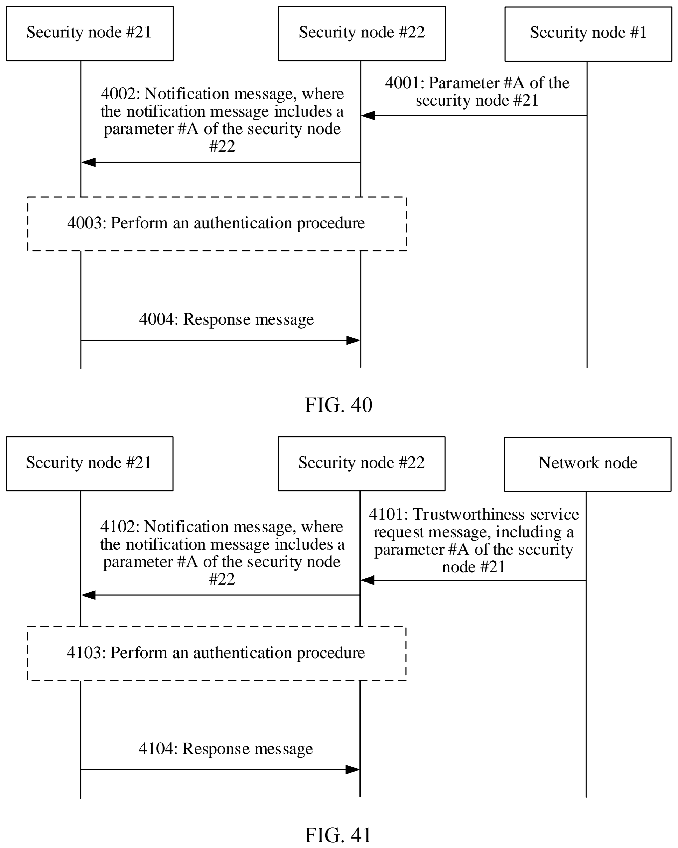

FIG. 40 is another schematic flowchart of establishing a communication connection between security nodes #2. In an example, a procedure for establishing the communication connection between the security nodes #2 includes the following steps.

4001: A security node #22 obtains a parameter #A of a security node #21 from a security node #1.

For example, after establishing a connection to the security node #1, the security node #22 requests the parameter #A of the security node #21 from the security node #1, and the security node #1 sends the parameter #A of the security node #21 to the security node #22 based on the request of the security node #22. Further, optionally, the security node #22 further sends a reason for requesting the parameter #A of the security node #21 to the security node #1.

For another example, after the security node #22 establishes a connection to the security node #1, the security node #1 actively sends the parameter #A of the security node #21 to the security node #22.

It can be understood that the security node #22 may obtain a parameter #A of a security node #2 from the security node #1, or may obtain parameters #A of all security nodes #2 connected to the security node #1. This is not limited.

4002: The security node #22 sends a notification message to the security node #21, where the notification message includes a parameter #A of the security node #22; and the security node #21 receives the notification message.

The parameter #A of the security node #22 may be carried in a message of a trustworthiness protocol layer (for example, TGP-C). Optionally, the notification message further includes the capability information of the security node #22, for example, the trustworthiness service available from the security node #22.

Optionally, in step 4003, the security node #21 and the security node #22 perform an authentication procedure.

In other words, the security node #21 verifies the security node #22.

4004: The security node #21 sends a response message to the security node #22, and the security node #22 receives the response message.

For example, the security node #21 sends a response message of the TGP-C protocol to the security node #22.

Optionally, the response message includes the parameter #A of the security node #21.

In a fourth possible implementation, the security node #22 obtains a parameter #A of the security node #21 from the security node #1, and the security node #21 obtains a parameter #A of the security node #22 from the security node #1.

For example, after security nodes #2 (for example, the security node #21 and the security node #22) establish a connection to the security node #1, the security node #1 sends, to the security nodes #2, information about all security nodes #2 registered with the security node #1, for example, parameters #A and/or capability information like available trustworthiness services. For another example, the security node #1 periodically sends a list of security nodes #2 to all security nodes #2 registered with the security node #1, and then the security nodes #2 can directly communicate with each other.

In a second possible case, the third party is the network node, that is, the security nodes #2 establish a connection with the assistance of the network node.

In a fifth possible implementation, the security node #22 obtains a parameter #A of the security node #21 from the network node, and the security node #21 obtains a parameter #A of the security node #22 from the security node #22.

FIG. 41 is another schematic flowchart of establishing a communication connection between security nodes #2. In an example, a procedure for establishing the communication connection between the security nodes #2 includes the following steps.

4101: A network node sends a trustworthiness service request message to a security node #22, where the trustworthiness service request message includes a parameter #A of a security node #21; and the security node #22 receives the trustworthiness service request message.

The parameter #A of the security node #21 may be carried in a message of a trustworthiness protocol layer (for example, TGP-C).

4102: The security node #22 sends a notification message to the security node #21, where the notification message includes a parameter #A of the security node #22; and the security node #21 receives the notification message.

The parameter #A of the security node #22 may be carried in a message of the trustworthiness protocol layer (for example, TGP-C).

Optionally, the notification message includes the capability information of the security node #22, for example, the trustworthiness service available from the security node #22.

Optionally, in step 4103, the security node #21 and the security node #22 perform an authentication procedure.

In other words, the security node #21 verifies the security node #22.

4104: The security node #21 sends a response message to the security node #22, and the security node #22 receives the response message.

For example, the security node #21 sends a response message of the TGP-C protocol to the security node #22.

Optionally, the response message includes the capability information of the security node #21, for example, the trustworthiness service available from the security node #21.

III. The first security node is a security node #1, and the second security node is a security node #2.

In this scenario, the security node #1 may obtain identity information and/or address information of the security node #2, and the security node #2 may also obtain identity information and/or address information of the security node #1, so that trustworthiness signaling and/or trustworthiness data can be transmitted between the security node #1 and the security node #2.

Optionally, the security node #1 sends capability information of the security node #1 to the security node #2, for example, a trustworthiness service available from the security node #1, and the security node #2 sends capability information of the security node #2 to the security node #1, for example, a trustworthiness service available from the security node #2.

After obtaining the trustworthiness service available from the security node #2, the security node #1 may perform some security-related operations. In an example, the security node #1 may verify, based on the trustworthiness service available from the security node #2, whether the security node #2 meets a requirement of a network trustworthiness policy. In another example, the security node #1 may request a security function from the security node #2 in subsequent communication based on the trustworthiness service available from the security node #2. In still another example, when performing a security function that needs participation of a plurality of nodes, the security node #1 may perform configuration for each security node #2 based on a trustworthiness service available from the security node #2. For example, a plurality of nodes establish a blockchain, and the security node #1 determines, based on a capability of each security node #2, which security node #2 is a full node/light node/client. For another example, during homomorphic encryption, the security node #1 determines which security node #2 is a computation party, which security node #2 is an encryption party, and the like. In yet another example, the security node #1 may generate, based on capability information of each security node #2, a network trustworthiness policy that matches a trustworthiness function of the security node #2.

With reference to two scenarios in which the security node #1 and the security node #2 are connected directly and with the assistance of a third party, the following describes an implementation in which the security node #1 and the security node #2 obtain parameters #A.

Scenario 1: The security node #1 establishes a connection to the security node #2.

In a first possible implementation, the security node #2 determines a parameter #A of the security node #1, and the security node #1 obtains a parameter #A of the security node #2 from the security node #2.

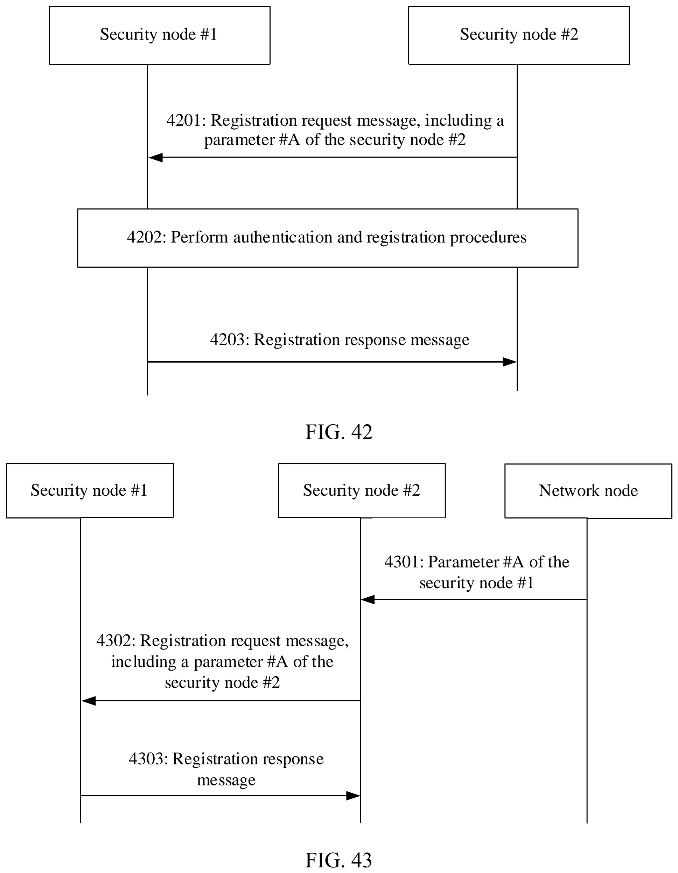

FIG. 42 is a schematic flowchart of establishing a communication connection between a security node #1 and a security node #2. In an example, a procedure for establishing the communication connection between the security node #1 and the security node #2 includes the following steps.

4201: The security node #2 sends a registration request message to the security node #1, where the registration request message includes a parameter #A of the security node #2; and the security node #1 receives the registration request message.

The parameter #A of the security node #2 may be carried in a message of a trustworthiness protocol layer (for example, TEG-C).

For example, after the security node #2 joins a network, a management plane configures a parameter #A of the security node #1 for the security node #2. Then, the security node #2 may send the registration request message to the security node #1 by using the parameter #A of the security node #1.

4202: The security node #1 and the security node #2 perform authentication and registration procedures.

4203: The security node #1 sends a registration response message to the security node #2, and the security node #2 receives the registration response message.

For example, the security node #1 sends a registration response message of the TEG-C protocol to the security node #2.

Optionally, the registration response message includes the capability information of the security node #1, for example, the trustworthiness service available from the security node #1.

In a second possible implementation, the security node #2 determines a parameter #A of the security node #1, and the security node #1 determines a parameter #A of the security node #2.

For example, after the security node #2 joins a network, a management plane configures the parameter #A of the security node #1 for the security node #2, and also configures the parameter #A of the security node #2 for the security node #1. Then, the security node #1 can directly communicate with the security node #2. It can be understood that in this case, a registration procedure may not be performed between the security node #1 and the security node #2.

Scenario 2: The security node #1 and the security node #2 establish a connection with the assistance of a third party.

In a third possible implementation, the security node #2 obtains a parameter #A of the security node #1 from another node (for example, network node or a management node), and the security node #1 obtains a parameter #A of the security node #2 from the security node #2.

FIG. 43 is another schematic flowchart of establishing a communication connection between a security node #1 and a security node #2. In an example, a procedure for establishing the communication connection between the security node #1 and the security node #2 includes the following steps.

4301: The security node #2 obtains a parameter #A of the security node #1 from a network node.

For example, after the security node #2 establishes a connection to the network node, the security node #2 requests the parameter #A of the security node #1 from the network node, or the network node actively sends the parameter #A of the security node #1. Then, the security node #2 may send a registration request message to the security node #1 by using the parameter #A of the security node #1.

It can be understood that, an example in which the security node #2 obtains the parameter #A of the security node #1 from the network node is mainly used for description herein. This is not limited. For example, a network node may be replaced with another node like a management node. For example, the security node #2 requests the parameter #A of the security node #1 from the management node, or the management node actively sends the parameter #A of the security node #1.

4302: The security node #2 sends a registration request message to the security node #1, where the registration request message includes a parameter #A of the security node #2; and the security node #1 receives the registration request message.

The parameter #A of the security node #2 may be carried in a message of a trustworthiness protocol layer (for example, TEG-C).

4303: The security node #1 sends a registration response message to the security node #2, and the security node #2 receives the registration response message.

For example, the security node #1 sends a registration response message of the TEG-C protocol to the security node #2.

In a fourth possible implementation, the security node #1 obtains a parameter #A of the security node #2 from another node (for example, another network node or a management node), and the security node #2 obtains a parameter #A of the security node #1 from the security node #1.

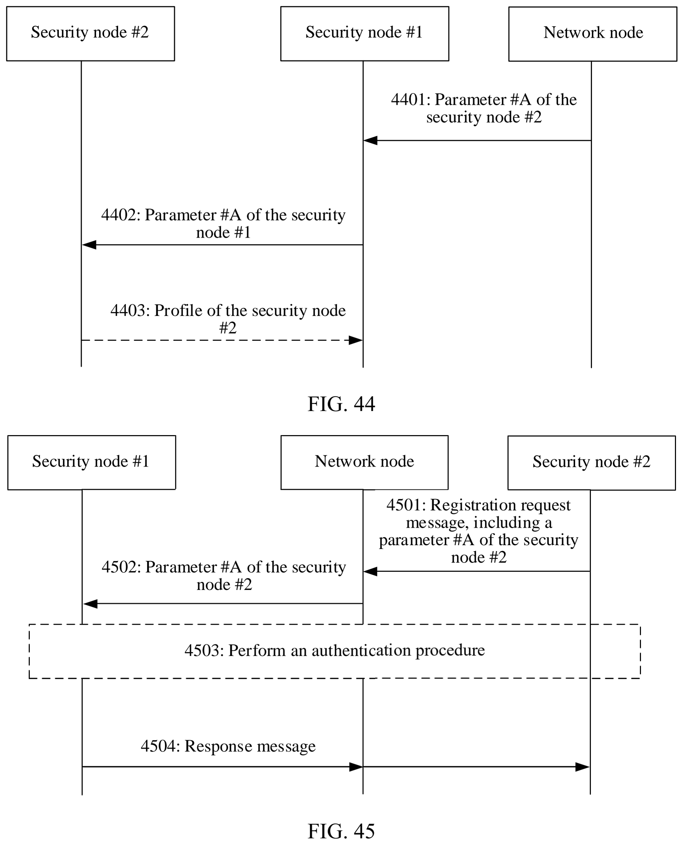

FIG. 44 is another schematic flowchart of establishing a communication connection between a security node #1 and a security node #2. In an example, a procedure for establishing the communication connection between the security node #1 and the security node #2 includes the following steps.

4401: A network node sends a parameter #A of the security node #2 to the security node #1, and the security node #1 receives the parameter #A of the security node #2.

The parameter #A of the security node #2 may be carried in a message of a trustworthiness protocol layer (for example, TNE-C).

For example, after the security node #2 establishes a connection to the network node, the network node sends information about the security node #2 to the security node #1. The information about the security node #2 includes the parameter of the security node #2. Optionally, the information about the security node #2 includes the capability information of the security node #2, for example, the trustworthiness service available from the security node #2.

4402: The security node #1 sends a parameter #A of the security node #1 to the security node #2, and the security node #2 receives the parameter #A of the security node #1.

The parameter #A of the security node #1 may be carried in a message of a trustworthiness protocol layer (for example, TEG-C).

Optionally, the security node #1 further sends the capability information of the security node #1, for example, the trustworthiness service available from the security node #1, to the security node #2.

Optionally, in 4403, the security node #2 sends a profile of the security node #2 to the security node #1, and the security node #1 receives the profile of the security node #2.

In a fifth possible implementation, the security node #2 notifies the security node #1 of a parameter #A of the first network node via another node (for example, another network node or a management node), and the security node #1 notifies the security node #2 of a parameter #A of the security node #1 via the another node.

FIG. 45 is another schematic flowchart of establishing a communication connection between a security node #1 and a security node #2. In an example, a procedure for establishing the communication connection between the security node #1 and the security node #2 includes the following steps.

4501: The security node #2 sends a registration request message to a network node, where the registration request message includes a parameter #A of the security node #2; and the network node receives the registration request message.

The parameter #A of the security node #2 may be carried in a message of a trustworthiness protocol layer (for example, TNG-C).

For example, after the security node #2 establishes a connection to the network node, the security node #2 sends the registration request message to the network node. Optionally, the registration request message includes the capability information of the security node #2, for example, the trustworthiness service available from the security node #2.

4502: The network node sends the parameter #A of the security node #2 to the security node #1, and the security node #1 receives the parameter #A of the security node #2.

The parameter #A of the security node #2 may be carried in a message of a trustworthiness protocol layer (for example, TNE-C).

Optionally, in step 4503, the security node #1 and the security node #2 perform an authentication procedure.

4504: The security node #1 sends a registration response message to the security node #2 through the network node, and the security node #2 receives the registration response message.

Optionally, the registration response message includes the capability information of the security node #1, for example, the trustworthiness service available from the security node #1.

The foregoing describes related solutions of the trustworthiness protocol stacks of the security nodes, the connections between a security node and a network node, and the connections between security nodes. The following describes specific application of security nodes by using trustworthiness attestation and a post quantum cryptography (post quantum cryptography, PQC) algorithm as examples.

In trustworthiness attestation, entities that participate in the trustworthiness attestation are classified into an attester (attester) and a verifier (verifier). When the verifier needs to obtain a trustworthiness status of the attester, the verifier generates a challenge (challenge) and sends the challenge to the attester. The attester generates trustworthiness attestation evidence (evidence) based on the challenge, and returns the evidence. The verifier compares the evidence with a reference value (reference value, RV) to verify the trustworthiness attestation evidence, and determines, based on a verification result, whether the attester is trustworthy, to obtain an attestation result (attestation result, AR).

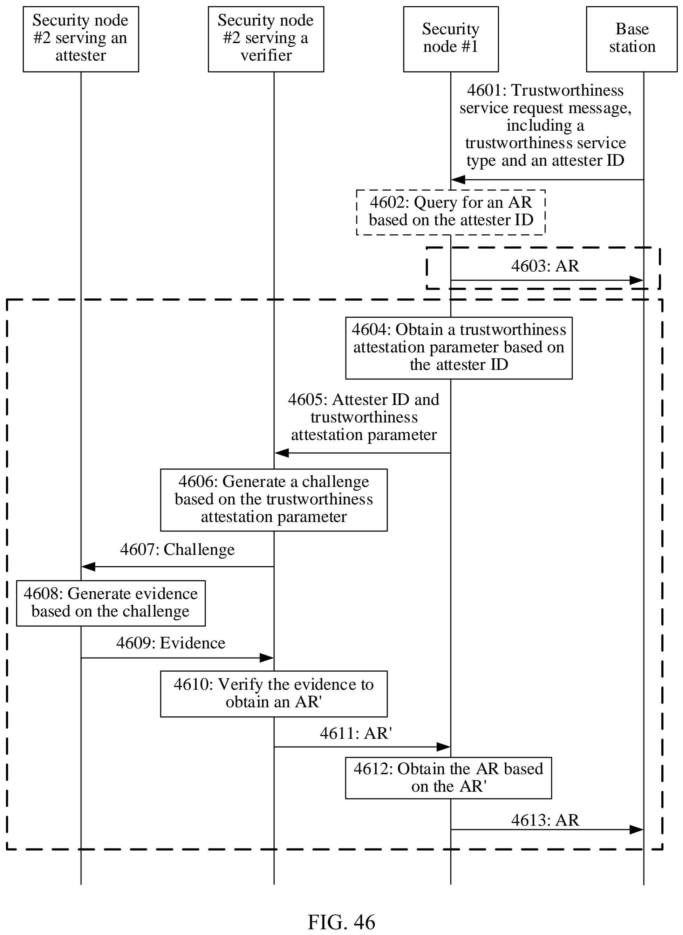

FIG. 46 is a schematic flowchart of trustworthiness attestation according to an embodiment of this application. As shown in FIG. 46, a procedure for the trustworthiness attestation may include the following steps.

4601: A base station sends a trustworthiness service request message to a security node #1, where the trustworthiness service request message includes a trustworthiness service type and an attester ID; and the security node #1 receives the trustworthiness service request message.

The trustworthiness service type is trustworthiness attestation.

In an example, an attester may be any device that includes a dedicated hardware module (for example, a trusted platform module (trusted platform module, TPM)). A form of the attester is not limited in this application.

Optionally, in 4602, the security node #1 queries for an AR based on the attester ID.

For example, the security node #1 locally queries for the AR based on the attester ID, or obtains the AR from a blockchain.

In a possible case, the security node #1 finds the AR based on the attester ID. In this case, the method includes step 4603: The security node #1 sends the AR to the base station.

In another possible case, the security node #1 does not find the AR based on the attester ID. In this case, the method includes step 4604 to step 4614.

4604: The security node #1 obtains a trustworthiness attestation parameter based on the attester ID.

In an example, the trustworthiness attestation parameter includes a PK and/or an RV corresponding to the attester.

In a possible implementation, the security node #1 stores a correspondence, where the correspondence includes a relationship between an attester ID and a trustworthiness attestation parameter corresponding to the attester ID. In this way, the security node #1 can obtain, based on the received attester ID and the stored correspondence, the trustworthiness attestation parameter corresponding to the attester ID.

In another possible implementation, the security node #1 may request, from another node based on the attester ID, the trustworthiness attestation parameter corresponding to the attester ID. The another node stores a correspondence, where the correspondence includes a relationship between an attester ID and a trustworthiness attestation parameter corresponding to the attester ID.

The correspondence may exist in a form of a table, a function, a character string, or the like for storage, transmission, or the like.

4605: The security node #1 sends the attester ID and the trustworthiness attestation parameter to a security node #2 serving a verifier, and the security node #2 serving the verifier receives the attester ID and the trustworthiness attestation parameter.

For example, the security node #1 sends a message of a TEG-C protocol to the security node #2 serving the verifier, where the message includes the attester ID and the trustworthiness attestation parameter.

4606: The security node #2 serving the verifier generates a challenge based on the trustworthiness attestation parameter.

In an example, a generation manner may be generation based on the public key (public key, PK) of the attester, or generation based on a random number, a timestamp, or the like.

4607: The security node #2 serving the verifier sends the challenge to a security node #2 serving the attester, and the security node #2 serving the attester receives the challenge.

For example, the security node #2 serving the verifier sends a message of a TGP-C protocol to the security node #2 serving the attester, where the message includes the challenge.

4608: The security node #2 serving the attester generates evidence based on the challenge.

For example, the security node #2 serving the attester may use the challenge and information generated by the device (for example, hash values of files that are sequentially started when the device boots up) as algorithm input parameters, and process these inputs to obtain evidence, that is, output parameters are the evidence.

4609: The security node #2 serving the attester sends the evidence to the security node #2 serving the verifier, and the security node #2 serving the verifier receives the evidence.

For example, the security node #2 serving the attester sends a message of the TGP-C protocol to the security node #2 serving the verifier, where the message includes the evidence.

4610: The security node #2 serving the verifier verifies the evidence to obtain an AR'.

4611: The security node #2 serving the verifier sends the AR' to the security node #1, and the security node #1 receives the AR'.

For example, the security node #2 serving the verifier sends a message of the TEG-C protocol to the security node #1, where the message includes the AR'.

4612: The security node #1 obtains the AR based on the AR'.

In a possible case, the security node #1 sends the AR' as a final attestation result to the base station.

In another possible case, the security node #1 processes the AR' to obtain a final attestation result AR. For example, the AR' is signed by using a PK of the security node #2 by the security node #2 serving the verifier. After receiving the AR', the security node #1 verifies the signature of the security node #2 serving the verifier, obtains a raw attestation result by removing the signature, and adds an attestation result AR that is signed by using a PK of the security node #1. Generally, the security node #2 may be registered with the security node #1, and therefore the security node #1 can verify the signature of the security node #2. The base station may know a signature of the security node #1, but does not know PKs of other security nodes #2 (that is, security nodes #2 other than a security node #2 that serves the base station). In this case, the base station can verify the signature of the security node #1. Therefore, the final attestation result provided by the security node #1 for the base station may be a result obtained through signature by using the PK of the security node #1.

Optionally, the security node #1 stores the AR.

4613: The security node #1 sends the AR to the base station, and the base station receives the AR.

The foregoing describes the trustworthiness attestation solution. According to the foregoing solution, the security node #1 and the security nodes #2 can perform the trustworthiness attestation. In addition, the security node #1 and the security node #2 provide a trustworthiness attestation service, so that security is higher; and the network node does not need to participate in processing these parameters, so that energy consumption and overheads of the network node are reduced.

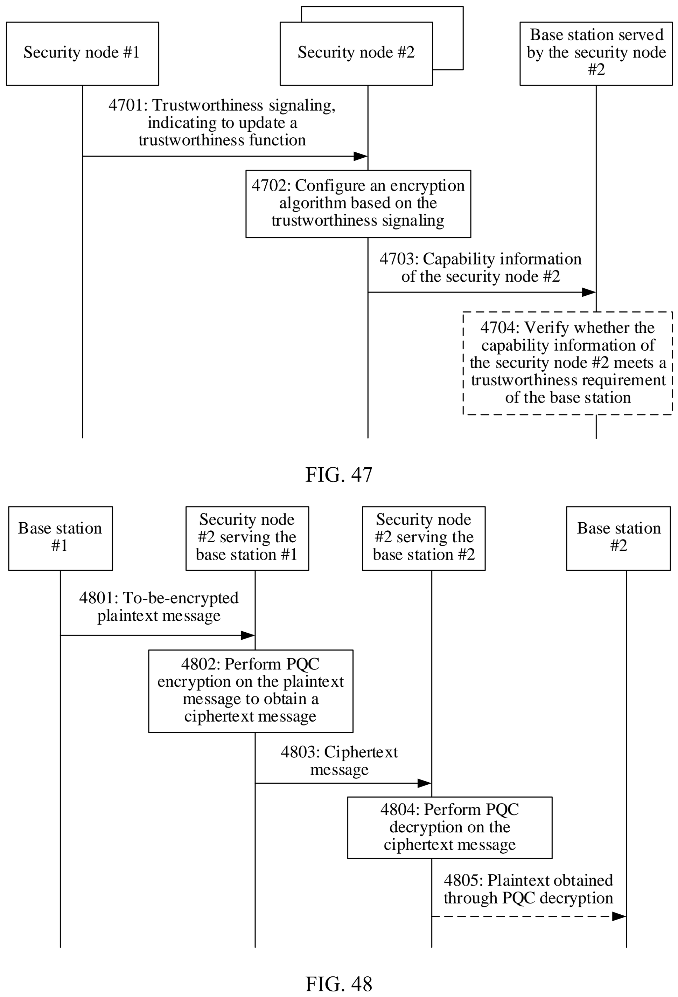

FIG. 47 is a schematic flowchart of configuring an encryption algorithm according to an embodiment of this application. As shown in FIG. 47, a procedure for configuring a PQC may include the following steps.

4701: A security node #1 sends trustworthiness signaling to at least one security node #2, where the trustworthiness signaling indicates to update a trustworthiness function; and the at least one security node #2 receives the trustworthiness signaling.

For example, the security node #1 triggers an update procedure, and sends a management request message of a TEG-C protocol to the at least one security node #2, to request to update the trustworthiness function. In this embodiment of this application, the trustworthiness signaling indicates to update a cryptographic module, for example, add one or more encryption algorithms like a PQC algorithm, a homomorphic encryption algorithm, or the like.

4702: The security node #2 configures an encryption algorithm based on the trustworthiness signaling.

For example, in step 4701, the trustworthiness signaling indicates to add a PQC algorithm, and in step 4702, the security node #2 configures the PQC algorithm.

4703: The security node #2 sends capability information of the security node #2 to a base station served by the security node #2, and the base station served by the security node #2 receives the capability information of the security node #2.

Specifically, the capability information of the security node #2 is updated. Therefore, a notification message of a TNG-C protocol may be sent to the base station served by the security node #2, to notify new capability information of the security node #2.

Optionally, in 4704, the base station verifies whether the capability information of the security node #2 meets a trustworthiness requirement of the base station.

According to the foregoing solution, the encryption algorithm (for example, the PQC algorithm) may be added to a communication network, so that a threat caused by quantum computing in the communication network can be reduced by using the encryption algorithm.

The following describes application of the encryption algorithm by using as an example in which the encryption algorithm is the PQC algorithm. It can be understood that the PQC algorithm described below may be replaced with another encryption algorithm. This is not limited.

FIG. 48 is a schematic flowchart of application of a PQC algorithm. As shown in FIG. 48, a procedure for the application of the PQC algorithm may include the following steps.

4801: A base station #1 sends a to-be-encrypted plaintext message to a security node #2 serving the base station #1, and the security node #2 serving the base station #1 receives the to-be-encrypted plaintext message.

That the encryption algorithm is the PQC algorithm is used as an example. For example, when receiving a PQC task between the base station #1 and a base station #2, the base station #1 may send, by using a TNG-U protocol, the to-be-encrypted plaintext message to the security node #2 serving the base station #1.

4802: The security node #2 serving the base station #1 performs PQC encryption on the plaintext message to obtain a ciphertext message.

4803: The security node #2 serving the base station #1 sends the ciphertext message to a security node #2 serving the base station #2, and the security node #2 serving the base station #2 receives the ciphertext message.

4804: The security node #2 serving the base station #2 performs PQC decryption on the ciphertext message.

Optionally, in 4805, the security node #2 serving the base station #2 sends, to the base station #2, plaintext obtained through PQC decryption, and the base station #2 receives the plaintext obtained through PQC decryption.

If the message sent by the base station #1 needs to be processed by the base station #2, the security node #2 serving the base station #2 may send, to the base station #2 by using the TNG-U protocol, the plaintext obtained through PQC decryption, and the base station #2 may process the plaintext after receiving the plaintext.

According to the foregoing technical solution, the security nodes #2 may perform PQC encryption and decryption on the data between the network nodes. In addition, the security node #1 and the security nodes #2 provide a PQC service, so that security is higher; and the network node does not need to participate in processing these parameters, so that energy consumption and overheads of the network node are reduced.

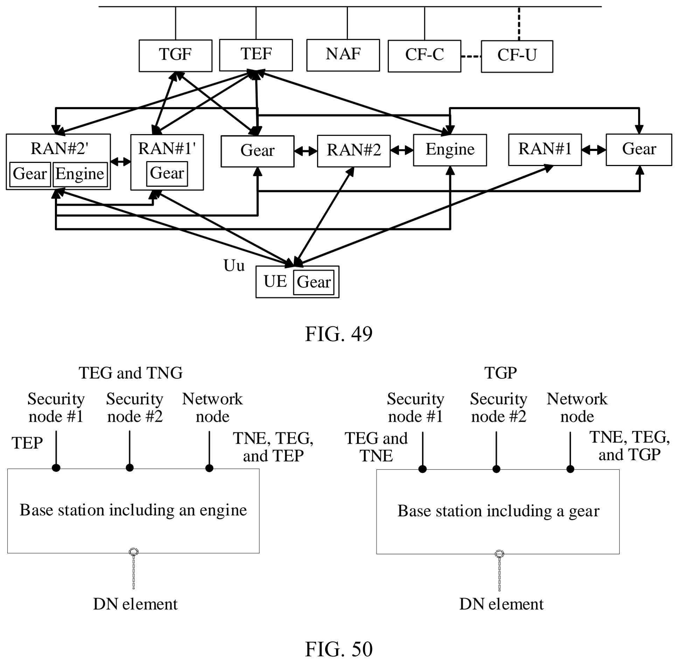

As described above, a security function module may also be deployed in a network node. In this case, a hybrid mode network architecture that includes both an independent security node #1 and an independent security node #2, and includes a network node including a security function module may exist in the communication network, as shown in FIG. 49.

FIG. 49 is a diagram of a hybrid mode network architecture. As shown in FIG. 49, a RAN#2' includes a security function module gear and a security function module engine, a RAN#1' includes a security function module gear, UE includes a security function module gear, and there are independent security nodes gear and engine in the architecture. It can be understood that the engine deployed on the network node has a same function as the independent engine, and a difference lies in a different deployment manner. The gears deployed on the network node also have a same function as the independent gears, and a difference lies in a different deployment manner.

FIG. 50 is diagrams of interfaces of nodes in a hybrid mode network architecture. The following provides descriptions with reference to different cases.

In a first possible case, a network node includes a security function module engine.

As shown in FIG. 50, a base station is used as an example. In an example, interface types of a base station including a security function module engine include the following interfaces:
(1) an interface with a security node #1: supporting a TEP protocol;
(2) an interface with a security node #2: supporting TEG and TNG protocols (if the base station also includes a security function module gear, the interface does not need to support the TNG protocol); and
(3) an interface with a network node: supporting TNE, TEG (if the peer node includes a security function module gear), and TEP (if the peer node includes a security function module engine).

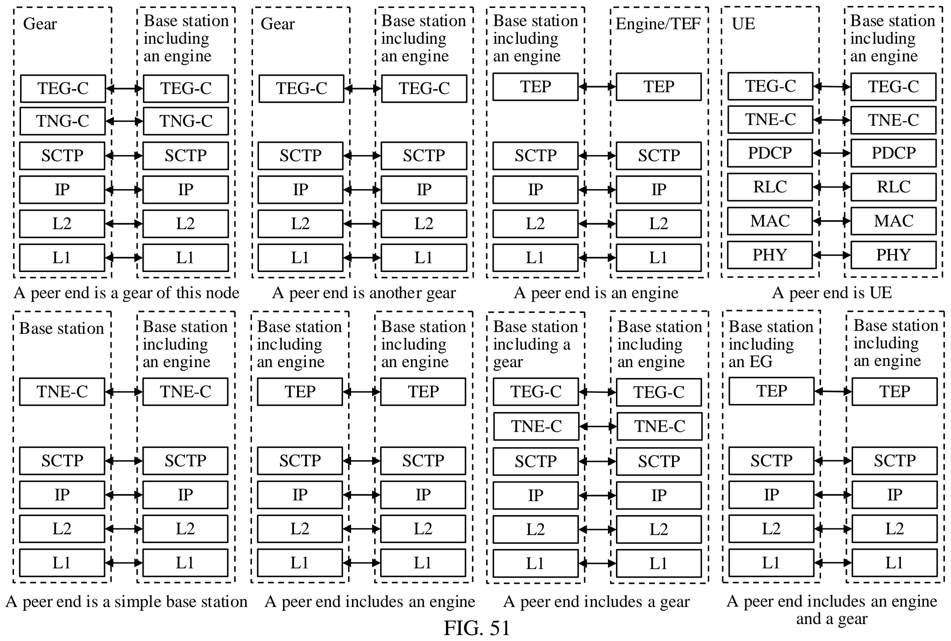

FIG. 51 is a diagram of trustworthiness protocol stacks of a base station including a security function module engine. In the figure, a base station including an engine represents a base station including a security function module engine, a base station including a gear represents a base station including a security function module gear, and a base station including an EG represents a base station including a security function module engine and a security function module gear. FIG. 51 shows a trustworthiness control plane protocol stack, which is similar to a trustworthiness service plane protocol stack. Details are not described herein again.

In a possible implementation, trustworthiness protocols may be located at different layers. In FIG. 51, a scenario in which a peer end is a security node #2 (namely, a gear) of this node is used as an example, and TEG and TNG are located at different layers. In an example, TEG is located above TNG. In this way, a security node #2 may first establish a connection to the base station by using the TEG protocol, and then the security node #2 communicates with the security function module engine in the base station.

In another possible implementation, trustworthiness protocols may be located at a same layer. In FIG. 51, a scenario in which a peer end is a security node #2 of this node is used as an example, and TEG and TNG may be located at a same layer. For ease of description, FIG. 51 shows only cases with different layers.

In a second possible case, a network node includes a security function module gear.

As shown in FIG. 50, a base station is used as an example. In an example, interface types of a base station including a security function module gear include the following interfaces:
(1) an interface with a security node #1: supporting TEG and TNE protocols;
(2) an interface with a security node #2: supporting a TGP protocol; and
(3) an interface with a network node: supporting TNE, TGP (if the peer node includes a security function module gear), and TEG protocols (if the peer node includes a security function module engine).

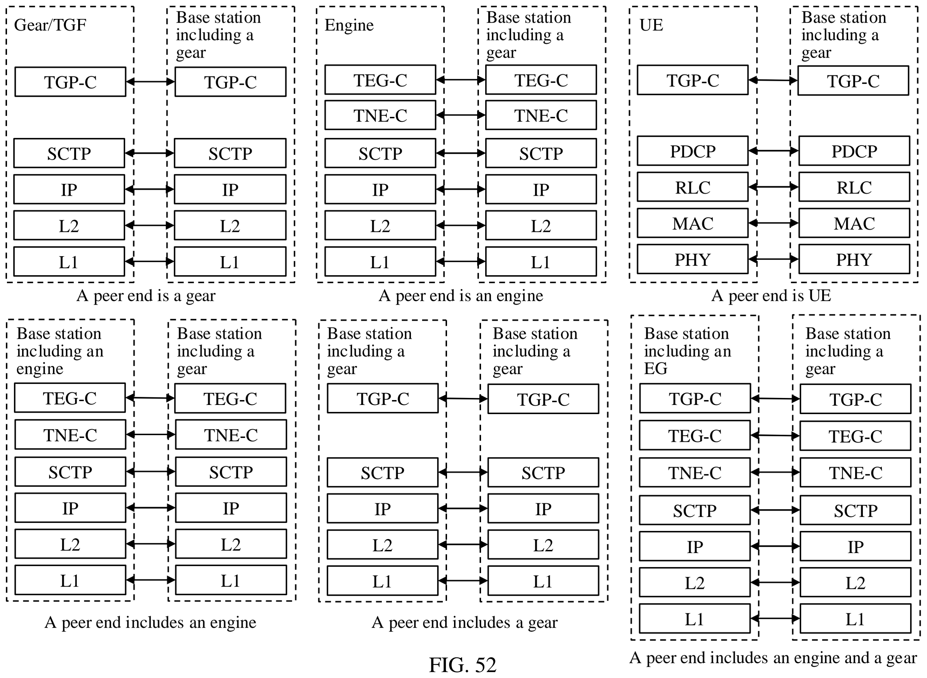

FIG. 52 is a diagram of trustworthiness protocol stacks of a base station including a security function module gear. FIG. 52 shows a trustworthiness control plane protocol stack, which is similar to a trustworthiness service plane protocol stack. Details are not described herein again.

In a possible implementation, trustworthiness protocols may be located at different layers. In FIG. 52, a scenario in which a peer end is a security node #2 (namely, a gear) is used as an example, and TEG and TNE are located at different layers. In an example, TEG is located above TNE. It can be understood that FIG. 52 is merely an example, and this is not limited. For example, in a case in which a peer end includes a security function module engine and a security function module gear, TNE may be at a second layer, and TGP and TEG may be at a first layer.

In another possible implementation, trustworthiness protocols may be located at a same layer. In FIG. 52, a scenario in which a peer end is a security node #2 is used as an example, and TEG and TNE may be located at a same layer. For ease of description, FIG. 52 shows only cases with different layers.

In a third possible case, a network node includes a security function module gear and a security function module engine.

A base station is used as an example. In an example, interface types of a base station including a security function module gear and a security function module engine include the following interfaces:
(1) an interface with a security node #1: supporting a TEP protocol;
(2) an interface with a security node #2: supporting TGP and TEG protocols; and
(3) an interface with a network node: supporting TNE, TGP (if the peer node includes a security function module gear), and TEP protocols (if the peer node includes a security function module engine).

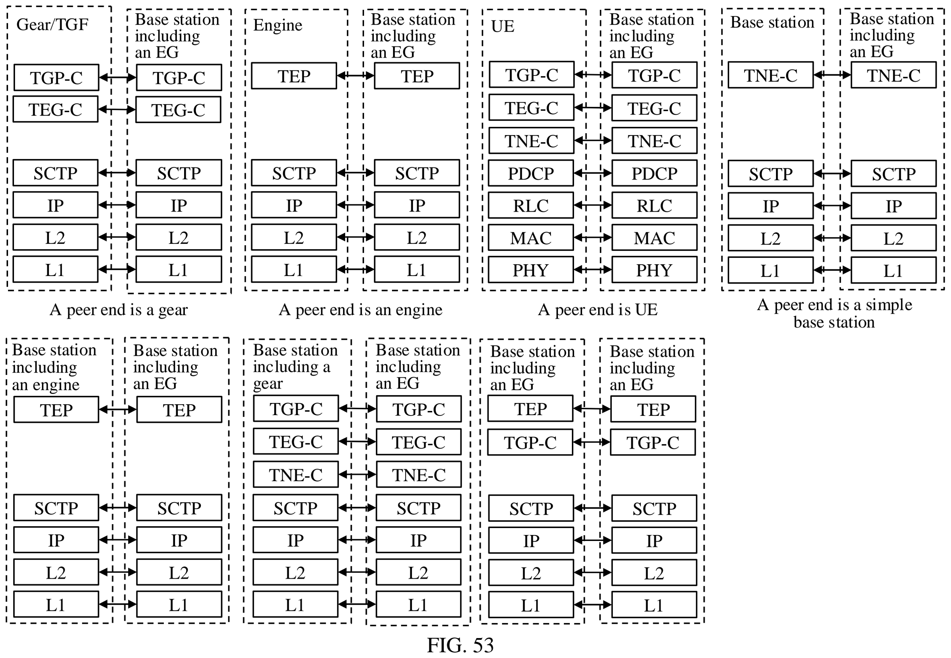

FIG. 53 is a diagram of trustworthiness protocol stacks of a base station including a security function module gear and a security function module engine. FIG. 53 shows a trustworthiness control plane protocol stack, which is similar to a trustworthiness service plane protocol stack. Details are not described herein again.

In a possible implementation, trustworthiness protocols may be located at different layers. In FIG. 53, a scenario in which a peer end is a security node #2 is used as an example, and TGP and TEG are located at different layers. In an example, TGP is located above TEG. It can be understood that FIG. 53 is merely an example, and this is not limited. For example, in a case in which a peer end includes a security function module engine and a security function module gear, TNE may be at a second layer, and TGP and TEG may be at a first layer.

In another possible implementation, trustworthiness protocols may be located at a same layer. In FIG. 53, a scenario in which a peer end is a security node #2 is used as an example, and TGP and TEG may be located at a same layer. For ease of description, FIG. 53 shows only cases with different layers.

According to the foregoing technical solution, if the network node includes a security function module, trustworthiness protocols between the network node and a security node may be designed, so that the security node and the security function module in the network node may be responsible for security-related operations, and an operation is simple.

It can be learned from the foregoing that in the technical solutions provided in this application, the independently deployed security nodes and the corresponding trustworthiness protocols are provided, so that security functions can be effectively decoupled from communication functions. This facilitates independent evolution and flexible deployment of the security functions. In addition, the security functions can be provided as services by using the trustworthiness protocols, and request and response procedures of the security services are standardized. In addition, by using the independently deployed security nodes and the trustworthiness protocols, a user may further select a trustworthiness function and a trustworthiness service as required, and independently configure the trustworthiness function and the trustworthiness service. Moreover, this application further provides security procedures for trustworthiness attestation and the PQC algorithm that may be supported by a future mobile network.

There are many disadvantages in conventional solutions: Security functions are integrated into functions of a plurality of protocols, there is no dedicated security protocol, and the security functions are closely coupled to communication functions. Consequently, when the security functions are updated or upgraded, a plurality of protocols of a plurality of communication nodes need to be modified. This causes heavy workloads and complex operations. In addition, communication standards give limited consideration to security, have only simple functions such as encryption, integrity protection, authentication, and authorization, and lack a unified standard procedure for adding, deleting, or changing a security function. In contrast, the technical solutions provided in this application have the foregoing advantages.

It can be understood that "transmission" is mentioned in some of the foregoing embodiments, and unless otherwise specified, transmission includes receiving and/or sending. For example, transmitting a signal may include receiving a signal and/or sending a signal.

It can also be understood that in some of the foregoing embodiments, an engine, a TEF (that is, an engine deployed in a core network), and a security node #1 are sometimes interchangeably used. It can be understood that, unless otherwise specified, the engine, the TEF, and the security node #1 have a same meaning. A gear, a TGF (that is, a gear deployed in the core network), and a security node #2 are sometimes interchangeably used. It can be understood that, unless otherwise specified, the gear, the TGF, and the security node #2 have a same meaning.

It can also be understood that in embodiments of this application, names of messages (for example, a management request message and a service request message) do not constitute any limitation on the protection scope of embodiments of this application.

It can also be understood that in some of the foregoing embodiments, the first security node is used as an example for description. It can be understood that, unless otherwise specified, the first security node may be replaced with a security node #1, or the first security node may be replaced with a security node #2.

It can also be understood that in this application, descriptions related to "trustworthiness" may be replaced with descriptions related to "security". For example, a trustworthiness function may also be described as a security function, trustworthiness information may also be described as security information, and the like. Name descriptions of the functions, the messages, or the information are not limited.

The foregoing details the communication methods provided in this application, and the following describes communication apparatuses provided in this application.

To implement functions of the communication apparatuses in the foregoing method embodiments, the communication apparatus may include a hardware structure and/or a software module, and implement corresponding functions of the communication apparatus by using the hardware structure, the software module, or a combination of the hardware structure and the software module.

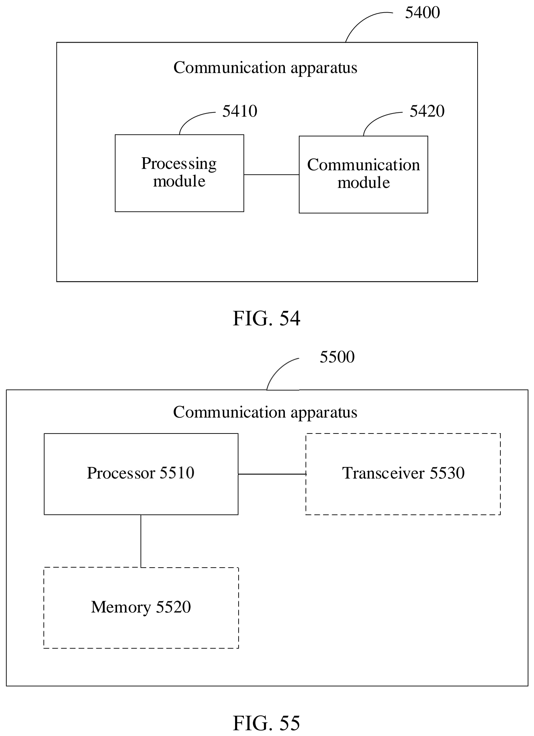

FIG. 54 is a diagram of a communication apparatus according to an embodiment of this application. As shown in FIG. 54, the communication apparatus 5400 includes a processing module 5410 and a communication module 5420. The communication apparatus 5400 may be a network element, or an apparatus, for example, a chip, a chip system, or a circuit, that is used in a network element and that can perform a method performed by a network element side. Optionally, the network element may include a security node (for example, a security node #1 or a security node #2), a terminal device, an access network device, or a core network device. This is not limited.

The communication module may be a transceiver module, a transceiver, a transceiver device, a transceiver apparatus, or the like. The processing module may be a processor, a processing board, a processing unit, a processing apparatus, or the like. Optionally, the communication module is configured to perform sending operations and/or receiving operations of the network elements in the foregoing methods. A component that is in the communication module and that is configured to implement a receiving function may be considered as a receiving unit, and a component that is in the communication module and that is configured to implement a sending function may be considered as a sending unit. In other words, the communication module includes the receiving unit and the sending unit.

The communication module and/or the processing module may be implemented by using a virtual module. For example, the processing module may be implemented by using a software functional unit or a virtual apparatus, and the communication module may be implemented by using a software function or a virtual apparatus. Alternatively, the processing module and/or the communication module may be implemented by using a physical apparatus. For example, the communication apparatus is implemented by using a chip, a chip system, or a circuit. In this implementation, the communication module may be an input/output circuit and/or a communication interface, and performs input operations (corresponding to the receiving operations) and output operations (corresponding to the sending operations). The processing module is an integrated processor, a microprocessor, an integrated circuit, a logic circuit, or the like.

Division into modules in the foregoing apparatus embodiment is an example, is merely logical function division, and may be other division during actual implementation, that is, a division manner different from that in FIG. 54. In addition, when functions of the communication apparatus in the apparatus embodiment are divided into a plurality of functional modules, the plurality of functional modules may be integrated into one module, may exist alone physically, or two or more modules are integrated into one module. Optionally, the integrated module may be implemented in a form of hardware, may be implemented in a form of a software functional module, or may be implemented in a form of hardware and a software functional module. This is not limited.

FIG. 55 is a diagram of another communication apparatus according to an embodiment of this application. Optionally, the communication apparatus 5500 may be a chip or a chip system. Optionally, the chip system in this application may include a chip, or may include a chip and another discrete device.

The communication apparatus 5500 may include at least one processor 5510. Optionally, the processor 5510 is coupled to a memory. The memory may be located in the communication apparatus, the memory may be integrated with the processor, or the memory may be located outside the apparatus. For example, the communication apparatus 5500 may further include at least one memory 5520. The memory 5520 stores a computer program, instructions, and/or data necessary for implementing any one of the foregoing examples, protocol stacks or protocol layers of corresponding network elements (such as security nodes (for example, the security node #1 and the security node #2), the terminal apparatus, the access network device, and the NFs of the core network) in the foregoing method embodiments, and the like. The processor 5510 may execute the computer program, the protocol stacks, or the protocol layers stored in the memory 5520, to complete the method performed by the corresponding network elements in any one of the foregoing method embodiments.

Optionally, the communication apparatus 5500 further includes a transceiver 5530, and the communication apparatus 5500 may exchange information with another device through the transceiver 5530. For example, the transceiver 5530 may be a circuit, a bus, a module, a pin, or another type of communication interface. When the communication apparatus 5500 is a chip-type apparatus or circuit, the transceiver 5530 in the communication apparatus 5500 may be alternatively an input/output circuit, and may input information (also referred to as receiving information) and output information (also referred to as sending information). The processor is an integrated processor, a microprocessor, an integrated circuit, a logic circuit, or the like. The processor may determine output information based on input information.

The coupling in this application may be an indirect coupling or a communication connection between apparatuses, units, or modules in an electrical form, a mechanical form, or another form, and is used for information exchange between the apparatuses, the units, or the modules. The processor 5510 may operate with the memory 5520 and the transceiver 5530 cooperatively. A specific connection medium between the processor 5510, the memory 5520, and the transceiver 5530 is not limited in this application.

Optionally, the processor 5510, the memory 5520, and the transceiver 5530 are connected to each other through a bus.

In addition, this application further provides a computer-readable storage medium. The computer-readable storage medium stores computer instructions. When the computer instructions are run on a computer, functions of corresponding network elements (such as the terminal apparatus, the access network node, and the NFs of the core network) in any one of the foregoing embodiments are implemented.

This application further provides a computer program product. The computer program product includes computer program code. When the computer program code is run on a computer, functions of corresponding network elements (such as security nodes (for example, the security node #1 and the security node #2), the terminal apparatus, the access network node, and the NFs of the core network) in any one of the foregoing embodiments are implemented.

This application further provides a wireless communication system, including one or more network elements in any one of the foregoing method embodiments. For example, the communication system includes any combination of security nodes (for example, the security node #1 and the security node #2), the terminal, the access network node, and the NFs of the CN in embodiments of this application. Optionally, a quantity of any network elements is not limited to one or more.

In this application, the processor may be a general-purpose processor, a digital signal processor, an application-specific integrated circuit, a field programmable gate array, another programmable logic device, a discrete gate, a transistor logic device, or a discrete hardware component, and can implement or execute the methods, steps, and logical block diagrams disclosed in this application. The general-purpose processor may be a microprocessor, any conventional processor, or the like. The steps of the methods disclosed with reference to this application may be directly implemented by a hardware processor, or may be implemented by a combination of hardware in the processor and a software module.

In this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can be used to carry or store expected program code in a form of instructions or a data structure and that is accessible to a computer, but is not limited thereto. Alternatively, the memory in this application may be a circuit or any other apparatus that can implement a storage function, and is configured to store program instructions and/or data.

All or some of the technical solutions provided in this application may be implemented by using software, hardware, firmware, or any combination thereof. When software is used to implement the technical solutions, all or some of the technical solutions may be implemented in a form of a computer program product. The computer program product includes one or more computer instructions. When the computer program instructions are loaded and executed on a computer, all or some of the procedures or functions according to this application are generated. The computer may be a general-purpose computer, a dedicated computer, a computer network, a terminal device, an access network device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, like a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In this application, on the premise that there is no logic contradiction, the examples can be referenced from each other. For example, methods and/or terms in the method embodiments can be referenced from each other, functions and/or terms in the apparatus embodiments can be referenced from each other, and functions and/or terms in the apparatus examples and the method examples can be referenced from each other.

Unless otherwise specified, "a plurality of" means two or more. "At least one item (piece)" or a similar expression thereof means any combination of these items, including a singular item (piece) or any combination of plural items (pieces). For example, at least one item (piece) of a, b, or c may represent a, b, c, a-b, a-c, b-c, or a-b-c, where a, b, and c each may be in a singular or plural form.

In descriptions of embodiments of this application, unless otherwise specified, "/" indicates an "or" relationship between associated objects. For example, A/B may represent A or B. In this application, "and/or" describes only an association relationship for describing associated objects, and represents that three relationships may exist. For example, A and/or B may represent the following three cases: Only A exists, both A and B exist, and only B exists. A and B each may be in a singular or plural form.

Sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art can be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use a different method to implement the described functions for each particular application, but it should not be considered that the implementation goes beyond the scope of this application.

It can be clearly understood by a person skilled in the art that, for the purpose of convenient and brief description, for detailed working processes of the system, apparatuses, and units described above, refer to the corresponding processes in the foregoing method embodiment. Details are not described herein again.

In the several embodiments provided in this application, it should be understood that the disclosed system, apparatuses, and methods may be implemented in other manners. For example, the described apparatus embodiments are merely examples. For example, division into units is merely logical function division and may be other division during actual implementation. For example, a plurality of units or components may be combined or may be integrated into another system, or some features may be ignored or not be performed. In addition, the displayed or discussed mutual couplings or direct couplings or communication connections may be implemented through some interfaces. The indirect couplings or communication connections between the apparatuses or units may be implemented in an electrical form, a mechanical from, or another form.

The units described as separate parts may or may not be physically separate, and parts displayed as units may or may not be physical units. To be specific, the parts may be located in one position or may be distributed on a plurality of network units. Some or all of the units may be selected depending on an actual requirement to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, like a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information transmission method, applied to a communication network, wherein the communication network comprises a first security node and at least one network node, and the method comprises:
establishing, by the first security node, a communication connection to the at least one network node, wherein the first security node is configured to provide a security function for the communication network; and
communicating, by the first security node, trustworthiness signaling and/or trustworthiness data with the at least one network node over the communication connection.

2. The method according to claim 1, wherein the first security node comprises a first node and/or a second node, the first node is configured to manage the security function, and the second node is configured to perform the security function.

3. The method according to claim 1 or 2, wherein the first security node comprises a trustworthiness protocol layer, and the trustworthiness protocol layer processes the trustworthiness signaling and/or the trustworthiness data.

4. The method according to claim 3, wherein the first security node further comprises one or more of the following protocol layers below the trustworthiness protocol layer: a protocol layer for data packet processing, a protocol layer for transmission, a protocol layer for connection establishment, and a protocol layer for channel establishment.

5. The method according to any one of claims 1 to 4, wherein the trustworthiness signaling is used for one or more of the following functions: management of a trustworthiness function, management of a trustworthiness requirement, negotiation of a trustworthiness policy, notification of a trustworthiness service, or a request for a trustworthiness service.

6. The method according to claim 5, wherein the management of the trustworthiness function comprises one or more of the following: establishment of the trustworthiness function, activation of the trustworthiness function, initial configuration of the trustworthiness function, update of the trustworthiness function, addition of the trustworthiness function, deletion of the trustworthiness function, or state transition of the trustworthiness function.

7. The method according to claim 5 or 6, wherein the trustworthiness service comprises one or more of the following: an authentication service, an authorization service, a trustworthiness attestation service, a blockchain service, a situational awareness service, or a network-wide trustworthiness policy service.

8. The method according to any one of claims 1 to 7, wherein the trustworthiness data comprises one or more of the following: situational awareness related data, homomorphic encryption related data, homomorphic computation related data, blockchain related data, or keys.

9. The method according to any one of claims 1 to 8, wherein the at least one network node comprises a first network node, and the establishing, by the first security node, the communication connection to the at least one network node comprises:
obtaining, by the first security node, identity information and/or address information of the first network node; and
communicating, by the first security node, the trustworthiness signaling and/or the trustworthiness data with the first network node based on the identity information and/or the address information of the first network node.

10. The method according to claim 9, wherein the obtaining, by the first security node, the identity information and/or the address information of the first network node comprises any one of the following:
receiving, by the first security node, the identity information and/or the address information of the first network node from the first network node;
receiving, by the first security node, the identity information and/or the address information of the first network node from another network node;
determining, by the first security node, the identity information and/or the address information of the first network node;
receiving, by the first security node, the identity information and/or the address information of the first network node from a management node; or
receiving, by the first security node, the identity information and/or the address information of the first network node from another security node.

11. The method according to claim 9 or 10, wherein the method further comprises:
sending, by the first security node, one or more of the following to the first network node: a trustworthiness service available from the first security node, identity information of the first security node, or address information of the first security node.

12. The method according to any one of claims 1 to 11, wherein the communication network further comprises a second security node, and the method further comprises:
communicating, by the first security node, trustworthiness signaling and/or trustworthiness data with the second security node.

13. The method according to claim 12, wherein before the communicating, by the first security node, the trustworthiness signaling and/or the trustworthiness data with the second security node, the method further comprises:
obtaining, by the first security node, identity information and/or address information of the second security node.

14. The method according to claim 13, wherein the obtaining, by the first security node, the identity information and/or the address information of the second security node comprises any one of the following:
receiving, by the first security node, the identity information and/or the address information of the second security node from the second security node;
receiving, by the first security node, the identity information and/or the address information of the second security node from the at least one network node;
determining, by the first security node, the identity information and/or the address information of the second security node;
receiving, by the first security node, the identity information and/or the address information of the second security node from the management node; or
receiving, by the first security node, the identity information and/or the address information of the second security node from another security node.

15. The method according to claim 13 or 14, wherein the method further comprises:
sending, by the first security node, one or more of the following to the second security node: the trustworthiness service available from the first security node, the identity information of the first security node, or the address information of the first security node.

16. The method according to any one of claims 12 to 15, wherein the method further comprises:
receiving, by the first security node from the second security node, a trustworthiness service available from the second security node.

17. The method according to any one of claims 1 to 16, wherein the at least one network node comprises one or more of the following: at least one access network apparatus, at least one core network apparatus, and at least one terminal apparatus.

18. An information transmission method, applied to a communication network, wherein the communication network comprises a first network node and a first security node, and the method comprises:
establishing, by the first network node, a communication connection to the first security node, wherein the first security node is configured to provide a security function for the communication network; and
communicating, by the first network node, trustworthiness signaling and/or trustworthiness data with the first security node over the communication connection.

19. The method according to claim 18, wherein the first network node comprises a trustworthiness protocol layer, and the trustworthiness protocol layer processes the trustworthiness signaling and/or the trustworthiness data.

20. The method according to claim 19, wherein the first network node further comprises one or more of the following protocol layers below the trustworthiness protocol layer: a protocol layer for data packet processing, a protocol layer for transmission, a protocol layer for connection establishment, and a protocol layer for channel establishment.

21. The method according to any one of claims 18 to 20, wherein the trustworthiness signaling is used for one or more of the following functions: management of a trustworthiness function, management of a trustworthiness requirement, negotiation of a trustworthiness policy, notification of a trustworthiness service, or a request for a trustworthiness service.

22. The method according to claim 21, wherein the management of the trustworthiness function comprises one or more of the following: establishment of the trustworthiness function, activation of the trustworthiness function, initial configuration of the trustworthiness function, update of the trustworthiness function, addition of the trustworthiness function, deletion of the trustworthiness function, or state transition of the trustworthiness function.

23. The method according to claim 21 or 22, wherein the trustworthiness service comprises one or more of the following: an authentication service, an authorization service, a trustworthiness attestation service, a blockchain service, a situational awareness service, or a network-wide trustworthiness policy service.

24. The method according to any one of claims 18 to 23, wherein the trustworthiness data comprises one or more of the following: situational awareness related data, homomorphic encryption related data, homomorphic computation related data, blockchain related data, or keys.

25. The method according to any one of claims 18 to 24, wherein the establishing, by the first network node, the communication connection to the first security node comprises:
obtaining, by the first network node, identity information and/or address information of the first security node; and
communicating, by the first network node, the trustworthiness signaling and/or the trustworthiness data with the first security node based on the identity information and/or the address information of the first security node.

26. The method according to claim 25, wherein the obtaining, by the first network node, the identity information and/or the address information of the first security node comprises any one of the following:
receiving, by the first network node, the identity information and/or the address information of the first security node from the first security node;
receiving, by the first network node, the identity information and/or the address information of the first security node from another network node;
determining, by the first network node, the identity information and/or the address information of the first security node;
receiving, by the first network node, the identity information and/or the address information of the first security node from a management node; or
receiving, by the first network node, the identity information and/or the address information of the first security node from another security node.

27. The method according to claim 25 or 26, wherein the method further comprises:
sending, by the first network node, one or more of the following to the first security node: identity information of the first network node or address information of the first network node.

28. The method according to any one of claims 18 to 27, wherein the communicating, by the first network node, the trustworthiness signaling and/or the trustworthiness data with the first security node over the communication connection comprises:
receiving, by the first network node from the first security node, a trustworthiness service available from the first security node.

29. The method according to any one of claims 18 to 28, wherein the first network node is any one of the following: an access network apparatus, a core network apparatus, and a terminal apparatus.

30. A communication system, comprising at least one security node and at least one network node, wherein the at least one security node is configured to provide a security function for the communication system;
the at least one security node establishes a communication connection to the at least one network node; and
the at least one security node communicates trustworthiness signaling and/or trustworthiness data with the at least one network node over the communication connection.

31. The system according to claim 30, wherein the at least one security node comprises a first security node, and the first security node is configured to perform the method according to any one of claims 1 to 17.

32. The system according to claim 30 or 31, wherein the at least one network node comprises a first network node, and the first network node is configured to perform the method according to any one of claims 18 to 29.

33. A communication apparatus, comprising a module or a unit configured to perform the method according to any one of claims 1 to 29.

34. A communication apparatus, comprising:
a processor, wherein the processor is coupled to a memory, and the processor is configured to execute a computer program or instructions stored in the memory, so that the communication apparatus performs the method according to any one of claims 1 to 29.

35. A chip, comprising a processor and a communication interface, wherein the communication interface is configured to receive to-be-processed information and/or data and send the to-be-processed information and/or data to the processor, and the processor is configured to process the to-be-processed information and/or data, so that a communication apparatus in which the chip is installed performs the method according to any one of claims 1 to 29.

36. A computer-readable storage medium, wherein the computer-readable storage medium stores computer instructions, and when the computer instructions are run on a computer, the method according to any one of claims 1 to 29 is implemented.

37. A computer program product, wherein the computer program product comprises computer program code, and when the computer program code is run on a computer, the method according to any one of claims 1 to 29 is implemented.
